(19) Europäisches Patentamt
European Patent Office
Office européen des brevets

(11) **EP 4 456 469 A1**

(12) **EUROPEAN PATENT APPLICATION**
published in accordance with Art. 153(4) EPC

(43) Date of publication:
**30.10.2024 Bulletin 2024/44**

(21) Application number: **23755710.3**

(22) Date of filing: **07.02.2023**

(51) International Patent Classification (IPC):
**H04L 5/00** *(2006.01)*

(52) Cooperative Patent Classification (CPC):
**H04L 5/00**

(86) International application number:
**PCT/CN2023/074728**

(87) International publication number:
**WO 2023/155707 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2022 CN 202210146286
31.03.2022 CN 202210346633**

(71) Applicant: **Huawei Technologies Co., Ltd.
Shenzhen, Guangdong 518129 (CN)**

(72) Inventors:
• **HE, Hongli
  Shenzhen, Guangdong 518129 (CN)**
• **LI, Xueru
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD, NETWORK DEVICE, AND TERMINAL DEVICE**

(57) This application provides a communication method and a network controlled repeater NCR, and relates to the communication field. The NCR includes KN donor antenna ports and KN service antenna ports. The method includes: The NCR performs uplink forwarding in any one of K time unit sets by using N service antenna ports and N donor antenna ports, where the N service antenna ports and the N donor antenna ports are respectively a part of the KN service antenna ports and a part of the KN donor antenna ports; and in any two of the K time unit sets, the NCR uses different donor antenna ports and different service antenna ports. In this application, downlink CSI with relatively high accuracy can be obtained when a quantity of uplink forwarding channels and a quantity of downlink forwarding channels of the NCR are different.

FIG. 11A

CONT. FROM
FIG. 11A

CONT. FROM
FIG. 11A

CONT. FROM
FIG. 11A

S204. Indicate the K time unit sets to the NCR, where a $k^{th}$ time unit set in the K time unit sets corresponds to a time unit set in which a $k^{th}$ SRS set in the K SRS sets is located; and indicate to the NCR that the NCR is in an uplink forwarding state in the K time unit sets, and indicate the NCR to perform uplink forwarding in the $k^{th}$ time unit set by using the N service antenna ports and the N donor antenna ports, where the N service antenna ports are a part of the KN service antenna ports, the N donor antenna ports are a part of the KN donor antenna ports, antenna ports used by the NCR are different in different time unit sets, and k is an integer less than or equal to K

S206. The NCR is in the uplink forwarding state in the K time unit sets, and performs uplink forwarding in the $k^{th}$ time unit set by using the N service antenna ports and the N donor antenna ports, where the N service antenna ports are a part of the KN service antenna ports, the N donor antenna ports are a part of the KN donor antenna ports, the NCR uses different antenna ports in different time unit sets, and each donor antenna port is associated with one service antenna port

S205. The terminal device correspondingly sends an SRS based on the configuration information, where in a same SRS set, any two SRSs are associated with different antenna ports, and in any two SRS sets, the terminal device sends, by using a same antenna port, ports with a same number that are of SRSs having a same ranking in the two SRS sets

TO FIG. 11C

TO FIG. 11C

TO FIG. 11C

FIG. 11B

CONT. FROM
FIG. 11B

CONT. FROM
FIG. 11B

CONT. FROM
FIG. 11B

S207. The network device correspondingly receives and measures K SRS sets, to finally obtain a measurement result of the K SRS sets, and determines an equivalent downlink channel coefficient matrix (equivalent downlink channel coefficient matrix from the network device to the terminal device through the NCR when the NCR is in a downlink forwarding state and uses the KN donor antenna ports and the KN service antenna ports) based on the measurement result of the K SRS sets

FIG. 11C

**Description**

This application claims priorities to Chinese Patent Application No. 202210146286.9, filed with the China National Intellectual Property Administration on February 17, 2022 and entitled "ANTENNA SWITCHING METHOD, NETWORK CONTROLLED REPEATER, NETWORK DEVICE, AND ELECTRONIC DEVICE", and to Chinese Patent Application No. 202210346633.2, filed with the China National Intellectual Property Administration on March 31, 2022 and entitled "COMMUNICATION METHOD, NETWORK DEVICE, AND TERMINAL DEVICE", both of which are incorporated herein by reference in their entireties.

**TECHNICAL FIELD**

This application relates to the communication field, and in particular, to a communication method, a network device, and a terminal device.

**BACKGROUND**

As a radio frequency repeater device between a network device and a terminal device that are far away from each other, a network controlled repeater (Network Controlled Repeater, NCR) can amplify and forward a radio frequency signal to increase a coverage area of a cellular network, and is widely used in mobile communication networks such as 4th generation (4th generation, 4G) mobile communication and 5th generation (5th generation, 5G) mobile communication.

Multi-stream transmission means that a plurality of signal streams are transmitted on a same time-frequency resource. Generally, a transceiver device needs to have a plurality of antennas, namely, multiple-input multiple-output (Multiple-Input Multiple-Output, MIMO), to implement a spatial multiplexing gain of signal transmission. Single-stream transmission means that a single signal stream is transmitted on a same time-frequency resource. Compared with single-stream transmission, multi-stream transmission can improve spectrum utilization and a transmission rate. Therefore, multi-stream transmission is widely applied to cellular communication networks.

A network device (for example, a base station) may provide downlink multi-stream transmission in wireless transmission by using a downlink precoding design. The downlink precoding design is closely related to downlink channel state information (Channel State Information, CSI) between the network device and a terminal device that is obtained by the network device. Accurate downlink CSI leads to an accurate precoding design. In this way, the network device can provide multi-stream transmission with a higher rate. Generally, to obtain downlink CSI with relatively high accuracy, the network device may obtain an uplink channel coefficient matrix by measuring a sounding reference signal (Sounding Reference Signal, SRS) sent by the terminal device, and then determine a downlink channel coefficient matrix based on channel reciprocity (that is, the downlink CSI with relatively high accuracy is obtained), so that a downlink channel is obtained. When the network device communicates with the terminal device through an NCR, accurate downlink CSI may also be obtained by using the foregoing method, to determine a downlink channel.

**SUMMARY**

When a quantity of uplink forwarding channels and a quantity of downlink forwarding channels of an NCR are the same, it is feasible to obtain downlink CSI with relatively high accuracy by using the foregoing method. However, when the quantity of uplink forwarding channels and the quantity of downlink forwarding channels of the NCR are different, a downlink channel coefficient matrix cannot be determined based on channel reciprocity, and therefore, downlink CSI with relatively high accuracy cannot be obtained.

Generally, an amount of uplink forwarding data of the NCR is less than an amount of downlink forwarding data of the NCR. Therefore, the quantity of uplink forwarding channels of the NCR may be less than the quantity of downlink forwarding channels of the NCR. Therefore, a technical problem to be resolved is how to provide a communication method to accurately determine a downlink channel coefficient matrix when the quantity of uplink forwarding channels and the quantity of downlink forwarding channels of the NCR are different, to obtain downlink CSI with relatively high accuracy, so that a network device can accurately perform precoding design to provide accurate multi-stream transmission in wireless transmission.

According to a first aspect, a communication method is provided. The communication method is applied to a network controlled repeater, and the network controlled repeater includes KN donor antenna ports and KN service antenna ports. The method includes: The network controlled repeater performs uplink forwarding in K time unit sets. The network controlled repeater performs uplink forwarding in any time unit set, namely, a $k^{th}$ time unit set, in the K time unit sets by using N service antenna ports and N donor antenna ports. The N service antenna ports are a part of the KN service antenna ports, and the N donor antenna ports are a part of the KN donor antenna ports. Donor antenna ports used by the network controlled repeater are different and service antenna ports used by the network controlled repeater are different in any two of the K time unit sets. K is a positive integer greater than 1, N is a positive integer greater than or equal to 1, k is any integer greater than 0 and less than or equal to K, and KN represents a product of K and N. In this way, when a quantity of uplink forwarding channels and a quantity of downlink forwarding channels of the network controlled repeater NCR are different, the network controlled repeater performs uplink forwarding in this solution in the K time unit sets, so that a network device can accurately determine a downlink channel coefficient matrix to obtain downlink CSI with relatively high accuracy, and further, the network device can accurately perform precoding design, to provide multi-stream transmission with a higher rate in wireless transmission.

Optionally, that the network controlled repeater performs uplink forwarding in any time unit set, namely, a $k^{th}$ time unit set, in the K time unit sets by using N service antenna ports and N donor antenna ports includes: The network controlled repeater receives information or data from a terminal device by using the N service antenna ports, and forwards the information or the data to a network device by using the N donor antenna ports.

According to the first aspect, the N donor antenna ports are one-to-one associated with the N service antenna ports to form N associations, and a set of the N associations forms a first association relationship. The KN service antenna ports are one-to-one associated with the KN donor antenna ports to form KN associations, and a set of the KN associations forms a second association relationship. The first association relationship is a part of the second association relationship.

According to the first aspect and any implementation of the first aspect, the KN service antenna ports and the KN donor antenna ports are used when the network controlled repeater performs downlink forwarding, where the KN service antenna ports and the KN donor antenna ports still remain in the second association relationship.

According to the first aspect and any implementation of the first aspect, an $i^{th}$ donor antenna port in the N donor antenna ports is associated with a $j^{th}$ service antenna port in the N service antenna ports in both uplink forwarding and downlink forwarding, a gain coefficient from the $j^{th}$ service antenna port to the $i^{th}$ donor antenna port in uplink forwarding is $a_{i-1}$, a gain coefficient from the $i^{th}$ donor antenna port to the $j^{th}$ service antenna port in downlink forwarding is $a_{i-1}'$, and $a_{i-1}$ and $a_{i-1}'$ satisfy at least one of the following conditions: an amplitude difference between $a_{i-1}$ and $a_{i-1}'$ is less than a first amplitude threshold; and a phase difference between $a_{i-1}$ and $a_{i-1}'$ is less than a first phase threshold. Both i and j are positive integers less than or equal to N.

Optionally, j may be equal to i. Optionally, j may not be equal to i.

According to the first aspect and any implementation of the first aspect, that the first association relationship is a part of the second association relationship includes: Based on the second association relationship, the N associations are selected from the associations between the KN service antenna ports and the KN donor antenna ports corresponding to the second association relationship, to form the first association relationship. Alternatively, based on the first association relationship, remaining (K-1)N service antenna ports and (K-1)N donor antenna ports other than the N service antenna ports and the N donor antenna ports corresponding to the first association relationship are selected, that is, there are a total of KN service antenna ports and KN donor antenna ports, to form the second association relationship.

According to the first aspect and any implementation of the first aspect, the N donor antenna ports and the N service antenna ports correspond to N uplink forwarding channels, and the KN donor antenna ports and the KN service antenna ports correspond to KN downlink forwarding channels.

According to the first aspect and any implementation of the first aspect, that the service antenna ports used by the network controlled repeater are different and the donor antenna ports used by the network controlled repeater are different in any two of the K time unit sets includes: In any two of the K time unit sets, the service antenna ports used by the network controlled repeater are completely different and do not coincide; and the donor antenna ports used by the network controlled repeater are completely different and do not coincide. This solution specifies content included in "different" herein.

According to the first aspect and any implementation of the first aspect, in the K time unit sets, all of the KN service antenna ports have been used once by the network controlled repeater, and all of the KN donor antenna ports have been used once by the network controlled repeater.

Optionally, that all of the KN service antenna ports have been used once by the network controlled repeater, and all of the KN donor antenna ports have been used once by the network controlled repeater includes: All of the KN service antenna ports have been used only once by the network controlled repeater, and all of the KN donor antenna ports have been used only once by the network controlled repeater. This solution specifies content included in "used once" herein.

According to the first aspect and any implementation of the first aspect, before the network controlled repeater performs uplink forwarding in the K time unit sets, the method further includes: The network controlled repeater receives indication information from the network device, where the indication information indicates the network controlled repeater to perform uplink forwarding in the K time unit sets. In other words, this solution provides a manner. In this manner, the network controlled repeater receives the indication information from the network device, and then performs uplink forwarding in the K time unit sets based on the indication information.

According to the first aspect and any implementation of the first aspect, the indication information further indicates the network controlled repeater to perform uplink forwarding in the $k^{th}$ time unit set in the K time unit sets by using the N service antenna ports and the N donor antenna ports.

According to the first aspect and any implementation of the first aspect, before the network controlled repeater receives the indication information from the network device, the method further includes: The network controlled repeater sends capability indication information to the network device, where the capability indication information indicates to the network device that the network controlled repeater is capable of using the N donor antenna ports in the KN donor antenna ports and the N service antenna ports in the KN service antenna ports during uplink forwarding, and the network controlled repeater is capable of using the KN donor antenna ports and the KN service antenna ports during downlink forwarding.

According to the first aspect and any implementation of the first aspect, that the network controlled repeater performs uplink forwarding in K time unit sets includes: The network controlled repeater receives K sounding reference signals or K sounding reference signal sets from a terminal device in the K time unit sets, and performs uplink forwarding.

According to the first aspect and any implementation of the first aspect, that the network controlled repeater performs uplink forwarding in any time unit set, namely, a $k^{th}$ time unit set, in the K time unit sets by using N service antenna ports and N donor antenna ports includes: The network controlled repeater receives a $k^{th}$ sounding reference signal or a $k^{th}$ sounding reference signal set from the terminal device in any time unit set, namely, the $k^{th}$ time unit set, in the K time unit sets by using the N service antenna ports, and sends the $k^{th}$ sounding reference signal or the $k^{th}$ sounding reference signal set to the network device by using the N donor antenna ports.

According to the first aspect and any implementation of the first aspect, the network controlled repeater and the terminal device have an association relationship.

According to a second aspect, a communication method is provided. The communication method is applied to a terminal device, and the method includes: The terminal device sends a $k^{th}$ sounding reference signal in K sounding reference signals in any time unit set, namely, a $k^{th}$ time unit set, in time unit sets in which the K sounding reference signals are located. The $k^{th}$ time unit set corresponds to the $k^{th}$ time unit set in the first aspect and any implementation of the first aspect. The $k^{th}$ sounding reference signal includes J sounding reference signal ports. Any two of the K sounding reference signals are in two different time unit sets. K is a positive integer greater than 1, k is any integer greater than 0 and less than or equal to K, and J is a positive integer greater than or equal to 1. In this way, when a quantity of uplink forwarding channels and a quantity of downlink forwarding channels of a network controlled repeater NCR are different, the terminal device performs sending in this solution in the K time unit sets, so that a network device can accurately determine a downlink channel coefficient matrix to obtain downlink CSI with relatively high accuracy, and further, the network device can accurately perform precoding design, to provide accurate multi-stream transmission in wireless transmission.

According to the second aspect, the J sounding reference signal ports of the $k^{th}$ sounding reference signal are in a same time unit.

According to the second aspect, the J sounding reference signal ports of the $k^{th}$ sounding reference signal may not be in a same time unit.

According to the second aspect and any implementation of the second aspect, before the terminal device sends the K sounding reference signals in K time unit sets, the method further includes: The terminal device receives sounding reference signal configuration information from a network device, where the sounding reference signal configuration information is used to configure the K sounding reference signals and a time unit set in which each sounding reference signal is located, each sounding reference signal includes J sounding reference signal ports, and different sounding reference signals are in different time unit sets.

According to the second aspect and any implementation of the second aspect, the sounding reference signal configuration information is further used to configure a time unit (which may also be referred to as a time domain resource) in which each sounding reference signal port is located.

According to the second aspect and any implementation of the second aspect, the sounding reference signal configuration information is further used to configure a frequency unit (which may also be referred to as a frequency domain resource) in which each sounding reference signal or each sounding reference signal port is located.

According to the second aspect and any implementation of the second aspect, the sounding reference signal configuration information is further used to configure a code domain unit (which may also be referred to as a code domain resource) in which each sounding reference signal or each sounding reference signal port is located.

According to the second aspect and any implementation of the second aspect, during uplink transmission, the terminal device is capable of using X uplink antenna ports, where J is a positive integer less than or equal to X. X may be understood as a quantity of uplink channels of the terminal device. In other words, in this solution, the quantity of uplink channels of the terminal device is indicated in a static limitation manner.

According to the second aspect and any implementation of the second aspect, before the terminal device receives the sounding reference signal configuration information from the network device, the method further includes:

The terminal device indicates, to the network device, that the terminal device is capable of using X antenna ports during uplink transmission. In other words, this solution provides a manner. In this manner, the terminal device first provides the quantity X of uplink channels of the terminal device for the network device, then receives the sounding reference signal configuration information from the network device, and subsequently sends the sounding reference signals in the K time unit sets based on the sounding reference signal configuration information.

According to the second aspect and any implementation of the second aspect, that the k$^{th}$ time unit set corresponds to the k$^{th}$ time unit set in the first aspect and any implementation of the first aspect includes: The k$^{th}$ time unit set is the same as the k$^{th}$ time unit set in the first aspect and any implementation of the first aspect.

According to the second aspect and any implementation of the second aspect, a phase difference between sounding reference signals having a same ranking in any two of the K sounding reference signal sets does not exceed a first threshold.

According to a third aspect, a communication method is provided. The communication method is applied to a terminal device, and the method includes: The terminal device sends K sounding reference signal sets in K time unit sets. The terminal device sends a k$^{th}$ sounding reference signal set in the K sounding reference signal sets in any time unit set, namely, a k$^{th}$ time unit set, in the K time unit sets. The k$^{th}$ time unit set corresponds to the k$^{th}$ time unit set in the first aspect and any implementation of the first aspect. The k$^{th}$ sounding reference signal set includes L sounding reference signals, and each sounding reference signal includes J sounding reference signal ports. Any two sounding reference signals in the k$^{th}$ sounding reference signal set are in two different time units, and the any two sounding reference signals are associated with different antenna ports. In any two of the K sounding reference signal sets, the terminal device sends, by using a same antenna port, sounding reference signal ports with a same number that are of sounding reference signals having a same ranking in the any two sounding reference signal sets. K is a positive integer greater than 1, k is any integer greater than 0 and less than or equal to K, L is a positive integer greater than or equal to 1, and J is a positive integer greater than or equal to 1. In this way, when a quantity of uplink forwarding channels and a quantity of downlink forwarding channels of a network controlled repeater NCR are different, the terminal device performs sending in this solution in the K time unit sets, so that a network device can accurately determine a downlink channel coefficient matrix to obtain downlink CSI with relatively high accuracy, and further, the network device can accurately perform precoding design, to provide accurate multi-stream transmission in wireless transmission.

According to the third aspect, before the terminal device sends the K sounding reference signal sets in the K time unit sets, the method further includes: The terminal device receives sounding reference signal configuration information from a network device, where the sounding reference signal configuration information is used to configure the K sounding reference signal sets and a time unit set in which each sounding reference signal is located, each sounding reference signal set includes L sounding reference signals, each sounding reference signal includes J sounding reference signal ports, and any two sounding reference signals in the k$^{th}$ sounding reference signal set are in two different time units. In other words, this solution provides a manner. In this manner, the terminal device receives indication information from the network device, and then sends the sounding reference signals in the K time unit sets based on the indication information.

According to the third aspect and any implementation of the third aspect, the sounding reference signal configuration information is further used to configure a frequency unit in which each sounding reference signal or each sounding reference signal port is located. In other words, optionally, the sounding reference signal configuration information may be further used to configure the frequency unit in which each sounding reference signal or each sounding reference signal port is located.

According to the third aspect and any implementation of the third aspect, the terminal device is capable of using X antenna ports during uplink transmission, the terminal device is capable of using Y antenna ports during downlink transmission, the X antenna ports are a part of the Y antenna ports, L is determined based on X and Y, Y is a positive integer greater than or equal to 1, and X is a positive integer less than or equal to Y In other words, in this solution, a quantity of uplink channels and a quantity of downlink channels of the terminal device are indicated in a static limitation manner, and an association relationship between L and both X and Y is provided.

According to the third aspect and any implementation of the third aspect, before the terminal device receives the sounding reference signal configuration information from the network device, the method further includes: The terminal device sends, to the network device, an indication indicating that the terminal device is capable of using the X antenna ports during uplink transmission, the terminal device is capable of using the Y antenna ports during downlink transmission, and the X antenna ports are a part of the Y antenna ports, where Y is a positive integer greater than or equal to 1, and X is a positive integer less than or equal to Y In other words, this solution provides a manner. In this manner, the terminal device first provides the quantity X of uplink channels and the quantity Y of downlink channels of the terminal device for the network device, then receives the sounding reference signal configuration information from the network device, and subsequently sends the sounding reference signals in the K time unit sets based on the sounding reference signal configuration information.

According to the third aspect and any implementation of the third aspect, the J sounding reference signal ports

of the k<sup>th</sup> sounding reference signal are in a same time unit.

According to the third aspect and any implementation of the third aspect, the J sounding reference signal ports of the k<sup>th</sup> sounding reference signal may not be in a same time unit.

According to the third aspect and any implementation of the third aspect, that L is determined based on X and Y includes: L=Y/X, or $L = \left\lfloor Y/X \right\rfloor$, or $L = \left\lceil Y/X \right\rceil$. That is, L may be a quotient of Y divided by X, or L may be a round-down result of a quotient of Y divided by X, or L may be a round-up result of a quotient of Y divided by X.

According to the third aspect and any implementation of the third aspect, that the k<sup>th</sup> time unit set corresponds to the k<sup>th</sup> time unit set in the first aspect and any implementation of the first aspect includes: The k<sup>th</sup> time unit set is the same as the k<sup>th</sup> time unit set in the first aspect and any implementation of the first aspect.

According to the third aspect and any implementation of the third aspect, a phase difference between sounding reference signals having a same ranking in any two of the K sounding reference signal sets does not exceed a first threshold.

According to a fourth aspect, a communication method is provided. The communication method is applied to a network device, and the network device learns that a terminal device is capable of using X antenna ports during uplink transmission, a network controlled repeater is capable of using N donor antenna ports and N service antenna ports during uplink forwarding, and the network controlled repeater is capable of using KN donor antenna ports and KN service antenna ports during downlink forwarding. The method includes: The network device sends indication information to the network controlled repeater, where the indication information indicates the network controlled repeater to perform uplink forwarding in K time unit sets, and the indication information indicates the network controlled repeater to perform uplink forwarding in any time unit set, namely, a k<sup>th</sup> time unit set, in the K time unit sets by using the N donor antenna ports and the N service antenna ports. The N donor antenna ports are a part of the KN donor antenna ports, and the N service antenna ports are a part of the KN service antenna ports. The network device receives K sounding reference signals or K sounding reference signal sets from the terminal device through the network controlled repeater in the K time unit sets. The network device determines, based on measurement results of the K sounding reference signals or the K sounding reference signal sets, an equivalent downlink channel coefficient matrix from the network device to the terminal device through the network controlled repeater. When the K sounding reference signals from the terminal device are received, a k<sup>th</sup> sounding reference signal in the K sounding reference signals is in the k<sup>th</sup> time unit set; or when the K sounding reference signal sets from the terminal device are received, a k<sup>th</sup> sounding reference signal set in the K sounding reference signal sets is in the k<sup>th</sup> time unit set, where each sounding reference signal set includes L sounding reference signals, and L is a positive integer greater than or equal to 1. Both X and N are positive integers greater than or equal to 1, K is a positive integer greater than 1, k is any integer less than or equal to K, and KN represents a product of K and N.

In this way, when a quantity of uplink forwarding channels and a quantity of downlink forwarding channels of the network controlled repeater NCR are different, the network device indicates the network controlled repeater to perform uplink forwarding in this solution in the K time unit sets, so that a network device can accurately determine a downlink channel coefficient matrix to obtain downlink CSI with relatively high accuracy, and further, the network device can accurately perform precoding design, to provide accurate multi-stream transmission in wireless transmission.

According to the fourth aspect, that the indication information indicates the network controlled repeater to perform uplink forwarding in any time unit set, namely, a k<sup>th</sup> time unit set, in the K time unit sets by using the N donor antenna ports and the N service antenna ports includes: The indication information indicates the network controlled repeater to perform uplink forwarding in the k<sup>th</sup> time unit set by using the N service antenna ports and the N donor antenna ports. In any two of the K time unit sets, service antenna ports used by the network controlled repeater are different, and donor antenna ports used by the network controlled repeater are different.

According to the fourth aspect and any implementation of the fourth aspect, the indication information further indicates that different ports of a same sounding reference signal in the L sounding reference signals are in a same time unit.

According to the fourth aspect and any implementation of the fourth aspect, in a corresponding case in which the K sounding reference signals from the terminal device are received, the method further includes: The network device sends sounding reference signal configuration information to the terminal device before the network device sends the indication information to the network controlled repeater, where the sounding reference signal configuration information is used to configure the K sounding reference signals and a time unit set in which each sounding reference signal is located, each sounding reference signal includes J sounding reference signal ports, different sounding reference signals are in different time units, and J is a positive integer less than or equal to X. In other words, this solution provides a manner. In this manner, the network device first sends the sounding reference signal configuration information to the terminal device, and then the network device sends the indication information to the network controlled repeater. Both the sounding reference signal configuration information and the indication information are used to separately indicate the terminal device to send a sounding reference signal and indicate the NCR to perform uplink forwarding in the same K time unit sets.

According to the fourth aspect and any implementation of the fourth aspect, in a corresponding case in which the K sounding reference signal sets from the terminal device are received, the method further includes: The network device sends sounding reference signal configuration information to the terminal device before the network device sends the indication information to the network controlled repeater, where the sounding reference signal configuration information is used to configure the K sounding reference signal sets and a time unit set in which each sounding reference signal set is located, to configure the K time reference signal sets, each sounding reference signal set includes L sounding reference signals, each sounding reference signal includes J sounding reference signal ports, different sounding reference signal sets are in different time unit sets, and J is a positive integer less than or equal to X.

According to the fourth aspect and any implementation of the fourth aspect, the sounding reference signal configuration information is further used to configure a time unit in which each sounding reference signal port is located.

According to the fourth aspect and any implementation of the fourth aspect, the sounding reference signal configuration information is further used to configure a frequency unit in which each sounding reference signal or each sounding reference signal port is located.

According to the fourth aspect and any implementation of the fourth aspect, before the network device sends the sounding reference signal configuration information to the terminal device, the network device learns that the terminal device is capable of using the X antenna ports during uplink transmission.

According to the fourth aspect and any implementation of the fourth aspect, that the network device learns that the terminal device is capable of using the X antenna ports during uplink transmission includes: The network device receives first capability indication information from the terminal device, where the first capability indication information indicates to the network device that the terminal device is capable of using the X antenna ports during uplink transmission.

According to the fourth aspect and any implementation of the fourth aspect, before the network device sends the sounding reference signal configuration information to the terminal device, the network device learns that the network controlled repeater is capable of using the N donor antenna ports and the N service antenna ports during uplink forwarding, and the network controlled repeater is capable of using the KN donor antenna ports and the KN service antenna ports during downlink forwarding.

According to the fourth aspect and any implementation of the fourth aspect, that the network device learns that the network controlled repeater is capable of using the N donor antenna ports and the N service antenna ports during uplink forwarding, and the network controlled repeater is capable of using the KN donor antenna ports and the KN service antenna ports during downlink forwarding includes: The network device receives second capability indication information from the network controlled repeater, where the second capability indication information indicates to the network device that the network controlled repeater is capable of using the KN donor antenna ports and the KN service antenna ports during downlink forwarding, and the network controlled repeater is capable of using the N donor antenna ports in the KN donor antenna ports and the N service antenna ports in the KN service antenna ports during uplink forwarding.

According to the fourth aspect and any implementation of the fourth aspect, the terminal device and the network controlled repeater have an association relationship.

Optionally, the association relationship between the terminal device and the network controlled repeater may be determined or indicated by the network device.

In an implementation, the network device may obtain locations of the terminal device and the network controlled repeater in advance, and determine, based on the locations of the terminal device and the network controlled repeater, that there is an association relationship between the terminal device and the network controlled repeater. For example, when a distance between the locations of the terminal device and the network controlled repeater is less than or equal to a preset threshold, the network device determines that there is an association relationship between the terminal device and the network controlled repeater.

In another implementation, the network device may learn, based on indication information from a core network device, that the terminal device and the network controlled repeater have an association relationship. For example, after determining that there is an association relationship between the terminal device and the network controlled repeater, the core network device sends the indication information to the network device. The network device learns, based on the indication information from the core network device, that there is an association relationship between the terminal device and the network controlled repeater.

According to the fourth aspect and any implementation of the fourth aspect, a phase difference between any two of the K sounding reference signals does not exceed a first threshold; or a phase difference between sounding reference signals having a same ranking in any two of the K sounding reference signal sets does not exceed a first threshold.

According to the fourth aspect and any implementation of the fourth aspect, one of the K time unit sets includes one or more time units, and the time unit includes a slot or a symbol.

Optionally, one time unit may include one slot or one symbol.

Optionally, one time unit may include a plurality of slots or a plurality of symbols.

According to the fourth aspect and any implementation of the fourth aspect, the K time unit sets include at least two time unit sets, and the two time unit sets include a same quantity of time units.

According to the fourth aspect and any implementation of the fourth aspect, that the indication information indicates the network controlled repeater to perform uplink forwarding in any time unit set, namely, a $k^{th}$ time unit set, in the K time unit sets by using the N donor antenna ports and the N service antenna ports includes: The indication information indicates the network controlled repeater to perform uplink forwarding in the $k^{th}$ time unit set by using the N service antenna ports and the N donor antenna ports. In any two of the K time unit sets, service antenna ports used by the network controlled repeater are different, and donor antenna ports used by the network controlled repeater are different.

Optionally, in the K time unit sets, all of the KN service antenna ports have been used once by the network controlled repeater, and all of the KN donor antenna ports have been used once by the network controlled repeater.

According to the fourth aspect and any implementation of the fourth aspect, that the service antenna ports used by the network controlled repeater are different and the donor antenna ports used by the network controlled repeater are different in any two of the K time unit sets includes: In any two of the K time unit sets, the service antenna ports used by the network controlled repeater are completely different and do not coincide; and the donor antenna ports used by the network controlled repeater are completely different and do not coincide. In other words, this solution specifies content included in "different" herein.

According to the fourth aspect and any implementation of the fourth aspect, that all of the KN service antenna ports have been used once by the network controlled repeater, and all of the KN donor antenna ports have been used once by the network controlled repeater includes: All of the KN service antenna ports have been used only once by the network controlled repeater, and all of the KN donor antenna ports have been used only once by the network controlled repeater.

According to the fourth aspect and any implementation of the fourth aspect, the K time unit sets include at least two time unit sets, and the two time unit sets include a same quantity of time units.

Alternatively, the two time unit sets may include different quantities of time units.

According to the fourth aspect and any implementation of the fourth aspect, the network device determines, based on the K sounding reference signals, that the equivalent downlink channel coefficient matrix H0 from the network device to the terminal device through the network controlled repeater is:

$$H0 = \sum_{k=0}^{K-1} h_k$$

Herein, $h_k$ is a matrix with M rows and J columns, M is a quantity of antenna ports of the network device, $h_k$ represents an uplink channel coefficient matrix between J antenna ports used by the terminal device to send a $(k+1)^{th}$ sounding reference signal and the M antenna ports of the network device during uplink forwarding performed by the network controlled repeater by using the N donor antenna ports and the N service antenna ports in a $(k+1)^{th}$ time unit set, and the network device determines $h_k$ by measuring the $(k+1)^{th}$ sounding reference signal.

Alternatively, the network device determines, based on the K sounding reference signal sets, that the equivalent downlink channel coefficient matrix H0 from the network device to the terminal device through the network controlled repeater is:

$$H0 = \left[ \sum_{k=0}^{K-1} h_{k,0}, \sum_{k=0}^{K-1} h_{k,1}, \dots \sum_{k=0}^{K-1} h_{k,l}, \dots, \sum_{k=0}^{K-1} h_{k,L-1} \right]$$

Herein, $h_{k,l}$ is a matrix with M rows and J columns, M is a quantity of antenna ports of the network device, $h_{k,l}$ represents an uplink channel coefficient matrix between J antenna ports used by the terminal device to send an $(l+1)^{th}$ reference signal in a $(k+1)^{th}$ sounding reference signal set and the M antenna ports of the network device during uplink forwarding performed by the network controlled repeater by using the N donor antenna ports and the N service antenna ports in a $(k+1)^{th}$ time unit set, and the network device determines $h_{k,l}$ by measuring an $l^{th}$ reference signal in the $(k+1)^{th}$ sounding reference signal set.

According to the fourth aspect and any implementation of the fourth aspect, the equivalent downlink channel coefficient matrix is denoted as H0, and

$$H0 = \begin{pmatrix} \sum_{i=0}^{KN-1} f_{0,i}a_i g_{i,0} & \sum_{i=0}^{KN-1} f_{0,i}a_i g_{i,1} & \cdots & \sum_{i=0}^{KN-1} f_{0,i}a_i g_{i,j} & \cdots & \sum_{i=0}^{KN-1} f_{0,i}a_i g_{i,Y-1} \\ \sum_{i=0}^{KN-1} f_{1,i}a_i g_{i,0} & \sum_{i=0}^{KN-1} f_{1,i}a_i g_{i,1} & \cdots & \sum_{i=0}^{KN-1} f_{1,i}a_i g_{i,j} & \cdots & \sum_{i=0}^{KN-1} f_{1,i}a_i g_{i,Y-1} \\ \vdots & \vdots & \vdots & \vdots & \vdots & \vdots \\ \sum_{i=0}^{KN-1} f_{m,i}a_i g_{i,0} & \sum_{i=0}^{KN-1} f_{m,i}a_i g_{i,1} & \cdots & \sum_{i=0}^{KN-1} f_{m,i}a_i g_{i,j} & \cdots & \sum_{i=0}^{KN-1} f_{m,i}a_i g_{i,Y-1} \\ \vdots & \vdots & \vdots & \vdots & \vdots & \vdots \\ \sum_{i=0}^{KN-1} f_{M-1,i}a_i g_{i,0} & \sum_{i=0}^{KN-1} f_{M-1,i}a_i g_{i,1} & \cdots & \sum_{i=0}^{KN-1} f_{M-1,i}a_i g_{i,j} & \cdots & \sum_{i=0}^{KN-1} f_{M-1,i}a_i g_{i,Y-1} \end{pmatrix},$$

where $f_{m,i}$ is a gain coefficient from an $(m+1)^{th}$ antenna port $A_m$ of the network device to an $(i+1)^{th}$ donor antenna port $D_i$ in the KN donor antenna ports of the network controlled repeater, $a_i$ is a gain coefficient of an $(i+1)^{th}$ downlink forwarding channel in KN downlink forwarding channels of the network controlled repeater, the $(i+1)^{th}$ downlink forwarding channel includes the donor antenna port $D_i$ and a service antenna port $S_i$ that is in the KN service antenna ports of the network controlled repeater and that corresponds to the donor antenna port $D_i$, and $g_{i,j}$ is a gain coefficient from the service antenna port $S_i$ to an antenna port $T_j$ of the terminal device. The network device includes M antenna ports, the terminal device includes Y antenna ports, M is a positive integer greater than or equal to 1, m is an integer less than M, i is an integer less than KN, and j is an integer less than Y

In H0, $\sum_{i=0}^{N-1} f_{m,i}a_i g_{i,j}$, $\sum_{i=N}^{2N-1} f_{m,i}a_i g_{i,j}$, $\sum_{i=2N}^{3N-1} f_{m,i}a_i g_{i,j}$, ..., $\sum_{i=KN-2N}^{KN-N-1} f_{m,i}a_i g_{i,j}$, and $\sum_{i=KN-N}^{KN-1} f_{m,i}a_i g_{i,j}$ are directly obtained, and then $\sum_{i=0}^{KN-1} f_{m,i}a_i g_{i,j}$ may be calculated, instead of calculating $\sum_{i=0}^{KN-1} f_{m,i}a_i g_{i,j}$ after $f_{m,i}$, $a_i$, and $g_{i,j}$ are directly calculated separately. The foregoing meanings of $f_{m,i}$, $a_i$, and $g_{i,j}$ also explain $f_{m,i}$, $a_i$, and $g_{i,j}$ in a static manner, and do not indicate that $f_{m,i}$, $a_i$, and $g_{i,j}$ are first obtained separately, and then $\sum_{i=0}^{KN-1} f_{m,i}a_i g_{i,j}$ is calculated.

According to the fourth aspect and any implementation of the fourth aspect, when Y=N,

$$H0 = \begin{pmatrix} \sum_{i=0}^{KN-1} f_{0,i}a_i g_{i,0} & \sum_{i=0}^{KN-1} f_{0,i}a_i g_{i,1} & \cdots & \sum_{i=0}^{KN-1} f_{0,i}a_i g_{i,j} & \cdots & \sum_{i=0}^{KN-1} f_{0,i}a_i g_{i,N-1} \\ \sum_{i=0}^{KN-1} f_{1,i}a_i g_{i,0} & \sum_{i=0}^{KN-1} f_{1,i}a_i g_{i,1} & \cdots & \sum_{i=0}^{KN-1} f_{1,i}a_i g_{i,j} & \cdots & \sum_{i=0}^{KN-1} f_{1,i}a_i g_{i,N-1} \\ \vdots & \vdots & \vdots & \vdots & \vdots & \vdots \\ \sum_{i=0}^{KN-1} f_{m,i}a_i g_{i,0} & \sum_{i=0}^{KN-1} f_{m,i}a_i g_{i,1} & \cdots & \sum_{i=0}^{KN-1} f_{m,i}a_i g_{i,j} & \cdots & \sum_{i=0}^{KN-1} f_{m,i}a_i g_{i,N-1} \\ \vdots & \vdots & \vdots & \vdots & \vdots & \vdots \\ \sum_{i=0}^{KN-1} f_{M-1,i}a_i g_{i,0} & \sum_{i=0}^{KN-1} f_{M-1,i}a_i g_{i,1} & \cdots & \sum_{i=0}^{KN-1} f_{M-1,i}a_i g_{i,j} & \cdots & \sum_{i=0}^{KN-1} f_{M-1,i}a_i g_{i,N-1} \end{pmatrix}$$

According to the fourth aspect and any implementation of the fourth aspect, when the network device includes only one antenna port,

$$H0 = \begin{pmatrix} \sum_{i=0}^{KN-1} f_i a_i g_{i,0} & \sum_{i=0}^{KN-1} f_i a_i g_{i,1} & \cdots & \sum_{i=0}^{KN-1} f_i a_i g_{i,j} & \cdots & \sum_{i=0}^{KN-1} f_i a_i g_{i,Y-1} \end{pmatrix}$$

According to the fourth aspect and any implementation of the fourth aspect, when Y=N,

$$H0 = \left( \sum_{i=0}^{KN-1} f_i a_i g_{i,0} \quad \sum_{i=0}^{KN-1} f_i a_i g_{i,1} \quad \cdots \quad \sum_{i=0}^{KN-1} f_i a_i g_{i,j} \quad \cdots \quad \sum_{i=0}^{KN-1} f_i a_i g_{i,N-1} \right)$$

According to the fourth aspect and any implementation of the fourth aspect, when N=2 and KN=4,

$$H0 = \left( \sum_{i=0}^{3} f_i a_i g_{i,0} \quad \sum_{i=0}^{3} f_i a_i g_{i,1} \right)$$

According to the fourth aspect and any implementation of the fourth aspect, when Y=KN,

$$H0 = \left( \sum_{i=0}^{KN-1} f_i a_i g_{i,0} \quad \sum_{i=0}^{KN-1} f_i a_i g_{i,1} \quad \cdots \quad \sum_{i=0}^{KN-1} f_i a_i g_{i,j} \quad \cdots \quad \sum_{i=0}^{KN-1} f_i a_i g_{i,KN-1} \right)$$

According to the fourth aspect and any implementation of the fourth aspect, when KN=4,

$$H0 = \left( \sum_{i=0}^{3} f_i a_i g_{i,0} \quad \sum_{i=0}^{3} f_i a_i g_{i,1} \quad \sum_{i=0}^{3} f_i a_i g_{i,2} \quad \sum_{i=0}^{3} f_i a_i g_{i,3} \right)$$

According to a fifth aspect, a network controlled repeater is provided. The network controlled repeater includes a processor and a memory. The memory stores a computer program. When the computer program is run by the processor, the network controlled repeater is enabled to perform the method according to the first aspect and any implementation of the first aspect.

For technical effects corresponding to the fifth aspect and any implementation of the fifth aspect, refer to the technical effects corresponding to the first aspect and any implementation of the first aspect. Details are not described herein again.

According to a sixth aspect, a terminal device is provided. The terminal device includes a processor and a memory. The memory stores a computer program. When the computer program is run by the processor, the terminal device is enabled to perform the method according to the second aspect and any implementation of the second aspect or the third aspect and any implementation of the third aspect.

For technical effects corresponding to the sixth aspect and any implementation of the sixth aspect, refer to the technical effects corresponding to the second aspect and any implementation of the second aspect and the third aspect and any implementation of the third aspect. Details are not described herein again.

According to a seventh aspect, a network device is provided. The network device includes a processor and a memory. The memory stores a computer program. When the computer program is run by the processor, the network device is enabled to perform the method according to the fourth aspect and any implementation of the fourth aspect.

For technical effects corresponding to the seventh aspect and any implementation of the seventh aspect, refer to the technical effects corresponding to the fourth aspect and any implementation of the fourth aspect. Details are not described herein again.

According to an eighth aspect, a computer-readable storage medium is provided. The computer-readable storage medium stores a computer program, and when the computer program is run on a network controlled repeater, the network controlled repeater is enabled to perform the method according to the first aspect and any implementation of the first aspect.

For technical effects corresponding to the eigth aspect and any implementation of the eigth aspect, refer to the technical effects corresponding to the first aspect and any implementation of the first aspect. Details are not described herein again.

According to a ninth aspect, a computer-readable storage medium is provided. The computer-readable storage medium stores a computer program, and when the computer program is run on a terminal device, the terminal device is enabled to perform the method according to the second aspect and any implementation of the second aspect or the third aspect and any implementation of the third aspect.

For technical effects corresponding to the ninth aspect and any implementation of the ninth aspect, refer to the technical effects corresponding to the second aspect and any implementation of the second aspect and the third aspect and any implementation of the third aspect. Details are not described herein again.

According to a tenth aspect, a computer-readable storage medium is provided. The computer-readable storage medium stores a computer program, and when the computer program is run on a network device, the network device is enabled to perform the method according to the fourth aspect and any implementation of the fourth aspect.

For technical effects corresponding to the tenth aspect and any implementation of the tenth aspect, refer to the technical effects corresponding to the fourth aspect and any implementation of the fourth aspect. Details are not described herein again.

According to an eleventh aspect, a computer program product is provided. The computer program product is stored in a computer-readable storage medium. When the computer program product runs on a network controlled repeater, the network controlled repeater is enabled to perform the method according to the first aspect and any implementation of the first aspect.

For technical effects corresponding to the eleventh aspect and any implementation of the eleventh aspect, refer to the technical effects corresponding to the first aspect and any implementation of the first aspect. Details are not described herein again.

According to a twelfth aspect, a computer program product is provided. The computer program product is stored in a computer-readable storage medium. When the computer program product runs on a terminal device, the terminal device is enabled to perform the method according to the second aspect and any implementation of the second aspect or the third aspect and any implementation of the third aspect.

For technical effects corresponding to the twelfth aspect and any implementation of the twelfth aspect, refer to the technical effects corresponding to the second aspect and any implementation of the second aspect and the third aspect and any implementation of the third aspect. Details are not described herein again.

According to a thirteenth aspect, a computer program product is provided. The computer program product is stored in a computer-readable storage medium. When the computer program product runs on a network device, the network device is enabled to perform the method according to the fourth aspect and any implementation of the fourth aspect.

For technical effects corresponding to the thirteenth aspect and any implementation of the thirteenth aspect, refer to the technical effects corresponding to the fourth aspect and any implementation of the fourth aspect. Details are not described herein again.

According to a fourteenth aspect, a chip is provided. The chip includes a processor and a memory coupled to the processor. The memory stores a computer program. The chip is located in a network controlled repeater. When the processor executes the computer program, the network controlled repeater is enabled to perform the method according to the first aspect and any implementation of the first aspect.

For technical effects corresponding to the fourteenth aspect and any implementation of the fourteenth aspect, refer to the technical effects corresponding to the first aspect and any implementation of the first aspect. Details are not described herein again.

According to a fifteenth aspect, a chip is provided. The chip includes a processor and a memory coupled to the processor. The memory stores a computer program. The chip is located in a terminal device. When the processor executes the computer program, the terminal device is enabled to perform the method according to the second aspect and any implementation of the second aspect or the third aspect and any implementation of the third aspect.

For technical effects corresponding to the fifteenth aspect and any implementation of the fifteenth aspect, refer to the technical effects corresponding to the second aspect and any implementation of the second aspect and the third aspect and any implementation of the third aspect. Details are not described herein again.

According to a sixteenth aspect, a chip is provided. The chip includes a processor and a memory coupled to the processor. The memory stores a computer program. The chip is located in a network device. When the processor executes the computer program, the network device is enabled to perform the method according to the fourth aspect and any implementation of the fourth aspect.

For technical effects corresponding to the sixteenth aspect and any implementation of the sixteenth aspect, refer to the technical effects corresponding to the fourth aspect and any implementation of the fourth aspect. Details are not described herein again.

According to a seventeenth aspect, a communication system is provided. The communication system includes a network device, a network controlled repeater, and a terminal device. The network controlled repeater is configured to perform the method according to the first aspect and any implementation of the first aspect. The terminal device is configured to perform the method according to the second aspect and any implementation of the second aspect or the third aspect and any implementation of the third aspect. The network device is configured to perform the method according to the fourth aspect and any implementation of the fourth aspect.

## BRIEF DESCRIPTION OF DRAWINGS

The foregoing and other features, advantages, and aspects of embodiments of this application become clearer with reference to the accompanying drawings and the following detailed descriptions. In the accompanying drawings, the same or similar reference signs of the accompanying drawings represent same or similar elements.

FIG. 1 is a diagram of a scenario of a communication method according to an embodiment of this application;

FIG. 2 is a diagram of a hardware structure of a network controlled repeater according to an embodiment of this application;

FIG. 3 is a diagram of an architecture of an antenna port related to a communication method according to an embodiment of this application;

FIG. 4 is a diagram of an SRS configuration of a terminal device according to an embodiment of this application;

FIG. 5 is a diagram of another SRS configuration of a terminal device according to an embodiment of this application;

FIG. 6 is a diagram of principle comparison between a case in which an uplink channel and a downlink channel are reciprocal and a case in which an uplink channel and a downlink channel are not reciprocal according to an embodiment of this application;

FIG. 7A and FIG. 7B are a schematic flowchart of Embodiment 1 of a communication method according to an embodiment of this application;

FIG. 8 is a diagram of a resource configuration of a sounding reference signal SRS in a physical resource block PRB;

FIG. 9 is a diagram of a resource configuration in which a sounding reference signal SRS is a periodic SRS;

FIG. 10(a) and FIG. 10(b) are a diagram of principle verification in Embodiment 1 of a communication method according to an embodiment of this application;

FIG. 11A to FIG. 11C are a schematic flowchart of Embodiment 2 of a communication method according to an embodiment of this application;

FIG. 12A and FIG. 12B are a diagram of a resource configuration in which a sounding reference signal SRS set is a periodic SRS set;

FIG. 13(a) to FIG. 13(b)-2 are a diagram of principle verification in Embodiment 2 of a communication method according to an embodiment of this application; and

FIG. 14 is a diagram of composition of a structure of a network device according to an embodiment of this application.

## DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this application may be implemented according to any appropriate communication protocol, including but not limited to cellular communication protocols such as 3rd generation (3rd Generation, 3G), 4th generation (4G), 5th generation (5G), and 6th generation (6G), wireless local area network communication protocols such as the Institute of Electrical and Electronics Engineers (Institute of Electrical and Electronics Engineers, IEEE) 802.11, and/or any other protocols currently known or developed in the future.

The technical solutions in embodiments of this application are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, or a future evolved 6th generation communication system.

Before embodiments of this application are specifically described, some terms in this application are first explained.

Terminal device: is any terminal device that can perform wired or wireless communication with a network device or another terminal device. The terminal device may be sometimes referred to as user equipment (User Equipment, UE). The terminal device may be any type of mobile terminal, fixed terminal, or portable terminal. For example, the terminal device may include a mobile phone, a station, a unit, a device, a mobile terminal (Mobile Terminal, MT), customer premises equipment (Customer Premises Equipment, CPE), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, an in-vehicle device, a flight device, a virtual reality (Virtual Reality, VR) device, an augmented reality (Augmented Reality, AR) device, a wearable device, a terminal device in a 5G network or any terminal device in an evolved public land mobile network (Public Land Mobile Network, PLMN), another device that can be used for communication, or any combination thereof. This is not limited in embodiments of this application.

Network device: is an entity or a node that may be configured to communicate with a terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. For example, the access network device may include various forms of macro base stations, micro base stations, pico base stations, femto base stations, relay stations, access points, remote radio units (Remote Radio Unit, RRU), radio heads (Radio Head, RH), and remote radio heads (Remote Radio Head, RRH). In systems using different radio access technologies, the access network device may have different names. For example, the access network device is referred to as an evolved NodeB (evolved NodeB, eNB or eNodeB) in a long term evolution (Long Term Evolution, LTE) network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and the DU may be placed at different places. For example, the DU is remote and placed in a heavy-traffic area, and the CU is placed in a central equipment room. Alternatively, the CU and the DU may be deployed in a same equipment room. The CU and the DU may alternatively be different components in a same rack. For ease of description, in subsequent embodiments of this application, the foregoing apparatuses that provide a wireless communication function for a terminal device are collectively referred to as a network device. This is not specifically limited in embodiments of this application.

Network controlled repeater: is a radio frequency repeater device controlled by a network device. For example, the network controlled repeater may adjust a beam direction, a power value, a switch status, a time sequence of uplink and downlink forwarding, and a time-frequency offset synchronization of the network controlled repeater according to an indication of the network device.

Channel reciprocity: In a TDD system, uplink and downlink channel information may be deduced through downlink/uplink channel measurement.

Sounding reference signal port (SRS port): One SRS port corresponds to some time-frequency resources or time-frequency-code resources in one SRS. When a terminal device sends an SRS, each SRS port is associated with one antenna port. It may be understood that a time-frequency-code resource corresponding to the SRS port and a signal on the resource are sent by using the associated antenna port.

Antenna port: The antenna port is a logical concept in NR. One antenna port may correspond to one physical antenna, or may correspond to a plurality of physical antennas, or may correspond to a plurality of physical antennas and a beamforming vector used by a plurality of antennas. In NR, a channel that a symbol sent by using the antenna port passes through may be deduced based on a channel that another symbol sent by using the same antenna port passes through.

Antenna switching (antenna switching): A terminal device includes Y receive antenna ports. When reporting a capability of the terminal device to a network device, the terminal device reports, to the network device, that the terminal device has an XTYR capability, that is, reports that the terminal device can select X antenna ports from the Y antenna ports to send an SRS. Y is related to a quantity of all or some receive antenna ports or a quantity of all or some receive antennas of the terminal device. T is short for Transmit, and R is short for Receive. For a relationship between a quantity of receive antenna ports and a quantity of receive antennas, refer to the description about the antenna port in the previous paragraph. When the terminal device sends one SRS by using the X antenna ports, the network device may obtain an uplink channel coefficient matrix between a base station and the X antenna ports (specially, when X=1, the uplink channel coefficient matrix may be understood as a matrix having only one row or one column) by measuring the SRS. When the terminal device sends another SRS by using X other antenna ports (which do not coincide with the foregoing X antenna ports), the network device may obtain an uplink channel coefficient matrix (also including a matrix with one row or one column) between the network device and the X other antenna ports by measuring the SRS. Therefore, when X antenna ports used by the terminal device to send an SRS each time are X completely different ports in the Y antenna ports, the network device can obtain a channel coefficient matrix (also including a matrix with one row or one column) between the network device and the Y antenna ports by processing measurement results of a plurality of SRSs.

Channel: is a channel from a baseband module in a terminal device or a network device to a specific antenna port in the terminal device or the network device. The channel may be referred to as a radio frequency chain (RF chain).

Channels are classified into an uplink transmit channel (which may also be referred to as an uplink transmission channel or an uplink channel) and a downlink receive channel (which may also be referred to as a downlink channel). When the terminal device performs uplink sending, one uplink transmit channel may be used to connect the baseband module of the terminal device and one antenna port of the terminal device, to transmit a baseband signal to an antenna for sending. One uplink transmit channel may include at least one of a digital-to-analog converter, a filter, a frequency mixer, and a power amplifier. When the terminal device performs downlink receiving, one downlink receive channel may be used to connect the baseband module of the terminal device and one antenna port of the terminal device, to transmit a signal received on an antenna to the baseband. One downlink receive channel may include at least one of an analog-to-digital converter, a filter, a frequency mixer, and a power amplifier. Generally, uplink and downlink channels cannot be shared. The terminal device may have one or more uplink transmit channels and one or more downlink receive channels. When the terminal device reports that the terminal device has an XTYR capability, it may be understood that the terminal device includes X uplink transmit channels and Y downlink receive channels.

Uplink channel coefficient matrix: is a gain coefficient matrix from antenna ports of a terminal device to antenna ports of a network device. Each element in the uplink channel coefficient matrix is a gain coefficient from one antenna port of the terminal device to one antenna port of the network device, and specifically includes an amplitude and a phase. It should be understood that the amplitude of the gain coefficient may be less than 1.

Downlink channel coefficient matrix: is a gain coefficient matrix from antenna ports of a network device to antenna ports of a terminal device. Each element in the downlink channel coefficient matrix is a gain coefficient from one antenna port of the network device to one antenna port of the terminal device, and specifically includes an amplitude and a phase. It should be understood that the amplitude of the gain coefficient may be less than 1.

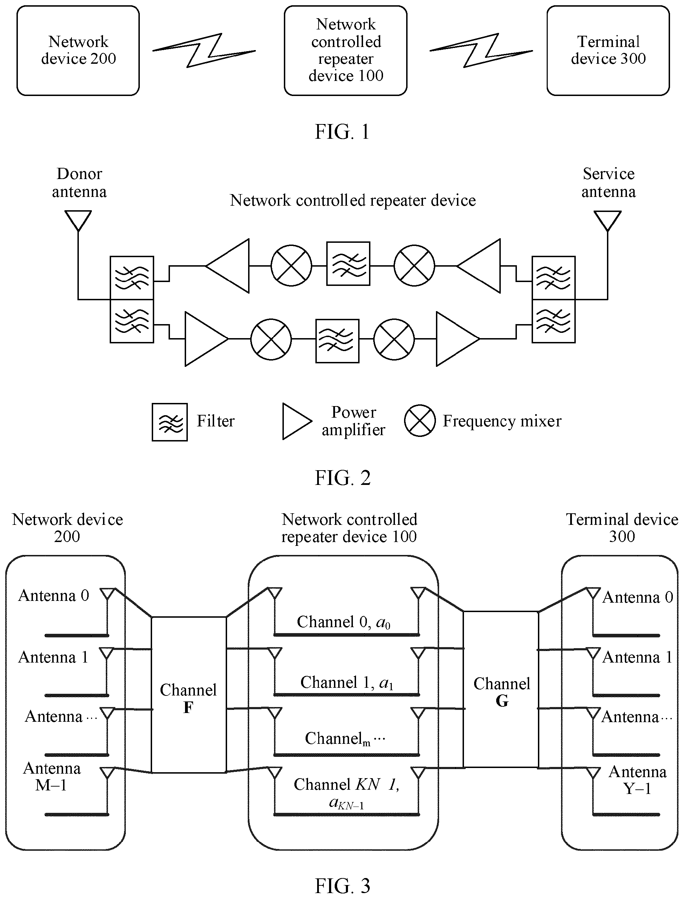

In a wireless communication system such as NR, when a network device is relatively far away from a terminal device, an NCR may be used to amplify and forward a signal, to improve quality of a transmission link between the network device and the terminal device, thereby improving network coverage and an uplink/downlink transmission rate of the terminal device. For example, FIG. 1 shows a scenario of a communication method according to an embodiment of this application. As shown in FIG. 1, a network device 200 is relatively far away from a terminal device 300. In this case, a network controlled repeater NCR 100 may be used to amplify and forward a signal, to ensure quality of a transmission link between the network device 200 and the terminal device 300.

For ease of understanding, a structure of the NCR is first described with reference to FIG. 2. FIG. 2 shows an example of a specific structure of the NCR in FIG. 1. As shown in FIG. 2, the NCR may receive a downlink signal of a network device (for example, a base station) by using a donor antenna (Donor Antenna, also referred to as a forward antenna), then perform filtering and amplification on the downlink signal by using a filter, an amplifier (a sequence and quantities of filters and amplifiers are merely an example, and are not used for limitation), and then forward a filtered and amplified downlink signal to a terminal device by using a service antenna (Service Antenna, also referred to as a backward antenna, a retransmission antenna, or a coverage antenna). In a process of receiving a downlink signal and forwarding the downlink signal to the terminal device, a channel between the donor antenna and the service antenna may be referred to as a downlink forwarding channel. Similarly, the NCR may receive an uplink signal of the terminal device by using the service antenna, then perform filtering and amplification on the uplink signal by using the filter and the amplifier (the sequence and the quantities of filters and amplifiers are merely an example, and are not used for limitation), and then forward a filtered and amplified uplink signal to the network device (for example, a base station) by using the donor antenna. In a process of receiving an uplink signal and forwarding the uplink signal to the network device, a channel between the service antenna and the donor antenna may be referred to as an uplink forwarding channel.

Optionally, the uplink forwarding channel and the downlink forwarding channel may further include a frequency mixer. For example, the NCR may first down-convert a high-frequency signal to an intermediate frequency or a baseband by using a frequency mixer, perform filtering at the intermediate frequency or the baseband, then up-convert the signal to a high frequency by using a frequency mixer, and then forward the signal.

Optionally, the uplink forwarding channel and the downlink forwarding channel may further include at least one power amplifier. For example, a first power amplifier in the downlink forwarding channel in FIG. 2 may be a low noise amplifier (Low-noise Amplifier, LNA), which can suppress noise to some extent when signal power is increased. A second power amplifier may be a power amplifier that is not an LNA, and may implement amplification with a relatively high amplification multiple.

Optionally, the NCR may further include a receiving module (not shown in the figure), configured to receive control signaling of the network device. An antenna of the receiving module may reuse some or all of the foregoing donor antennas, or may be a separate antenna.

Optionally, the NCR may further include a processing module (not shown in the figure), configured to process control signaling sent by the network device and generate information to be sent to the network device.

Optionally, the NCR may further include a sending module (not shown in the figure), configured to send signaling to the network device, for example, send response information for the control signaling of the network device. An antenna of the sending module may reuse some or all of the foregoing donor antennas, or may be a separate antenna.

It should be noted that FIG. 2 shows only an example of a possible structure of the NCR, and another similar structure is not excluded. For example, the uplink forwarding channel and/or the downlink forwarding channel may not include a frequency mixer, and filtering may be directly performed at a high frequency. For example, the uplink forwarding channel and/or the downlink forwarding channel may include only one power amplifier. For another example, the uplink forwarding channel and/or the downlink forwarding channel may include only one filter, or may not include a filter, or the like. For another example, the NCR may include a plurality of donor antennas, a plurality of service antennas, and a plurality of uplink and downlink forwarding channels.

When the network device 200 in FIG. 1 is in a frequency division duplexing (Frequency Division Duplexing, FDD) mode, a sending frequency of the network device 200 and a sending frequency of the terminal device 300 are respectively fixed on different frequency bands, to separately implement downlink sending and uplink sending. In this case, uplink transmission and downlink transmission may be performed simultaneously. Therefore, in the FDD mode, the uplink forwarding channel and the downlink forwarding channel need to be enabled at the same time and work on different frequency bands. When an antenna of the NCR 100 does not have a function of simultaneous receiving and sending, the NCR 100 needs at least two donor antennas for receiving a downlink signal and forwarding an uplink signal, and at least two service antennas for forwarding a downlink signal and receiving an uplink signal.

When the network device 200 in FIG. 1 is in a time division duplexing (Time division duplexing, TDD) mode, a sending frequency of the network device 200 and a sending frequency of the terminal device 300 are on a same frequency band, to separately implement downlink sending and uplink sending. In this case, uplink data and downlink data are allocated to different time units (for example, slots or symbols). Therefore, in the TDD mode, when the NCR 100 can obtain uplink and downlink time configuration information, only one of the uplink forwarding channel and the downlink forwarding channel may be enabled, that is, the NCR 100 can enable only the uplink forwarding channel in an uplink time unit, and enable only the downlink forwarding channel in a downlink time unit. Optionally, in the TDD mode, the donor antenna and the service antenna do not need to be distinguished between being used for the downlink forwarding channel and being used for the uplink forwarding channel.

In actual transmission between the network device 200 and the terminal device 300 shown in FIG. 1, a transmission rate may be increased by using a multiple-input multiple-output (Multiple input and multiple output, MIMO) technology. In this case, both the network device 200 and the terminal device 300 may include a plurality of antenna ports, and therefore include a plurality of channels. The following provides a specific description with reference to FIG. 3.

For example, FIG. 3 is a diagram of an architecture of an antenna port related to a communication method according to an embodiment of this application. As shown in FIG. 3, the network device 200 includes M antenna ports, the NCR 100 includes KN donor antenna ports and KN service antenna ports, and the terminal device 300 includes Y antenna ports. During downlink forwarding, KN channels may be formed between the KN donor antenna ports and the KN service antenna ports of the NCR 100. Each donor antenna port is associated with each service antenna port by using one downlink forwarding channel, to form KN downlink forwarding channels, namely, a channel 0, ..., a channel m, ..., and a channel KN-1. In addition, during uplink forwarding, the NCR 100 may select, for example, N donor antenna ports from the KN donor antenna ports, select, for example, N service antenna ports from the KN service antenna ports, and associate each selected donor antenna port with each selected service antenna port by using one uplink forwarding channel, to form, for example, N uplink forwarding channels (not shown in the figure).

For ease of description, the following uses an example in which the network device 200 performs downlink sending to the terminal device 300 through the NCR 100 for description. In this case, a channel F may be formed between the network device 200 and the NCR 100. Mathematically, the channel F may be expressed by using a channel coefficient matrix F0 with M rows and KN columns. A channel G may be formed between the NCR 100 and the terminal device 300. Mathematically, the channel G may be expressed by using a channel coefficient matrix G0 with KN rows and Y columns. Therefore, a channel H (not shown in the figure) may be formed between the network device 200 and the terminal device 300. Mathematically, the channel H may be expressed by using a channel coefficient matrix H0 with M rows and Y columns. A case of uplink sending is similar to this, and details are not described again.

Mathematically, the channel coefficient matrix F0 between the network device 200 and the NCR 100 is a matrix with M rows and KN columns, the channel coefficient matrix G0 between the NCR 100 and the terminal device 300 is a matrix with KN rows and Y columns, and the channel coefficient matrix H0 between the network device 200 and the terminal device 300 is equal to $F0 \times diag(a_0, a_1, ..., a_m, ..., a_{KN-1}) \times G$, where $diag(a_0, a_1, ..., a_m, ..., a_{KN-1})$ indicates a diagonal matrix whose diagonal elements are $a_0, a_1, ..., a_m, ...,$ and $a_{KN-1}$. Herein, $a_m$ represents a gain coefficient on a channel m, and $a_m$ may be a complex number. When a rank of the channel coefficient matrix H0 is greater than 1, multi-stream transmission can be performed between the network device and the terminal device. For example, a quantity of streams in the multi-stream transmission is less than or equal to the rank of the channel coefficient matrix H0. For example, the quantity of streams in the multi-stream transmission may be adjusted by the network device.

Factors affecting the rank of the channel coefficient matrix H0 include the following.

(1) Whether there is a scatterer between the network device and the terminal device

Theoretically, if a channel between the network device and the terminal device does not pass through any scatterer, and only one line-of-sight (Line of Sight, LoS) path exists, regardless of a quantity of antennas between the network device and the terminal device, only single-stream transmission can be performed between the network device and the terminal device. In this case, the rank of the channel coefficient matrix H0 between the network device and the terminal device is 1. However, in an actual communication system, there is a scatterer (for example, a building or dust in air) between the network device, the NCR, and the terminal device. Therefore, in the actual communication system, single-stream transmission may not be performed between the network device and the terminal device.

(2) Smallest value in ranks of three matrices: F0, $diag(a_0, a_1, ..., a_m, ..., a_{KN-1})$, and G0

In an actual communication system, because the channel coefficient matrix H0 is obtained by multiplying a plurality of matrices, the rank of H0 is equal to the smallest value in the ranks of the three matrices: F0, $diag(a_0, a_1, ..., a_m, ..., a_{KN-1})$, and G0. Generally, the rank of H0 may be determined based on a smallest value in Y, M, and KN. In an actual case, a quantity M of antenna ports of the network device 200 is usually relatively large, and a quantity Y of antenna ports of the terminal device 300 is relatively small.

When the network device 200 communicates with the terminal device 300 without using the NCR 100, a quantity of streams in multi-stream transmission is mainly limited by the quantity Y of antenna ports of the terminal device 300. For example, a quantity of streams in downlink multi-stream transmission is mainly limited by a quantity of antenna ports that are of the terminal device 300 and that are used for downlink transmission.

When the network device 200 communicates with the terminal device 300 through the NCR 100, generally, it may be considered that a quantity of streams in multi-stream transmission depends on a smaller value in KN and Y

Considering that downlink service traffic in an actual network is usually far greater than uplink service traffic, generally, a quantity of antenna ports used by the terminal device 300 during downlink transmission is greater than a quantity of antenna ports used during uplink transmission, that is, the quantity Y of channels that can be used by the terminal device 300 during downlink transmission is greater than the quantity X of channels that can be used during uplink transmission. To be specific, the terminal device 300 is configured with XTYR, where X is less than Y The quantity Y of channels that can be used by the terminal device 300 during downlink transmission corresponds to that the terminal device 300 can use Y antenna ports during downlink transmission. The quantity X of channels that can be used by the terminal device 300 during uplink transmission corresponds to that the terminal device 300 can use X antenna ports during downlink transmission. For example, a typical configuration of a terminal device in a current 5G network is 2T4R, namely, two uplink transmit channels and four downlink receive channels. However, in some cases, X and Y are the same. For example, the terminal device is configured with 2T2R, namely, two uplink transmit channels and two downlink receive channels.

To ensure that the terminal device 300 can perform uplink multi-stream transmission by using the quantity X of streams and can perform downlink multi-stream transmission by using the quantity Y of streams, the quantity N of uplink forwarding channels of the NCR 100 is usually set to be greater than or equal to the quantity X of uplink transmit channels of the terminal device 300, and the quantity KN of downlink forwarding channels of the NCR 100 is set to be greater than or equal to the quantity Y of downlink receive channels of the terminal device 300.

In addition, generally, a larger quantity N of uplink forwarding channels of the NCR 100 indicates higher hardware costs of the NCR 100, and a larger quantity KN of downlink forwarding channels indicates higher hardware costs of the NCR 100. Considering cost control of the NCR 100, the quantity of uplink forwarding channels of the NCR 100 is usually set to be the same as the quantity X of uplink channels of the terminal device 300, and the quantity of downlink forwarding channels of the NCR 100 is usually set to be the same as the quantity Y of downlink channels of the terminal device 300. In this case, the NCR 100 uses Y donor antenna ports and Y service antenna ports during downlink forwarding, and the NCR 100 uses X donor antenna ports in the Y donor antenna ports and X service antenna ports in the Y service antenna ports during uplink forwarding.

However, sometimes, the NCR 100 needs to be compatible with a plurality of terminal devices with different configurations. In this case, the NCR 100 may be configured in a manner that can satisfy requirements of the plurality of terminal devices with different configurations and consider NCR cost control. For example, the NCR 100 is oriented to the terminal device 300 and a terminal device 300' (not shown in the figure). The terminal device 300 is configured with 2T4R, and the terminal device 300' is configured with 2T2R. In this case, the NCR 100 may be configured with 2T4R, to consider two configuration manners of the terminal device 300 and the terminal device 300', and consider cost control of the NCR 100. In this case, because the NCR 100 is often oriented to the terminal device 300 and the terminal device 300', even if the terminal device 300 does not have an uplink transmission requirement sometimes, and only the terminal device 300' has an uplink transmission requirement, the 2T4R configuration manner of the NCR 100 may still be maintained.

In conclusion, the foregoing configuration of the NCR 100 can ensure uplink and downlink multi-stream transmission (the quantity X of uplink streams and the quantity Y of downlink streams), and also consider a requirement for reducing NCR costs. In this way, the NCR has different quantities of uplink forwarding channels and downlink forwarding channels, that is, a quantity of uplink forwarding antenna ports of the NCR in single uplink forwarding is different from a quantity of downlink forwarding antenna ports of the NCR in single downlink forwarding.

When the NCR has a same quantity of uplink forwarding channels and downlink forwarding channels, the network device obtains an uplink channel coefficient matrix by measuring a sounding reference signal (Sounding Reference Signal, SRS) sent by the terminal device, and then determines a downlink channel coefficient matrix based on channel reciprocity (that is, obtains downlink CSI with relatively high accuracy), to obtain a downlink channel. The downlink CSI is closely related to a precoding design. Biased downlink CSI leads to a biased precoding design. Accurate downlink CSI leads to an accurate precoding design. The network device (for example, a base station) may implement an accurate precoding design based on accurate downlink CSI, and further provide accurate multi-stream transmission in wireless transmission by using the accurate precoding design. Further, the network device (for example, a base station) may further provide an accurate array gain in wireless transmission by using the accurate precoding design. The array gain may be understood as that the network device may use a plurality of antennas to concentrate energy of a sent signal on one or more "directions" (not necessarily a direction in physical space), to improve a signal to interference plus noise ratio (Signal to Interference plus Noise Ratio, SINR) of a signal received by the terminal device.

However, in the foregoing two cases, when the NCR has different quantities of uplink forwarding channels and downlink forwarding channels, the downlink channel cannot be determined based on channel reciprocity. Generally, an uplink data volume of the terminal device is less than a downlink data volume. Therefore, a quantity of uplink transmit channels of the terminal device is less than a quantity of downlink receive channels, and a quantity of uplink forwarding channels of the NCR is usually less than a quantity of downlink forwarding channels. Therefore, a technical problem to be resolved is how to provide a communication method to accurately determine a downlink channel coefficient matrix when the quantity of uplink forwarding channels and the quantity of downlink forwarding channels of the NCR are different, so that a network device can accurately perform precoding design to provide accurate multi-stream transmission in wireless transmission.

Before a specific procedure in embodiments of this application is specifically described, the network device first needs to perform SRS configuration on the terminal device. Specific descriptions about the SRS configuration are as follows:

The terminal device first sends a capability of the terminal device to the network device. The capability may be sent in a manner of indication information. For example, the capability of the terminal device includes a quantity of antenna ports used by the terminal device during uplink sending. Optionally, the capability of the terminal device further includes a quantity of antenna ports used by the terminal device during downlink receiving. The quantity of antenna ports used by the terminal device during uplink sending is corresponding to a quantity of uplink channels of the terminal device. The quantity of antenna ports used by the terminal device during downlink receiving is corresponding to a quantity of downlink channels of the terminal device. "Corresponding" includes "the same".

For another example, the capability of the terminal device includes a quantity of uplink channels of the terminal device. Optionally, the capability of the terminal device further includes a quantity of downlink channels of the terminal device.

For another example, a combination of the foregoing two examples may be reflected in the capability of the terminal device. Details are not described herein.

After receiving the capability of the terminal device that is sent by the terminal device, the network device sends SRS configuration information to the terminal device based on the capability of the terminal device. For example, the SRS configuration information may include an SRS ID of an SRS, and a time unit and/or a frequency unit corresponding to the SRS. The SRS ID is used to identify the SRS, for example, an SRS 0 or an SRS 1. The time unit corresponding to the SRS includes a time unit (which may also be referred to as a time domain resource) of a specific port (port) of the SRS. The frequency unit corresponding to the SRS includes a frequency unit (which may also be referred to as a frequency domain resource) of a specific port of the SRS. Optionally, the SRS configuration information may further include a code domain resource (which may also be referred to as a code domain unit) corresponding to each port of the SRS.

After receiving the SRS configuration information sent by the network device, the terminal device may send, based on the SRS configuration information, the SRS corresponding to the SRS in the time unit and the frequency unit that are corresponding to the SRS. Generally, one SRS is associated with one antenna port, or one antenna port sends a signal on a time-frequency-code resource corresponding to one SRS port.

After receiving the SRS sent by the terminal device, the network device obtains, according to the foregoing method steps or the method steps provided in embodiments of this application, an equivalent downlink channel coefficient matrix from the network device to each antenna port of the terminal device, to obtain equivalent downlink CSI.

It should be noted that the equivalent downlink channel coefficient matrix in this application is a downlink channel coefficient matrix between the network device and the terminal device when the terminal device receives only a signal that is from the network device and that is forwarded by a network controlled repeater.

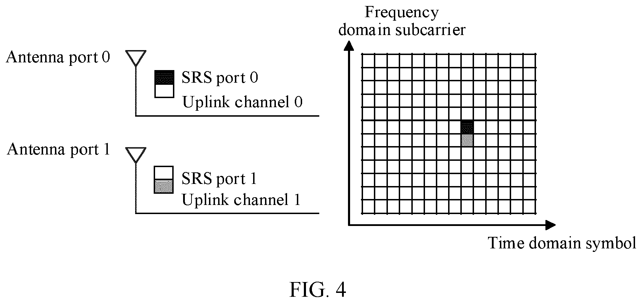

For example, FIG. 4 shows an SRS configuration of a terminal device according to an embodiment of this application. As shown in FIG. 4, the network device configures, for the terminal device, two SRS ports, namely, an SRS port 0 and an SRS port 1, for sending one SRS in a same slot or symbol. The SRS port 0 and the SRS port 1 respectively correspond to different time-frequency resources, and specifically correspond to a same time unit and different frequency units. The terminal device sends the SRS port 0 on a first time-frequency resource by using an antenna port (antenna port) 0, and the terminal device sends the SRS port 1 on a second time-frequency resource by using an antenna port (antenna port) 1. In this way, the network device separately obtains, according to the foregoing method steps or the method steps provided in embodiments of this application, equivalent downlink CSI between the network device and a plurality of antenna ports of the terminal device.

It should be noted that, although one SRS port corresponds to one time unit in FIG. 4, this is merely an example. A person skilled in the art understands that, in this application, one SRS port may correspond to one or more time units. The time unit includes a slot or a symbol.

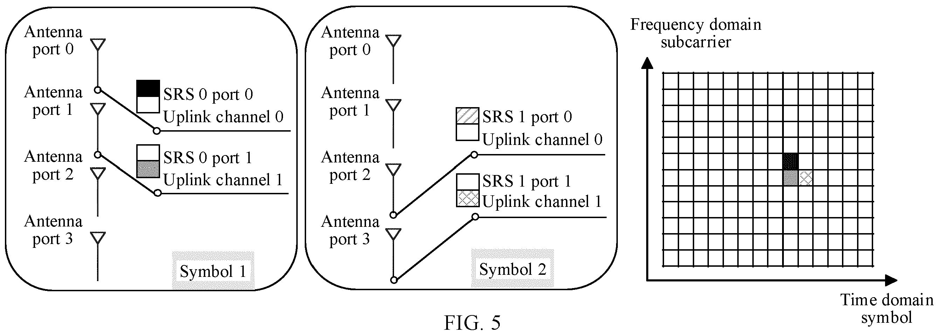

For example, FIG. 5 shows another SRS configuration of a terminal device according to an embodiment of this application. As shown in FIG. 5, the terminal device includes four antennas. It is assumed that one antenna port corresponds to one antenna. Therefore, the terminal device includes four antenna ports, namely, an antenna port 0 (antenna port 0), an antenna port 1 (antenna port 1), an antenna port 2 (antenna port 2), and an antenna port 3 (antenna port 3). The terminal device is configured with 2T4R. Because the terminal device has only two uplink channels, that is, the terminal device can use only two of the antenna ports to send an SRS in a same slot or symbol, the network device configures the terminal device to send two SRSs, namely, an SRS 0 and an SRS 1, in different slots or symbols. When sending the SRS 0 on a first symbol, the terminal device separately connects two uplink channels to the antenna port 0 and the antenna port 1, to separately send an SRS 0 port 0 and an SRS 0 port 1. When sending the SRS 1 on a second symbol, the terminal device separately connects two uplink channels to the antenna port 2 and the antenna port 3, to separately send an SRS 1 port 0 and an SRS 1 port 1. The network device receives the SRS 0 port 0 and the SRS 0 port 1 on the first symbol, and receives the SRS 1 port 0 and the SRS 1 port 1 on the second symbol. After a series of processing and combination, the network device may obtain equivalent downlink channel coefficient matrices from the network device to the antenna port 0, the antenna port 1, the antenna port 2, and the antenna port 3 of the terminal device.

It should be noted that the downlink channel and the uplink channel of the terminal device may include components such as a filter, a power amplifier, an analog-to-digital converter (Analog-Digital converter, ADC) used for a downlink receive channel, or a digital-to-analog converter (Digital-Analog converter, DAC) used for an uplink transmit channel. The downlink channel and the uplink channel of the terminal device may also be referred to as radio frequency chains. In a TDD system, an uplink channel and a downlink channel usually share an antenna, that is, the antenna of the terminal device is not distinguished between an uplink antenna and a downlink antenna. In an uplink slot/symbol, the antenna is connected to the uplink channel to perform an uplink sending function. In a downlink slot/symbol, the antenna is connected to the downlink channel to perform a downlink receiving function.

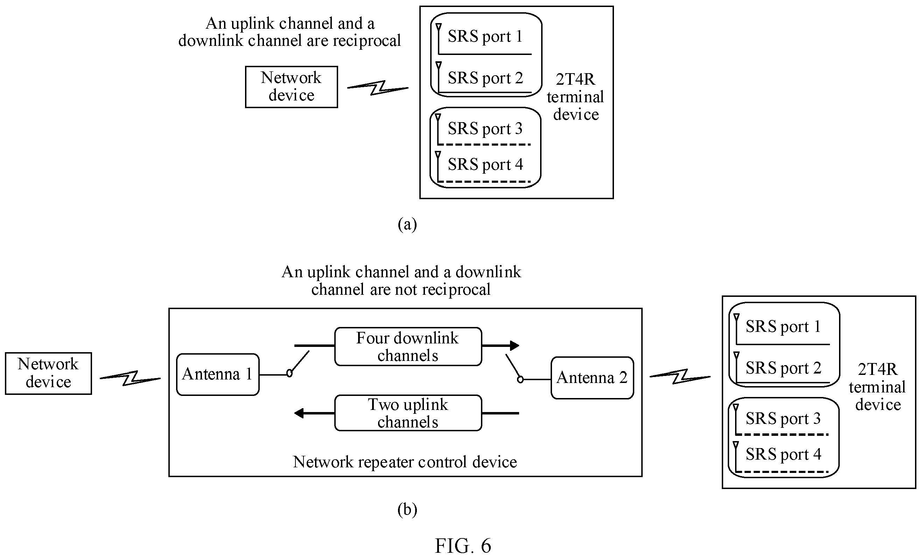

For example, FIG. 6 shows principle comparison between a case in which an uplink channel and a downlink channel are reciprocal and a case in which an uplink channel and a downlink channel are not reciprocal after an NCR is introduced according to an embodiment of this application. In (a) in FIG. 6, the terminal device (for example, CPE) is configured with 2T4R, and the network device (for example, a base station) communicates with the terminal device. In this case, it may be considered that an uplink channel and a downlink channel are reciprocal. The network device indicates the terminal device to send an SRS, and the network device receives the SRS sent by the terminal device. Based on channel reciprocity, the network device obtains an equivalent downlink channel coefficient matrix, that is, obtains equivalent downlink CSI. (a) in FIG. 6 shows a case in which an NCR is not included. Although no NCR is shown in (a) in FIG. 6, FIG. 6 also includes a case in which an NCR exists between the network device and the terminal device, and the NCR has a same quantity of uplink forwarding channels and downlink forwarding channels.

In (b) in FIG. 6, the terminal device (for example, CPE) is configured with 2T4R, the NCR is also configured with 2T4R, and the network device (for example, a base station) may communicate with the terminal device through the NCR. In this case, because a quantity of uplink forwarding channels is not equal to a quantity of downlink forwarding channels, an uplink channel and a downlink channel are not reciprocal. After receiving an SRS sent by the terminal device, the network device cannot directly obtain an equivalent downlink channel coefficient matrix based on channel reciprocity, and therefore cannot obtain equivalent downlink CSI. In addition, an antenna 1 and an antenna 2 in (b) in FIG. 6 are merely examples, do not indicate that there is only one antenna or only one antenna port for communication between the NCR and the network device, and do not indicate that there is only one antenna or only one antenna port for communication between the NCR and the terminal device.

It should be noted that in (a) and (b) in FIG. 6, although the terminal device is configured with 2T4R, this is merely an example, and the terminal device may be alternatively configured with XTYR, where Y is a positive integer, X is a positive integer less than Y, Y is a quantity of downlink channels, and X is a quantity of uplink channels.

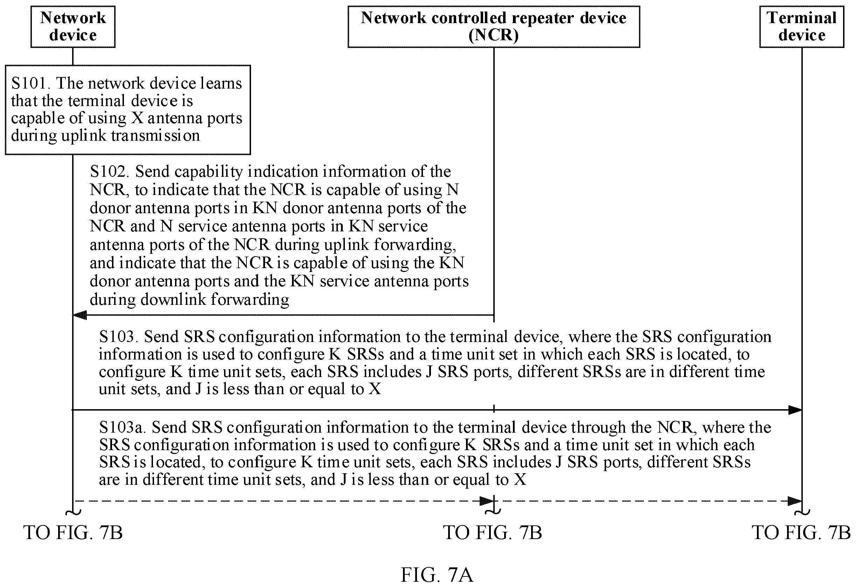

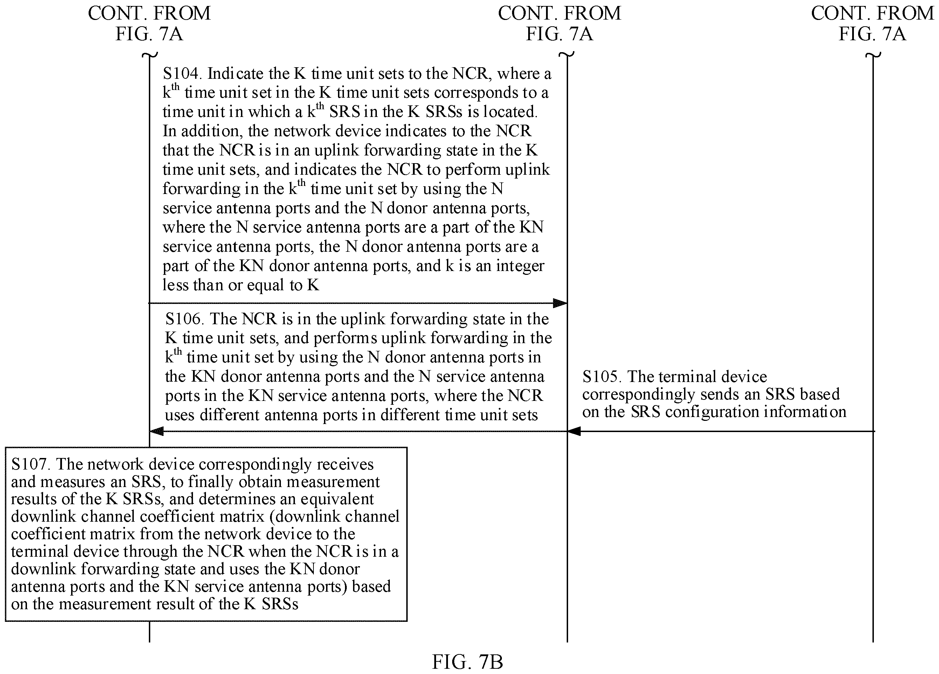

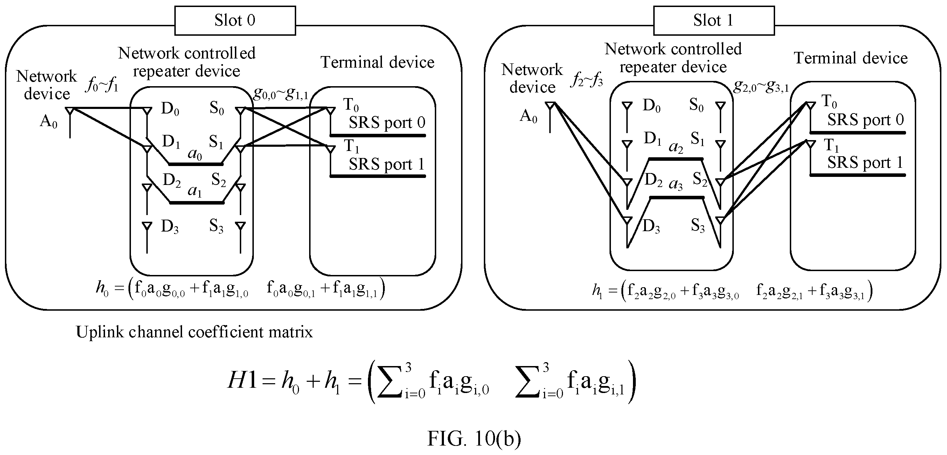

With reference to FIG. 7A and FIG. 7B to FIG. 10(a) and FIG. 10(b), the following specifically describes two embodiments of the communication method provided in embodiments of this application.

**Embodiment 1**

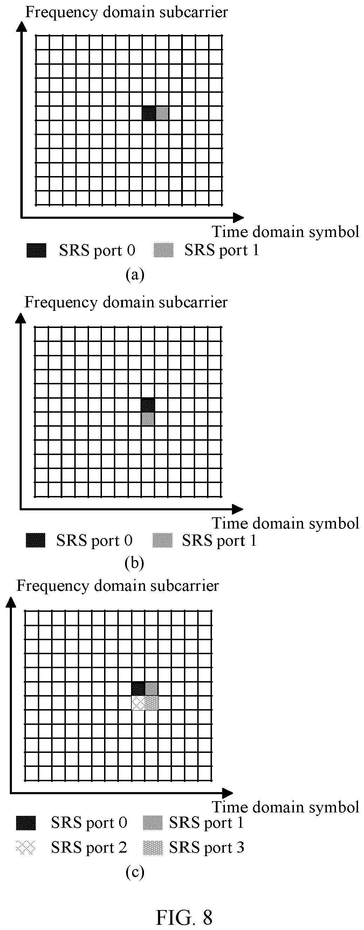

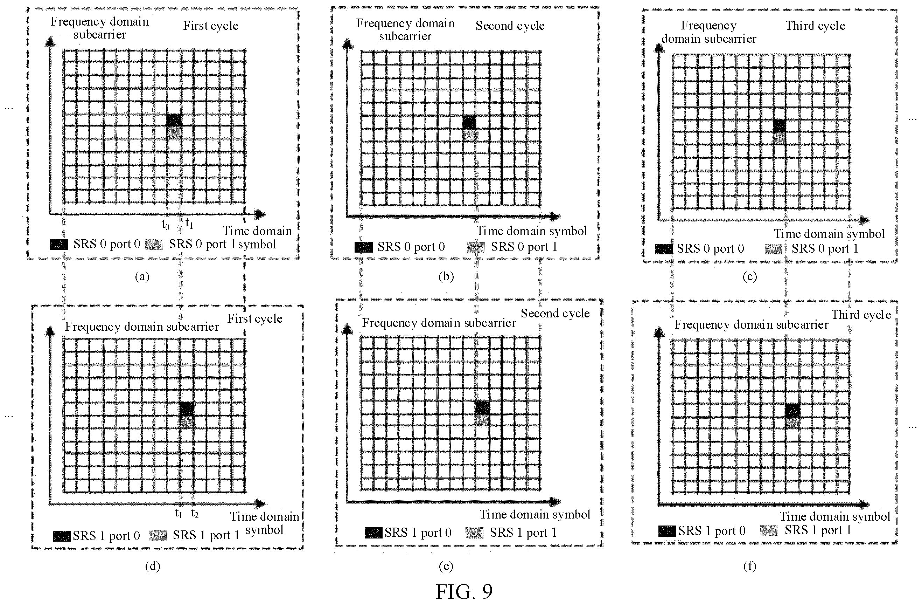

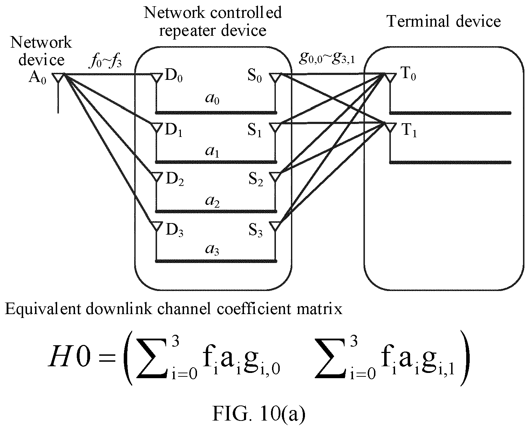

Embodiment 1 of this application relates to FIG. 7A and FIG. 7B to FIG. 10(a) and FIG. 10(b). FIG. 7A and FIG. 7B are a schematic flowchart of Embodiment 1 of a communication method according to an embodiment of this application. FIG. 8 is a diagram of a resource configuration of a sounding reference signal SRS in a physical resource block PRB. FIG. 9 is a diagram of a resource configuration in which a sounding reference signal SRS is a periodic SRS. FIG. 10(a) and FIG. 10(b) are a diagram of principle verification in Embodiment 1 of a communication method according to an embodiment of this application. A network controlled repeater NCR includes KN donor antenna ports and KN service antenna ports. The KN donor antenna ports and the KN service antenna ports may be all or some antenna ports of the NCR.

As shown in FIG. 7A and FIG. 7B, the method includes the following steps.

S101. A network device learns that a terminal device is capable of using X antenna ports during uplink transmission.

In an implementation, the terminal device sends a capability of the terminal device to the network device. The capability may be sent in a manner of indication information. The capability includes that the terminal device is capable of using X antenna ports during uplink transmission. Optionally, the capability further includes that the terminal device is capable of using Y antenna ports during downlink transmission. X is a positive integer less than or equal to Y

In other words, X may also be understood as a quantity of antenna ports that can be used by the terminal device during single uplink sending, and Y may also be understood as a quantity of antenna ports that can be used by the terminal device during single downlink receiving. Therefore, learning of the network device may be implemented as follows: The terminal device sends capability indication information of the terminal device to the network device, where the capability indication information indicates that the terminal device is capable of using X antenna ports during uplink transmission.

This implementation may be further understood as follows: In single uplink sending, the terminal device can send an SRS by using X antenna ports; or in single uplink sending, the terminal device can send an SRS by using X antenna ports simultaneously.

Optionally, when the terminal device sends the capability indication information of the terminal device to the network device, the capability indication information indicates that the terminal device has an XTYR capability. To be specific, the terminal device can use Y antenna ports for receiving in downlink transmission and use X antenna ports for sending in uplink transmission. The X antenna ports are a part of the Y antenna ports, and Y is related to a quantity of all or some receive antenna ports of the terminal device. X is a positive integer less than or equal to Y

In an implementation, the network device may learn of the capability of the terminal device through another device. For example, after obtaining the capability of the terminal device, the another device provides the capability of the terminal device for the network device. The capability includes that the terminal device is capable of using X antenna ports during uplink transmission. Optionally, the capability further includes that the terminal device is capable of using Y antenna ports during downlink transmission. X is a positive integer less than or equal to Y

Optionally, the network device selects J from the quantity X of uplink antenna ports, where J is a positive integer less than or equal to X.

Optionally, the network device further learns in advance of the Y antenna ports that can be used by the terminal device during downlink transmission.

Optionally, S101 may be a static expression. In other words, S 101 may be a statically limited step other than the method steps in this embodiment of this application.

Alternatively, the X antenna ports in the foregoing implementation or optional manner of S101 may be replaced with X uplink channels. The Y antenna ports in the foregoing implementation or optional manner of S 101 may be replaced with Y downlink channels.

S 102. The network controlled repeater NCR sends capability indication information of the NCR to the network device, where the capability indication information indicates that the NCR is capable of using N donor antenna ports in the KN donor antenna ports of the NCR and N service antenna ports in the KN service antenna ports of the NCR during uplink forwarding, and indicates that the NCR is capable of using the KN donor antenna ports and the KN service antenna ports during downlink forwarding.

In other words, the capability indication information indicates, to the network device, that during downlink forwarding, the NCR can use the KN donor antenna ports to receive information sent by the network device, and use the KN service antenna ports to forward the information to the terminal device; and during uplink forwarding, the NCR can use the N service antenna ports to receive information sent by the terminal device, and use the N donor antenna ports to forward the information to the network device, where the N donor antenna ports used in uplink forwarding are N donor antenna ports in the KN donor antenna ports used in downlink forwarding, and the N service antenna ports used in uplink forwarding are N service antenna ports in the KN service antenna ports used in downlink forwarding.

Optionally, S 102 may be a static expression. In other words, S102 may be a statically limited step other than the method steps in this embodiment of this application.

S103. The network device sends SRS configuration information to the terminal device, where the SRS configuration information is used to configure K SRSs and a time unit set in which each SRS is located, to configure K time unit sets, each SRS includes J SRS ports, different SRSs are in different time unit sets, and J is less than or equal to X.

Optionally, the SRS configuration information is further used to configure a time unit in which each SRS port is located. For example, the SRS configuration information is used to configure a time unit in which each SRS port in a $k^{th}$ SRS is located. In this case, the time unit in which each SRS port in the $k^{th}$ SRS is located is in a time unit set in which the $k^{th}$ SRS is located. Herein, k is any positive integer less than or equal to K.

Optionally, the SRS configuration information is further used to configure a frequency unit (which may also be referred to as a frequency domain resource) in which each SRS or each SRS port is located.

Optionally, the SRS configuration information is further used to configure a code domain unit (which may also be referred to as a code domain resource) in which each SRS or each SRS port is located.

In an implementation, the SRS configuration information may include K SRS IDs, each SRS ID corresponds to one SRS, each SRS includes J SRS ports, and each SRS port may have a time unit (which may also be referred to as a time domain resource) corresponding to the SRS port. Herein, J is a positive integer less than or equal to X.

Optionally, each SRS port may have a frequency unit and/or code domain unit corresponding to the SRS port.

Optionally, each SRS port may correspond to one or more time units.

Optionally, different ports of a same SRS are in a same time unit.

Optionally, different ports of a same SRS are in different time units.

Optionally, time-frequency resources respectively corresponding to the J SRS ports may be obtained through FDM. In this case, J ports of one SRS correspond to time units at a same location and frequency units at different locations. In this case, one SRS occupies one time unit, each of the K time unit sets includes only one time unit, and a $k^{th}$ time unit set may also be understood as a $k^{th}$ time unit.

Optionally, time-frequency resources respectively corresponding to the J SRS ports may be obtained through TDM. In this case, J ports of one SRS correspond to time units at different locations and frequency units at a same location. Alternatively, time-frequency resources respectively corresponding to the J SRS ports may be obtained through FDM and TDM in a mixed manner. In this case, J ports of one SRS correspond to time domain resources whose locations are not completely the same and frequency domain resources whose locations are not completely the same.

As shown in (a) in FIG. 8, one SRS includes two SRS ports for which TDM is performed. In one physical resource block (Physical Resource Block, PRB) in an orthogonal frequency division multiplexing (Orthogonal Frequency Division Multiplexing, OFDM) system, two resource elements (Resource Element, RE) corresponding to the two SRS ports are on a same subcarrier and two different OFDM symbols. In this case, one OFDM symbol may be understood as one time unit, and the two symbols are a time unit set in which the SRS is located.

As shown in (b) in FIG. 8, one SRS includes two SRS ports for which FDM is performed. In one PRB in an OFDM system, two REs corresponding to the two SRS ports are on different subcarriers, and the two SRS ports are on a same OFDM symbol. In this case, one OFDM symbol may be understood as one time unit, and the symbol is a time unit set in which the SRS is located.

As shown in (c) in FIG. 8, one SRS includes four SRS ports for which TDM and FDM are performed in a mixed manner. In one PRB in an OFDM system, four REs corresponding to the four SRS ports are on two subcarriers and two OFDM symbols. In this case, one OFDM symbol may be understood as one time unit, and the two symbols are a time unit set in which the SRS is located.

It should be noted that code division multiplexing (Code Division Multiplexing, CDM) may be further performed for J SRS ports in one SRS based on the foregoing description. To be specific, each SRS port has a code domain resource corresponding to the SRS port, and code domain resources corresponding to different SRS ports are orthogonal. In this case, one SRS port can correspond to a plurality of REs on a time-frequency resource (but a total time-frequency resource corresponding to one SRS remains unchanged), so that the network device can perform channel estimation more accurately.

Optionally, the SRS configuration information may include configuration information of a time domain resource location and configuration information of a frequency domain resource location.

In an implementation, the configuration information of the time domain resource location and/or the configuration information of the frequency domain resource location may be separately configured for each of the K SRSs.

In an implementation, the configuration information of the time domain resource location and/or the configuration information of the frequency domain resource location may be uniformly configured for the K SRSs. For example, a time domain resource and a frequency domain resource of a $1^{st}$ SRS in the K SRSs may be configured, and then a time offset between another SRS and the $1^{st}$ SRS is indicated. A frequency domain resource of the another SRS may be the same as or different from the frequency domain resource of the 1st SRS. If the frequency domain resources are different, the SRS configuration information may further indicate an offset difference between the frequency domain resource of the another SRS and the frequency domain resource of the 1st SRS. For another example, a time domain resource and a frequency domain resource of a 1st SRS in the K SRSs may be configured, and then an offset quantity between a time domain resource of another SRS and the time domain resource of the 1st SRS is indicated, for example, an offset of one time unit or an offset of two time units.

Optionally, the time unit may include a slot or a symbol.

Optionally, the K SRSs may be K SRSs for one periodic SRS in K different cycles. For example, the SRS configuration information may include information indicating that an SRS is a periodic SRS, and the information indicates that the terminal device needs to repeatedly send the SRS once every one or more time units. Subsequently (for example, in S107), the network device may select and measure SRSs received in the K different cycles, to obtain measurement results of the K SRSs, and determine an equivalent downlink channel coefficient matrix based on the measurement results of the K SRSs.

S103a. The network device sends SRS configuration information to the terminal device through the NCR, where the SRS configuration information is used to configure K SRSs and a time unit set in which each SRS is located, to configure K time unit sets, each SRS includes J SRS ports, different SRSs are in different time unit sets, and J is less than or equal to X.

Except that the NCR is emphasized, corresponding expanded content of S103a is the same as corresponding expanded content of S103, and details are not described herein again.

It should be noted that, S103a is a lower concept of S103, that is, S103 includes S103a.

It should be noted that, optionally, for S103, the network device knows only that the network device sends the configuration information to the terminal device, but does not know existence of the NCR. In other words, the network device does not know that the configuration information sent by the network device to the terminal device is forwarded by the NCR.

S 104. The network device indicates the K time unit sets to the NCR, where a $k^{th}$ time unit set in the K time unit sets corresponds to a time unit in which the $k^{th}$ SRS in the K SRSs is located. In addition, the network device indicates to the NCR that the NCR is in an uplink forwarding state in the K time unit sets, and indicates the NCR to perform uplink forwarding in the $k^{th}$ time unit set by using the N service antenna ports and the N donor antenna ports, where the N service antenna ports are a part of the KN service antenna ports, the N donor antenna ports are a part of the KN donor antenna ports, and k is an integer less than or equal to K.

That the NCR performs uplink forwarding in the $k^{th}$ time unit set by using the N service antenna ports and the N donor antenna ports may be understood as follows: In the $k^{th}$ time unit set, the NCR receives information from the terminal device by using the N service antenna ports, and forwards the information to the network device by using the N donor antenna ports. It may also be understood as follows: In the $k^{th}$ time unit set, the NCR performs uplink forwarding by using N uplink forwarding channels.

Optionally, when each of the K time unit sets includes only one time unit, the K time unit sets may also be understood as K time units. The foregoing process may also be understood as that the network device indicates to the NCR that the NCR is in the uplink forwarding state in the K time units, and indicates the NCR to perform uplink forwarding in a $k^{th}$ time unit by using the N service antenna ports and the N donor antenna ports, where the N service antenna ports are a part of the KN service antenna ports, the N donor antenna ports are a part of the KN donor antenna ports, and k is an integer less than or equal to K.

Optionally, that the $k^{th}$ time unit set in the K time unit sets corresponds to the time unit in which the $k^{th}$ SRS in the K SRSs is located includes: The $k^{th}$ time unit set in the K time unit sets is the same as the time unit in which the $k^{th}$ SRS in the K SRSs is located.

Optionally, the time unit in which the $k^{th}$ SRS in the K SRSs is located may be one or more time units.

Optionally, in the K time unit sets, the NCR uses a different service antenna port each time, and the NCR uses a different donor antenna port each time, that is, antenna switching is performed. In addition, in the K time unit sets, all of the KN service antenna ports have been used once by the NCR, and all of the KN donor antenna ports have been used once by the NCR.

Optionally, that all have been used once by the NCR includes: All have been used only once by the NCR, or all have been used at least once by the NCR. When all have been used at least once by the NCR, the network device may obtain a quantity of use times of the NCR, and then perform subsequent calculation processing based on a processing manner such as an average value. Details are not described herein again.

Optionally, in the $k^{th}$ time unit set, uplink forwarding is performed by using the N service antenna ports and the N donor antenna ports, the N donor antenna ports are one-to-one associated with the N service antenna ports, to form N associations, and a set of the N associations forms a first association relationship. Similarly, from the perspective of the K time unit sets, the KN service antenna ports are one-to-one associated with the KN donor antenna ports, to form KN associations, and a set of the KN associations forms a second association relationship. The N donor antenna ports are a part of the KN donor antenna ports, the N service antenna ports are a part of the KN service antenna ports, and the first association relationship is a part of the second association relationship.

Optionally, that one donor antenna port is associated with one service antenna port may be understood as that one donor antenna port is connected to one service antenna port through a forwarding channel. Specifically, when the NCR is in the uplink forwarding state, that one donor antenna port is associated with one service antenna port may be understood as follows: One donor antenna port is connected to one service antenna port through an uplink forwarding channel. That is, the network controlled repeater amplifies, on the uplink forwarding channel, a signal received on one service antenna port, and then transmits the signal to a donor antenna port associated with the service antenna port, to send the signal through the donor antenna port. When the NCR is in a downlink forwarding state, that one donor antenna port is associated with one service antenna port may be understood as follows: One donor antenna port is connected to one service antenna port through a downlink forwarding channel. That is, the network controlled repeater amplifies, on the downlink forwarding channel, a signal received on one donor antenna port, and then transmits the signal to a service antenna port associated with the donor antenna port, to send the signal through the service antenna port.

Optionally, the association includes a connection, the first association relationship includes a first connection relationship, and the second association relationship includes a second connection relationship.

Optionally, the forwarding channel is a logical forwarding channel, and is a logical concept. The logical forwarding channel corresponds to one or more physical forwarding channels.

When the NCR is in the downlink forwarding state, the second association relationship is still maintained between the KN service antenna ports and the KN donor antenna ports. Particularly, when K=1, that is, N=KN, during downlink forwarding, the second association relationship still needs to be maintained between the KN service antenna ports and the KN donor antenna ports, that is, a same uplink-downlink association relationship needs to be maintained, to maintain reciprocity between an uplink channel and a downlink channel.

Using N=2, K=2, and KN=4 as an example, the NCR has four donor antenna ports D0, D1, D2, and D3 and four service antenna ports S0, S1, S2, and S3 in total. In a 1st time unit set, the NCR is in an uplink forwarding state, and the NCR uses two service antenna ports S0 and S1 and two donor antenna ports such as D0 and D1, where S0 is associated with D0, and S1 is associated with D1. A set of two associations: the association between S0 and D0 and the association between S1 and D1, forms the first association relationship. In a 2nd time unit set, the NCR is in an uplink forwarding state, and the NCR uses two service antenna ports S2 and S3 and two donor antenna ports such as D2 and D3, where S2 is associated with D2, and S3 is associated with D3. In other words, generally, in the two time unit sets in uplink forwarding, a set of four associations: the association between S0 and D0, the association between S1 and D1, the association between S2 and D2, and the association between S3 and D3, forms the second association relationship. In a 3rd time unit set, the NCR is in a downlink forwarding state, and uses four donor antenna ports D0, D1, D2, and D3 and four service antenna ports S0, S1, S2, and S3. S0 is associated with D0, S1 is associated with D1, S2 is associated with D2, and S3 is associated with D3. That is, the second association relationship is still maintained. This ensures that impact of the NCR on a channel in the uplink forwarding state and the downlink forwarding state is reciprocal, and further ensures reciprocity between an uplink channel and a downlink channel.

Optionally, the network device may indicate the specific first association relationship and/or second association relationship to the NCR.

Optionally, an $i^{th}$ donor antenna port in the N donor antenna ports is associated with a $j^{th}$ service antenna port in the N service antenna ports in both uplink forwarding and downlink forwarding, a gain coefficient from the $j^{th}$ service antenna port to the $i^{th}$ donor antenna port in uplink forwarding is $a_{i-1}$, a gain coefficient from the $i^{th}$ donor antenna port to the $j^{th}$ service antenna port in downlink forwarding is $a_{i-1}'$, and $a_{i-1}$ and $a_{i-1}'$ satisfy at least one of the following conditions: an amplitude difference between $a_{i-1}$ and $a_{i-1}'$ is less than a first amplitude threshold; and a phase difference between $a_{i-1}$ and $a_{i-1}'$ is less than a first phase threshold, where both i and j are positive integers less than or equal to N. It should be noted that $a_{i-1}$ and $a_{i-1}'$ are merely marking examples, and other marking examples are also allowed, for example, $a_i$ and ai'. A marking manner is not limited in this application.

Optionally, $a_{i-1}$ and $a_{i-1}'$ satisfy at least one of the following conditions: The amplitude difference between $a_{i-1}$ and $a_{i-1}'$ is less than the first amplitude threshold; and the phase difference between $a_{i-1}$ and $a_{i-1}'$ is less than the first phase threshold.

Optionally, the network device may indicate a gain coefficient of each uplink forwarding channel to the NCR. The gain coefficient may be an absolute value, or may be a relative value relative to a gain coefficient at a reference point. The reference point is selected by the network device. A specific selection manner is not limited in this application. The network device may separately indicate the gain coefficient of each uplink forwarding channel, or may uniformly indicate gain coefficients of all uplink forwarding channels.

Optionally, the network device may indicate, to the NCR, that a ratio of the gain coefficient of each uplink forwarding channel is the same as a ratio of a gain coefficient of a corresponding single downlink forwarding channel in the downlink forwarding state.

Optionally, all uplink forwarding channels in the NCR have a same gain coefficient.

Optionally, all uplink forwarding channels in the NCR have a same gain coefficient, and the gain coefficient is the same as a gain coefficient of a corresponding single downlink forwarding channel in the corresponding downlink forwarding state.

Optionally, the uplink forwarding channel is a logical uplink forwarding channel, and is a logical concept. The logical uplink forwarding channel corresponds to one or more physical uplink forwarding channels.

Optionally, when each of the K SRSs is a periodic SRS, and the K SRSs have a same cycle, the $k^{th}$ time unit set may be understood as corresponding to a time unit in which the $k^{th}$ SRS is located in a first cycle. The first cycle may be any cycle. Correspondingly, a $(k+1)^{th}$ time unit set may be understood as corresponding to a time unit in which a $(k+1)^{th}$ SRS is located in the first cycle.

As shown in FIG. 9, the K SRSs include a 1st SRS and a 2nd SRS, and both the 1st SRS and the 2nd SRS are periodic SRSs. A cycle of the 1st SRS is shown in a first row in FIG. 9. (a) in FIG. 9 represents a first cycle of the 1st SRS, (b) in FIG. 9 represents a second cycle of the 1st SRS, (c) in FIG. 9 represents a third cycle of the 1st SRS, ellipses on two sides of the first row in FIG. 9 represent other cycles of the 1st SRS, the 1st SRS is an SRS 0, and the SRS 0 includes an SRS 0 port 0 and an SRS 0 port 1. A cycle of the 2nd SRS is shown in a second row in FIG. 9. (d) in FIG. 9 represents a first cycle of the 2nd SRS, (e) in FIG. 9 represents a second cycle of the 2nd SRS, (f) in FIG. 9 represents a third cycle of the 2nd SRS, ellipses on two sides of the second row in FIG. 9 represent other cycles, the 2nd SRS is an SRS 1, and the SRS 1 includes an SRS 1 port 0 and an SRS 1 port 1. A cycle of the SRS 0 is the same as a cycle of the SRS 1. Optionally, the K SRSs may further include more SRSs, for example, a 3rd SRS, which is not shown in the figure. In (a) and (d) in FIG. 9, the first cycle of the 1st SRS is the same as the first cycle of the 2nd SRS. In (b) and (e) in FIG. 9, the second cycle of the 1st SRS is the same as the second cycle of the 2nd SRS. In (c) and (f) in FIG. 9, the third cycle of the 1st SRS is the same as the third cycle of the 2nd SRS. The same applies to other cases, which are not described one by one.

An example in which k is 1 is used for description. If a time unit in which the 1st SRS is located in the first cycle is a time unit between $t_0$ and $t_1$, the 1st time unit set may be understood as corresponding to the time unit in which the 1st SRS is located in the first cycle, that is, the 1st time unit set may be understood as corresponding to the time unit between $t_0$ and ti. If a time unit in which the 2nd SRS is located in the first cycle is a time unit between ti and $t_2$, the 2nd time unit set may be understood as corresponding to the time unit in which the 2nd SRS is located in the first cycle, that is, the 2nd time unit set may be understood as corresponding to the time unit between ti and $t_2$.

Although the first cycle is shown in FIG. 9, as shown in (a) and (d) in FIG. 9, two other corresponding diagrams in FIG. 9 (for example, (b) and (e) in FIG. 9) may alternatively show the first cycle. This is not limited in this application.

Further, there may be a time interval between any two adjacent cycles in the first cycle, the second cycle, the third cycle, ..., and the like. For example, an interval between the first cycle and the second cycle is 100 milliseconds (ms). In this case, the NCR may perform uplink forwarding in the 1st time unit set (for example, the first cycle) in the first cycle, the second cycle, the third cycle, ..., and the like by using the N donor antenna ports and the N service antenna ports; the NCR may perform uplink forwarding in the 2nd time unit set (for example, the second cycle) in the first cycle, the second cycle, the third cycle, ..., and the like by using N other donor antenna ports and N other service antenna ports; ...; and therefore the NCR may perform uplink forwarding in the first cycle, the second cycle, the third cycle, ..., and the like by using the KN donor antenna ports and the KN service antenna ports. The NCR switches an antenna port and performs antenna switching in any one of the first cycle, the second cycle, the third cycle, ..., and the like. A person skilled in the art understands that the foregoing 100 ms is merely an example, and is not intended to limit the scope of this application.

In a time interval between any two adjacent cycles in the first cycle, the second cycle, the third cycle, ..., and the like, downlink forwarding is performed by using the KN donor antenna ports and the KN service antenna ports or no forwarding is performed.

S105. The terminal device correspondingly sends an SRS based on the SRS configuration information.

Specifically, after receiving the SRS configuration information sent by the network device in S103, the terminal device correspondingly sends the SRS based on the SRS configuration information.

Optionally, the terminal device sends the K SRSs based on time domain resources and frequency domain resources of the K SRSs and a code domain resource corresponding to each port in the K SRSs.

One SRS port is associated with one antenna port of the terminal device. For example, the terminal device sends an SRS 0 port 0 by using an antenna port 0 of the terminal device. In other words, a port 0 of one SRS is associated with the antenna port 0. When the terminal device sends ports with a same number that are of any two SRSs, the two SRSs need to be associated with a same antenna port. For example, the terminal device sends both an SRS 0 port 0 and an SRS 1 port 0 by using an antenna port 0 of the terminal device. In other words, both the SRS 0 port 0 and the SRS 1 port 0 are associated with the port 0.

Optionally, when sending the K SRSs, the terminal device needs to satisfy that a phase difference for sending ports with a same number that are of any two SRSs cannot exceed a first threshold. For example, when the terminal device sends an SRS 0 port 0 and an SRS 1 port 0, a phase difference between the SRS 0 port 0 and the SRS 1 port 0 cannot exceed the first threshold. An example of the first threshold includes 10 degrees, 0.1 radian (RAD), or the like. The first threshold may be preset.

Optionally, when the terminal device sends the K SRSs, the terminal device may send, to the network device, a phase offset between a corresponding port of the 1st SRS and a corresponding port of each subsequent SRS, or a phase offset between a corresponding port of each subsequent SRS and a corresponding port of the 1st SRS. For example, the terminal device reports, to the network device, a phase offset between a port 0 for sending an SRS 1 and a port 0 for sending an SRS 0, a phase offset between a port 0 for sending an SRS 2 and the port 0 for sending the SRS 0, ..., a phase offset between a port 0 for sending an SRS K-1 and the port 0 for sending the SRS 0, a phase offset between a port 1 for sending an SRS 1 and a port 1 for sending the SRS 0, ..., and a phase offset between a port J-1 for sending an SRS K-1 and a port J-1 for sending the SRS 0. In this way, when obtaining an equivalent downlink channel coefficient matrix (that is, an equivalent downlink channel coefficient matrix corresponding to measurement of the K SRSs), the network device needs to add equivalent downlink channel coefficient matrices obtained based on the measurement of the SRSs. Therefore, before the addition, the network device may remove phase offsets of (K-1) subsequent SRSs that are reported by the terminal device, so that the obtained equivalent downlink channel coefficient matrix is more accurate.

S106. The NCR is in the uplink forwarding state in the K time unit sets, and performs uplink forwarding in the $k^{th}$ time unit set by using the N donor antenna ports in the KN donor antenna ports and the N service antenna ports in the KN service antenna ports, where the NCR uses different antenna ports in different time unit sets.

Optionally, in a same time unit set, the NCR uses a same antenna port, that is, the N donor antenna ports used by the NCR are the same, and the N service antenna ports used by the NCR are the same.

That the NCR uses different antenna ports in different time unit sets includes: In different time unit sets, the NCR uses different donor antenna ports, and the NCR uses different service antenna ports. The "different" herein refers to "completely different" and "do not coincide".

It should be noted that S105 and S106 may be performed simultaneously, and there is no sequence difference. Specifically, in S105 and S106, in a same time unit set, the SRS sent in S 105 is exactly received and forwarded by the NCR in S106.

Optionally, each donor antenna port is associated with one service antenna port.

Optionally, each service antenna port is associated with one donor antenna port.

Optionally, when the NCR is in the downlink forwarding state, the KN service antenna ports are one-to-one associated with the KN donor antenna ports. To be specific, each of the KN service antenna ports is associated with one of the KN donor antenna ports, and each of the KN donor antenna ports is also associated with one of the KN service antenna ports. In addition, an association relationship (that is, the second association relationship) between the KN donor antenna ports and the KN service antenna ports of the NCR in the uplink forwarding state is the same as an association relationship between the KN donor antenna ports and the KN service antenna ports of the NCR in the downlink forwarding state.

In this case, if any donor antenna port $D_i$ in the KN donor antenna ports is associated with one service antenna port $S_j$ in the KN service antenna ports, a phase difference between the donor antenna port $D_i$ and the service antenna port $S_j$ needs to be fixed in the uplink forwarding state and the downlink forwarding state. Because the donor antenna port $D_i$ is any donor antenna port $D_i$, and the service antenna port $S_j$ is one service antenna port associated with the donor antenna port $D_i$, in essence, phase differences between any donor antenna port and any service antenna port that are associated need to be the same in the uplink forwarding state and the downlink forwarding state. In this way, reciprocity between an uplink forwarding channel and a downlink forwarding channel can be ensured. An association relationship between the donor antenna port $D_i$ and the service antenna port $S_j$ may be determined by the NCR, and does not need to be fed back or notified to the network device and/or the terminal device.

S107. The network device correspondingly receives and measures the SRS, to finally obtain measurement results of the K SRSs, and determines an equivalent downlink channel coefficient matrix based on the measurement results of the K SRSs. The equivalent downlink channel coefficient matrix is a downlink channel coefficient matrix from the network device to the terminal device through the NCR when the NCR is in the downlink forwarding state and uses the KN donor antenna ports and the KN service antenna ports.

Optionally, the network device correspondingly receives and measures the SRS. After obtaining a measurement result of the 1st SRS in the measurement results of the K SRSs, the network device may determine a first equivalent downlink channel coefficient matrix corresponding to the measurement result of the 1st SRS; after obtaining a measurement result of the 2nd SRS in the measurement results of the K SRSs, the network device may determine a second equivalent downlink channel coefficient matrix corresponding to the measurement result of the 2nd SRS; ...; and after obtaining a measurement result of a $K^{th}$ SRS in the measurement results of the K SRSs, the network device may determine a $K^{th}$ equivalent downlink channel coefficient matrix corresponding to the measurement result of the $K^{th}$ SRS. Then, K equivalent downlink channel coefficient matrices are added to obtain an overall equivalent downlink channel coefficient matrix, namely, an equivalent downlink channel coefficient matrix determined based on the measurement results of the K SRSs.

Optionally, the network device correspondingly receives and measures the SRS. After obtaining all the measurement results of the K SRSs, the network device may sequentially determine equivalent downlink channel coefficient matrices corresponding to measurement results of SRSs in the measurement results of the K SRSs, and then perform addition to obtain an overall equivalent downlink channel coefficient matrix, namely, an equivalent downlink channel coefficient matrix determined based on the measurement results of the K SRSs.

It should be noted that, when there is no modifier such as each, first, second, or $K^{th}$, the equivalent downlink channel coefficient matrix in this application means the overall equivalent downlink channel coefficient matrix, namely, an equivalent downlink channel coefficient matrix used when the network controlled repeater performs downlink forwarding by using the KN donor antenna ports and the KN service antenna ports.

When the NCR performs downlink forwarding, channels formed between the KN donor antenna ports and the KN service antenna ports that are used correspond to KN downlink forwarding channels.

Optionally, after S107, the network device may send downlink control information or data information to the terminal device. In this case, the NCR may perform forwarding by using the KN downlink forwarding channels. In this case, the NCR is in the downlink forwarding state. In this case, the KN service antenna ports of the NCR are one-to-one associated with the KN donor antenna ports of the NCR. To be specific, each of the KN service antenna ports is associated with one of the KN donor antenna ports, and each of the KN donor antenna ports is also associated with one of the KN service antenna ports. A set of KN associations maintains the second association relationship.

Optionally, when the network device sends the downlink control information or data information to the terminal device, the network device may not know existence of the NCR and forwarding by the NCR.

Optionally, a ratio of the gain coefficient of each downlink forwarding channel in the NCR is the same as a ratio of a gain coefficient of a corresponding single uplink forwarding channel in the uplink forwarding state.

Optionally, a gain coefficient of each downlink forwarding channel in the NCR and a gain coefficient of a corresponding single uplink forwarding channel in the uplink forwarding state satisfy at least one of the following conditions: A difference between an amplitude of the gain coefficient of each downlink forwarding channel in the NCR and an amplitude of the gain coefficient of the corresponding single uplink forwarding channel in the uplink forwarding state is less than a first amplitude threshold; and a difference between a phase of the gain coefficient of each downlink forwarding channel in the NCR and a phase of the gain coefficient of the corresponding single uplink forwarding channel in the uplink forwarding state is less than a first phase threshold.

Optionally, all downlink forwarding channels in the NCR have a same gain coefficient.

Optionally, all downlink forwarding channels in the NCR have a same gain coefficient, and the gain coefficient is the same as a gain coefficient of a corresponding single uplink forwarding channel in the corresponding uplink forwarding state.

To further clearly describe rationality of the technical solution corresponding to FIG. 7A and FIG. 7B, the following further describes a principle with reference to FIG. 10(a) and FIG. 10(b). For example, FIG. 10(a) and FIG. 10(b) are a diagram of principle verification in Embodiment 1 of a communication method according to an embodiment of this application.

It should be noted that, for ease of description, in FIG. 10(a) and FIG. 10(b), an $i^{th}$ donor antenna port in the N donor antenna ports and a $j^{th}$ service antenna port in the N service antenna ports are associated in both uplink forwarding and downlink forwarding, and an example in which a gain coefficient from the $i^{th}$ donor antenna port to the $j^{th}$ service antenna port in uplink forwarding is the same as a gain coefficient from the $j^{th}$ service antenna port to the $i^{th}$ donor antenna port in downlink forwarding is used for description. For example, if a donor antenna port $D_0$ is associated with a service antenna port $S_0$ in both uplink forwarding and downlink forwarding, a gain coefficient $a_0'$ from the donor antenna port $D_0$ to the service antenna port $S_0$ in uplink forwarding and a gain coefficient $a_0$ from the service antenna port $S_0$ to the donor antenna port $D_0$ in downlink forwarding are the same, and both are represented by $a_0$ below. It should be noted that $a_0$ and $a_0'$ are merely marking examples, and other marking examples are also allowed, A marking manner is not limited in this application.

As shown in FIG. 10(a) and FIG. 10(b), the terminal device has two uplink channels and two downlink channels, and correspondingly has two antenna ports $T_0$ and $T_1$. The NCR is configured with 2T4R, namely, two uplink forwarding channels and four downlink forwarding channels. When the NCR is in a downlink forwarding state, the four downlink forwarding channels correspond to four donor antenna ports $D_0$ to $D_3$ and four service antenna ports $S_0$ to $S_3$. The antenna port $D_0$ of the NCR is associated with the antenna port $S_0$ of the NCR, and a channel gain coefficient is $a_0$. The antenna port $D_1$ of the NCR is associated with the antenna port $S_1$ of the NCR, and a channel gain coefficient is $a_1$. The antenna port $D_2$ of the NCR is associated with the antenna port $S_2$ of the NCR, and a channel gain coefficient is $a_2$. The antenna port $D_3$ of the NCR is associated with the antenna port $S_3$ of the NCR, and a channel gain coefficient is $a_3$. When the NCR is in an uplink forwarding state, in one time unit set (for example, a time unit set including a slot 0), the two uplink forwarding channels correspond to two donor antenna ports and two service antenna ports, and the two donor antenna ports and the two service antenna ports are respectively two donor antenna ports (for example, $D_0$ and $D_1$) in

the four donor antenna ports $D_0$ to $D_3$ and two service antenna ports (for example, $S_0$ and Si) in the four service antenna ports $S_0$ to $S_3$. The antenna port $S_0$ of the NCR is associated with the antenna port $D_0$ of the NCR, and a channel gain coefficient is also $a_0$. The antenna port $S_1$ of the NCR is associated with the antenna port $D_1$ of the NCR, and a channel gain coefficient is also $a_1$. In another same time unit set (for example, a time unit set including a slot 1), the two uplink forwarding channels correspond to two remaining donor antenna ports (for example, $D_2$ and $D_3$) in the four donor antenna ports $D_0$ to $D_3$ and two remaining service antenna ports (for example, $S_2$ and $S_3$) in the four service antenna ports $S_0$ to $S_3$. The antenna port $S_2$ of the NCR is associated with the antenna port $D_2$ of the NCR, and a channel gain coefficient is also $a_2$. The antenna port $S_3$ of the NCR is associated with the antenna port $D_3$ of the NCR, and a channel gain coefficient is also $a_3$.

In other words, the NCR uses four downlink forwarding channels in the downlink forwarding state, and the NCR performs uplink forwarding by using two time unit sets (for example, because a quantity of downlink forwarding channels of the NCR is twice a quantity of uplink forwarding channels of the NCR) in the uplink forwarding state. An association relationship between a donor antenna port and a service antenna port is the same as that in downlink forwarding, and a gain coefficient of a corresponding channel is also the same as that in downlink forwarding. The network device has one antenna port $A_0$. Each time unit set includes a same quantity of time units. For example, the time unit may be a slot or a symbol. In FIG. 10(a) and FIG. 10(b), one time unit set includes one slot.

It should be noted that the network device may alternatively have more antenna ports. In addition/Alternatively, the NCR may be configured with XTYR, namely, X uplink forwarding channels and Y downlink forwarding channels, where X is not 2 or Y is not 4. In addition/Alternatively, each time unit set may include L time units, where L is not 1.

Optionally, Y is K times X, and K is a positive integer greater than 1. Optionally, Y is greater than K times of X and less than (K+1) times of X, where K is a positive integer greater than 1.

It should be noted that, the quantity of antenna ports of the network device, the quantity of uplink forwarding channels and the quantity of downlink forwarding channels of the NCR, the quantity of uplink channels and the quantity of downlink channels of the terminal device, and the quantity of time units included in each time unit set that are shown in FIG. 10(a) and FIG. 10(b) are merely examples, are used as examples for ease of describing the principle of Embodiment 1, and do not constitute a limitation on the scope of Embodiment 1 of this application.

As shown in FIG. 10(a) and FIG. 10(b), downlink channel gain coefficients from the antenna port $A_0$ of the network device to the antenna ports $D_0$, $D_1$, $D_2$, and $D_3$ of the NCR are respectively $f_0$, $f_1$, $f_2$, and $f_3$. A channel gain coefficient from the antenna port $D_0$ of the NCR to the antenna port $S_0$ of the NCR is $a_0$, a channel gain coefficient from the antenna port $D_1$ of the NCR to the antenna port $S_1$ of the NCR is $a_1$, a channel gain coefficient from the antenna port $D_2$ of the NCR to the antenna port $S_2$ of the NCR is $a_2$, and a channel gain coefficient from the antenna port $D_3$ of the NCR to the antenna port $S_3$ of the NCR is $a_3$. Downlink channel gain coefficients from the antenna port $S_0$ of the NCR to the antenna ports $T_0$ and $T_1$ of the terminal device are respectively $g_{0,0}$ and $g_{0,1}$, downlink channel gain coefficients from the antenna port $S_1$ of the NCR to the antenna ports $T_0$ and $T_1$ of the terminal device are respectively $g_{1,0}$ and $g_{1,1}$, downlink channel gain coefficients from the antenna port $S_2$ of the NCR to the antenna ports $T_0$ and $T_1$ of the terminal device are respectively $g_{2,0}$ and $g_{2,1}$, and downlink channel gain coefficients from the antenna port $S_3$ of the NCR to the antenna ports $T_0$ and $T_1$ of the terminal device are respectively $g_{3,0}$ and $g_{3,1}$.

As shown in FIG. 10(a), because the NCR performs downlink forwarding on all the four channels in the downlink forwarding state, an equivalent downlink channel coefficient matrix H0 may be expressed as a superposition of gain coefficients of all downlink channels, and specifically, is an equivalent downlink channel coefficient matrix

$$H0 = [\sum_{i=0}^{3} f_i a_i g_{i,0}, \sum_{i=0}^{3} f_i a_i g_{i,1}]$$

.

As shown in FIG. 10(b), only two service antenna ports and two donor antenna ports of the NCR in the uplink forwarding state participate in uplink forwarding in each time unit set. For example, the network device indicates the NCR to perform forwarding in two slots: a slot 0 and a slot 1 (each slot forms one time unit set), by using different combinations of two service antenna ports and two donor antenna ports. Specifically, in the slot 0, uplink forwarding is performed by using the service antenna ports $S_0$ and $S_1$ and the donor antenna ports $D_0$ and $D_1$; and in the slot 1, uplink forwarding is performed by using the service antenna ports $S_2$ and $S_3$ and the donor antenna ports $D_2$ and $D_3$. In this case, an uplink channel coefficient matrix H1 may be expressed as a superposition of channel coefficient matrices in forwarding through different antenna ports. For example, the network device may determine, through SRS measurement in the slot 0, an uplink channel coefficient matrix h0 obtained when the NCR uses the antenna ports D0 and S0 and D1 and S1, and the network device may determine, through SRS measurement in the slot 1, an uplink channel coefficient matrix h1 obtained when the NCR uses the antenna ports D2 and S2 and D3 and S3. Specifically, h0=[$f_0 a_0 g_{0,0}$ +$f_1 a_1 g_{1,0}$, $f_0 a_0 g_{0,1}$ +$f_1 a_1 g_{1,1}$] and h1=[$f_2 a_2 g_{2,0}$ +$f_3 a_3 g_{3,0}$, $f_2 a_2 g_{2,1}$ +$f_3 a_3 g_{3,1}$]. Then, the network device may add the two uplink channel coefficient matrices to determine an equivalent downlink channel coefficient matrix, that is, *H*1 = h0+h1. Therefore,

$$H1 = [f_0 a_0 g_{0,0} + f_1 a_1 g_{1,0}, \; f_0 a_0 g_{0,1} + f_1 a_1 g_{1,1}] + [f_2 a_2 g_{2,0} + f_3 a_3 g_{3,0}, \; f_2 a_2 g_{2,1} + f_3 a_3 g_{3,1}] = [\sum_{i=0}^{3} f_i a_i g_{i,0}, \sum_{i=0}^{3} f_i a_i g_{i,1}]$$ can

be obtained.

It can be learned from the foregoing that, the equivalent downlink channel coefficient matrix H0 is the same as a superposition result of uplink channel coefficient matrices in time unit sets in the uplink state. A quantity of time unit sets is indicated by the network device, and the network device determines the quantity of time unit sets based on a ratio of the quantity of downlink forwarding channels to the quantity of uplink forwarding channels of the NCR. Therefore, when the quantity of uplink forwarding channels and the quantity of downlink forwarding channels of the NCR are different, the equivalent downlink channel coefficient matrix H0 may also be obtained based on a superposition of the uplink channel coefficient matrices in all the time unit sets in the uplink state.

In Embodiment 1, when the quantity of uplink forwarding channels and the quantity of downlink forwarding channels of the NCR are different, and the quantity of uplink channels and the quantity of downlink channels of the terminal device are the same, the network device may also obtain an accurate equivalent downlink channel coefficient matrix. In addition, the uplink forwarding channel of the NCR does not need to be adjusted, and the existing uplink forwarding channel and downlink forwarding channel of the NCR are still used. Compared with that in a manner in which the NCR is replaced (for example, the quantity of uplink forwarding channels is increased so that the quantity of uplink forwarding channels and the quantity of downlink forwarding channels are consistent), costs are relatively low.

**Embodiment 2**

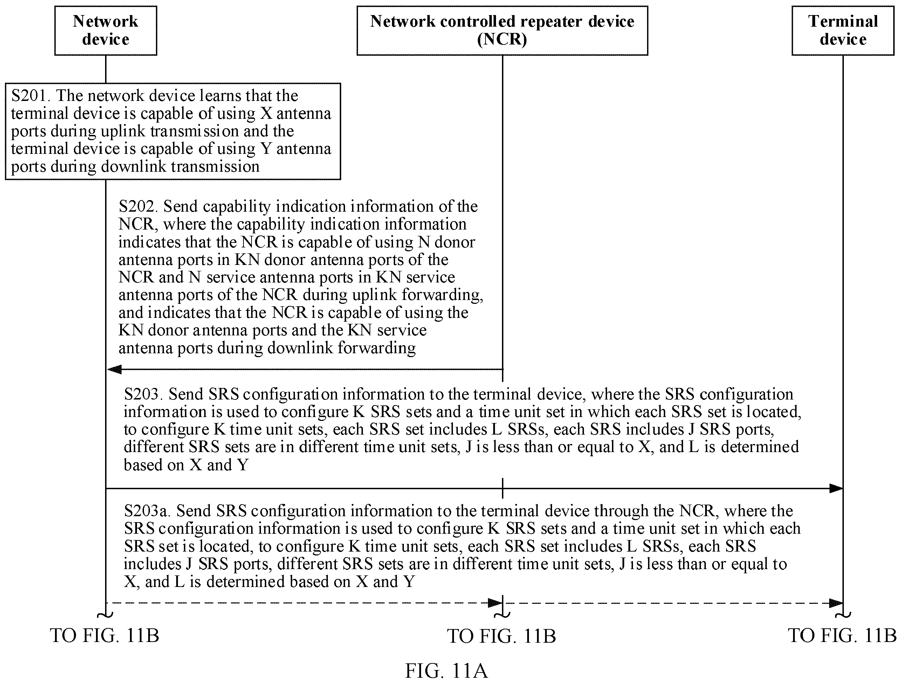

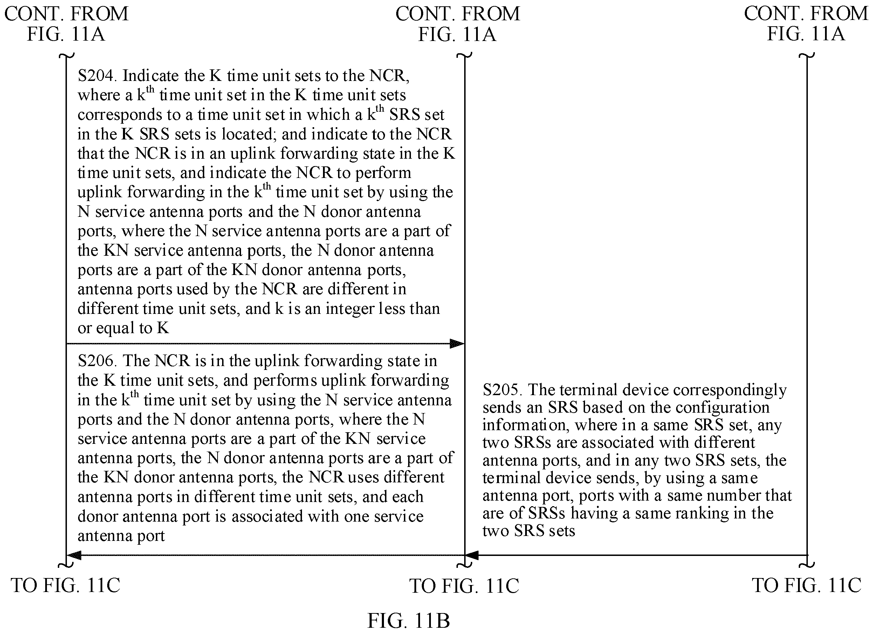

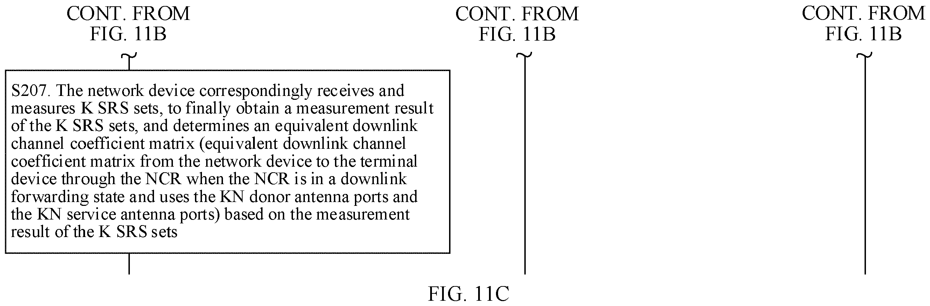

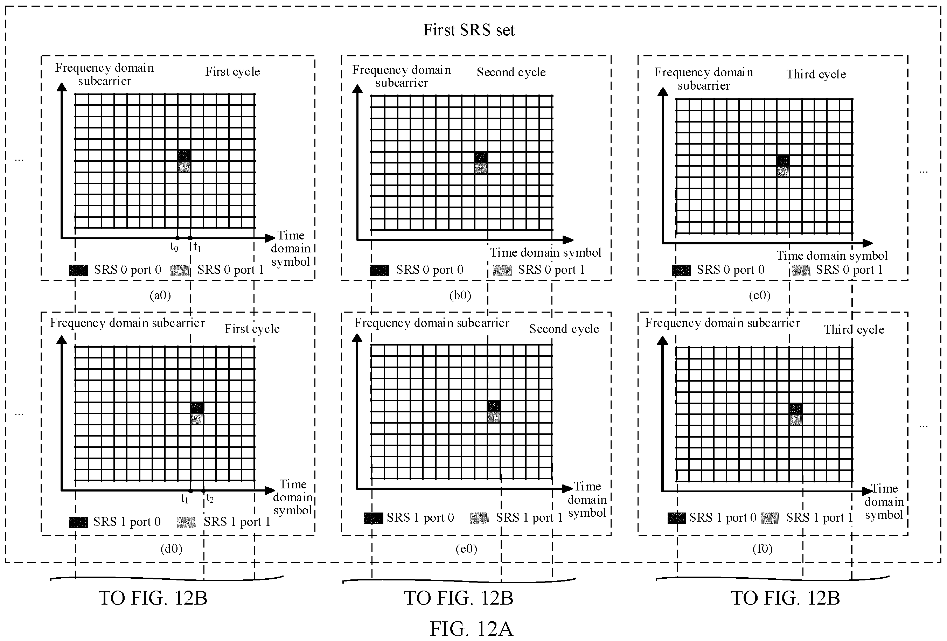

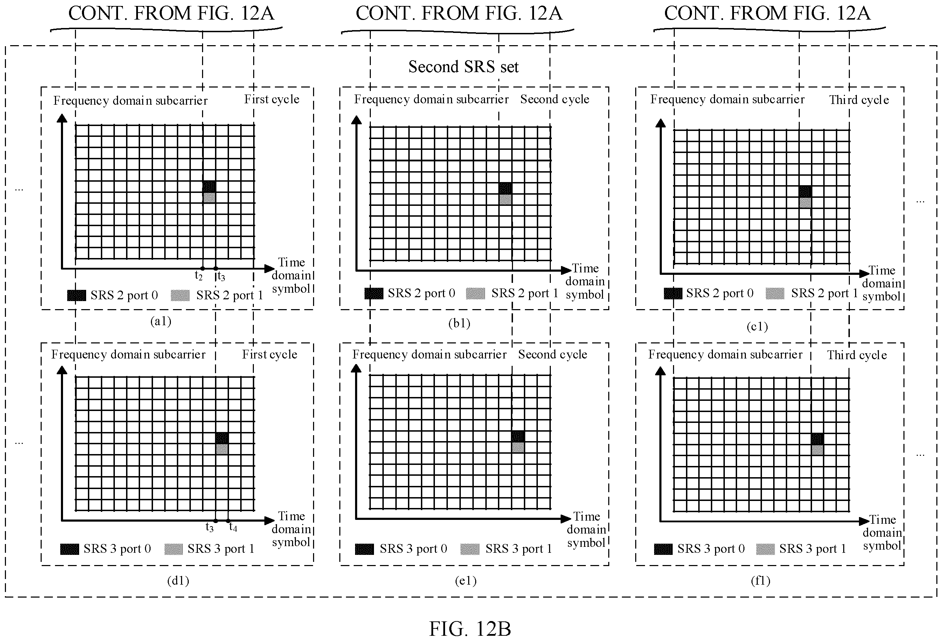

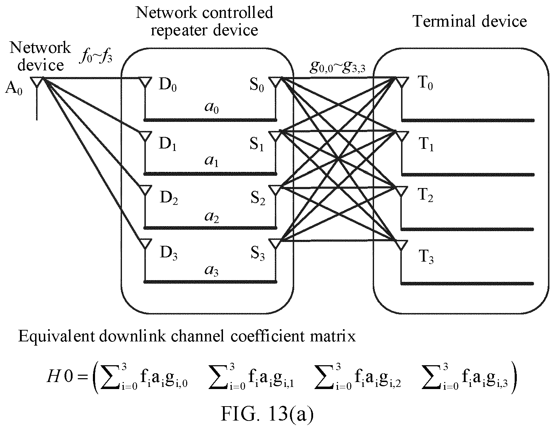

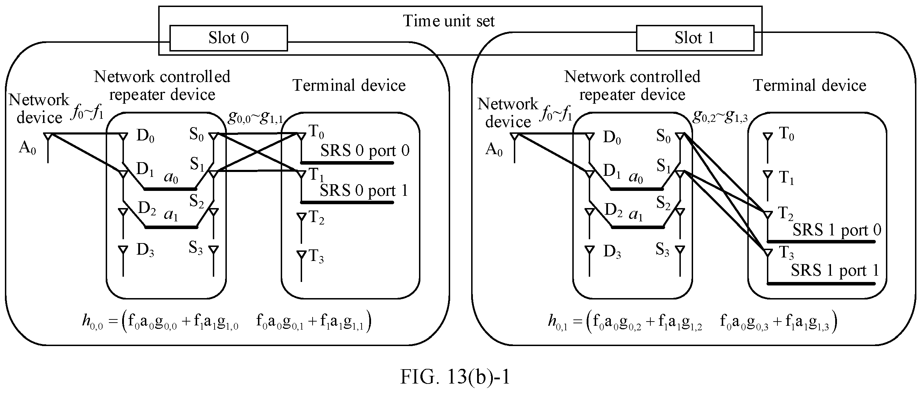

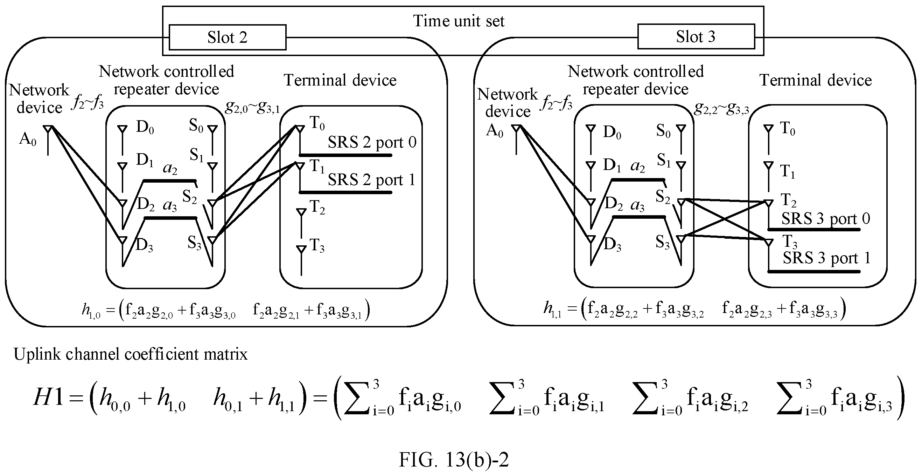

This application further provides Embodiment 2. Embodiment 2 of this application relates to FIG. 11A to FIG. 11C to FIG. 13(a) to FIG. 13(b)-2 and FIG. 8. FIG. 11A to FIG. 11C are a schematic flowchart of Embodiment 2 of a communication method according to an embodiment of this application. FIG. 12A and FIG. 12B are a diagram of a resource configuration in which a sounding reference signal SRS set is a periodic SRS set. FIG. 13(a) to FIG. 13(b)-2 are a diagram of principle verification in Embodiment 2 of a communication method according to an embodiment of this application. FIG. 8 is a diagram of a resource configuration of a sounding reference signal SRS in a physical resource block PRB. A network controlled repeater NCR includes KN donor antenna ports and KN service antenna ports. The KN donor antenna ports and the KN service antenna ports may be all or some antenna ports of the NCR. As shown in FIG. 11A to FIG. 11C, the method includes the following steps.

S201. A network device learns that a terminal device is capable of using X antenna ports during uplink transmission and the terminal device is capable of using Y antenna ports during downlink transmission.

In an implementation, the terminal device sends a capability of the terminal device to the network device. The capability may be sent in a manner of indication information. The capability includes that the terminal device is capable of using X antenna ports during uplink transmission and is capable of using Y antenna ports during downlink transmission. X is a positive integer less than or equal to Y

In other words, X may also be understood as a quantity of antenna ports that can be used by the terminal device during single uplink sending, and Y may also be understood as a quantity of antenna ports that can be used by the terminal device during single downlink receiving. Therefore, learning of the network device may be implemented as follows: The terminal device sends capability indication information of the terminal device to the network device, where the capability indication information indicates that the terminal device is capable of using X antenna ports during uplink transmission and is capable of using Y antenna ports during downlink transmission.

It may be understood that the terminal device is capable of using X antenna ports to send a signal (for example, an SRS) during uplink transmission, and is capable of using Y antenna ports to receive a signal during downlink transmission. Alternatively, the terminal device is capable of simultaneously using X antenna ports to send a signal (for example, an SRS) during uplink transmission, and is capable of simultaneously using Y antenna ports to receive a signal during downlink transmission. However, when the X antenna ports are used to send a signal, the Y antenna ports cannot be used to receive a signal at the same time.

Optionally, when the terminal device sends the capability indication information of the terminal device to the network device, the capability indication information indicates that the terminal device has an XTYR capability. To be specific, the terminal device can use Y antenna ports for receiving in downlink transmission and use X antenna ports for sending in uplink transmission. The X antenna ports are a part of the Y antenna ports, and Y is related to a quantity of all or some receive antenna ports of the terminal device. X is a positive integer less than or equal to Y

In an implementation, the network device may learn of the capability of the terminal device through another device. For example, after obtaining the capability of the terminal device, the another device provides the capability of the terminal device for the network device. The capability includes that the terminal device is capable of using X antenna ports during uplink transmission and the terminal device is capable of using Y antenna ports during downlink transmission. X is a positive integer less than or equal to Y

Optionally, the network device determines L based on X and Y For example, L=Y/X, or L is a result of rounding up a quotient of Y/X, or L is a result of rounding down a quotient of Y/X. A manner in which the network device determines L based on X and Y is not limited to the foregoing example manner. This is not limited in this application.

Optionally, S201 may be a static expression. In other words, S201 may be a statically limited step other than the method steps in this embodiment of this application.

Alternatively, the X antenna ports in the foregoing implementation or optional manner of S201 may be replaced with X uplink channels. The Y antenna ports in the foregoing implementation or optional manner of S201 may be replaced with Y downlink channels.

S202. The network controlled repeater NCR sends capability indication information of the NCR to the network device, where the capability indication information indicates that the NCR is capable of using N donor antenna ports in the KN donor antenna ports of the NCR and N service antenna ports in the KN service antenna ports of the NCR during uplink forwarding, and indicates that the NCR is capable of using the KN donor antenna ports and the KN service antenna ports during downlink forwarding.

In other words, the capability indication information indicates, to the network device, that during downlink forwarding, the NCR can use the KN donor antenna ports to receive information sent by the network device, and use the KN service antenna ports to forward the information to the terminal device; and during uplink forwarding, the NCR can use the N service antenna ports to receive information sent by the terminal device, and use the N donor antenna ports to forward the information to the network device, where the N donor antenna ports used in uplink forwarding are N donor antenna ports in the KN donor antenna ports used in downlink forwarding, and the N service antenna ports used in uplink forwarding are N service antenna ports in the KN service antenna ports used in downlink forwarding.

The KN donor antenna ports and the KN service antenna ports correspond to KN downlink forwarding channels, and the N donor antenna ports and the N service antenna ports correspond to N uplink forwarding channels.

Optionally, S202 may be a static expression. In other words, S202 may be a statically limited step other than the method steps in this embodiment of this application.

S203. The network device sends SRS configuration information to the terminal device, where the SRS configuration information is used to configure K SRS sets and a time unit set in which each SRS set is located, to configure K time unit sets, each SRS set includes L SRSs, each SRS includes J SRS ports, different SRS sets are in different time unit sets, J is less than or equal to X, and L is determined based on X and Y

Optionally, the SRS configuration information is further used to configure a time unit in which each SRS port is located.

Optionally, different ports of a same SRS are in a same time unit, or different ports of a same SRS are in different time units.

Optionally, the SRS configuration information is further used to configure a frequency unit corresponding to each SRS or each SRS port.

Optionally, the SRS configuration information is further used to configure a code domain resource corresponding to each SRS or each SRS port.

Optionally, the SRS configuration information is further used to configure KL SRSs.

Optionally, the SRS configuration information is further used to configure KLJ SRS ports.

Alternatively, S203 may be replaced with: The network device sends SRS configuration information to the terminal device, where the SRS configuration information is used to configure KL SRSs and a time unit in which each SRS or each SRS port is located, each SRS includes J SRS ports, different SRSs are in different time units, J is less than or equal to X, and L is determined based on X and Y In this case, the $k^{th}$ SRS set in embodiments of this application should be understood as a $[(k-1)L+1]^{th}$ SRS to a $(kL)^{th}$ SRS in the KL SRSs. Correspondingly, the $k^{th}$ time unit set should be understood as a time unit in which the $[(k-1)L+1]^{th}$ SRS to the $(kL)^{th}$ SRS in the KL SRSs are located.

In an implementation, the SRS configuration information may include K SRS set IDs. Each SRS set ID corresponds to one SRS set, each SRS set includes L SRSs, each SRS includes J SRS ports and a time unit, a frequency unit, and a code domain resource that are corresponding to each SRS port, J is less than or equal to X, and L is determined based on X and Y

Optionally, the SRS configuration information may further include KLJ frequency units respectively corresponding to the KLJ SRS ports, and each SRS port corresponds to one frequency unit.

Optionally, L is determined based on X and Y For example, L=Y/X, or L is a result of rounding up a quotient of Y/X, or L is a result of rounding down a quotient of Y/X. A manner of determining L based on X and Y is not limited to the foregoing example manner. This is not limited in this application.

Optionally, time-frequency resources respectively corresponding to the J SRS ports may be obtained through FDM. In this case, J ports of one SRS correspond to time units at a same location and frequency units at different locations.

Optionally, time-frequency resources respectively corresponding to the J SRS ports may be obtained through TDM. In this case, J ports of one SRS correspond to time domain resources at different locations and frequency domain resources at a same location. Alternatively, time-frequency resources respectively corresponding to the J SRS ports may be obtained through FDM and TDM in a mixed manner. In this case, J ports of one SRS correspond to time domain resources whose locations are not completely the same and frequency domain resources whose locations are not completely the same.

As shown in (a) in FIG. 8, one SRS includes two SRS ports for which TDM is performed. In one physical resource block (Physical Resource Block, PRB) in an orthogonal frequency division multiplexing (Orthogonal Frequency Division Multiplexing, OFDM) system, two resource elements (Resource Element, RE) corresponding to the two SRS ports are on a same subcarrier and different OFDM symbols. In this case, one OFDM symbol may be understood as one time unit, and the two symbols are a time unit set in which the SRS is located.

As shown in (b) in FIG. 8, one SRS includes two SRS ports for which FDM is performed. In one PRB in an OFDM system, two REs corresponding to the two SRS ports are on different subcarriers, and the two SRS ports are on a same OFDM symbol. In this case, one OFDM symbol may be understood as one time unit, and the symbol is a time unit set in which the SRS is located.

As shown in (c) in FIG. 8, one SRS includes four SRS ports for which TDM and FDM are performed in a mixed manner. In one PRB in an OFDM system, four REs corresponding to the four SRS ports are on two subcarriers and two OFDM symbols. In this case, one OFDM symbol may be understood as one time unit, and the two symbols are a time unit set in which the SRS is located.

It should be noted that code division multiplexing (Code Division Multiplexing, CDM) may be further performed on J SRS ports in one SRS based on the foregoing description. To be specific, each SRS port has a code domain resource corresponding to the SRS port, and code domain resources corresponding to different SRS ports are orthogonal. In this case, one SRS port can correspond to a plurality of REs on a time-frequency resource (but a total time-frequency resource corresponding to one SRS remains unchanged), so that the network device can perform channel estimation more accurately.

Optionally, the KL SRSs may be K SRSs for one periodic SRS in KL different cycles. For example, the SRS configuration information may include information indicating that an SRS is a periodic SRS. The information indicates to repeatedly send the SRS once every one or more time units. The SRS is sent at least KL times in total, to form at least KL SRSs. Subsequently (for example, in S207), the network device may select and measure SRSs received in the KL different cycles, to obtain measurement results of the KL SRSs, and determine an equivalent downlink channel coefficient matrix based on the measurement results of the KL SRSs.

Optionally, the SRS configuration information may include configuration information of a time unit location and configuration information of a frequency unit location.

In an implementation, the configuration information of the time unit location and/or the configuration information of the frequency unit location may be separately configured for each of the KL SRSs.

In an implementation, the configuration information of the time unit location and/or the configuration information of the frequency unit location may be uniformly configured for the KL SRSs. For example, a time unit and a frequency unit of a 1st SRS in the KL SRSs may be configured, and then a time offset between another SRS and the 1st SRS is indicated. A frequency unit of the another SRS may be the same as or different from the frequency unit of the 1st SRS. If the frequency units are different, the SRS configuration information may further indicate an offset difference between the frequency unit of the another SRS and the frequency unit of the 1st SRS. For another example, a time unit and a frequency unit of a 1st SRS in the KL SRSs may be configured, and then an offset quantity between a time unit of another SRS and the time unit of the 1st SRS is indicated, for example, an offset of one time unit or an offset of two time units.

Optionally, the configuration information of the time unit location and/or the configuration information of the frequency unit location may be uniformly configured for any SRS set in the K SRS sets. For example, a time unit and a frequency unit of a 1st SRS in any SRS set may be configured, and then a time offset between another SRS in the SRS set and the 1st SRS is indicated. A frequency unit of the another SRS in the SRS set may be the same as or different from the frequency unit of the 1st SRS. If the frequency units are different, the SRS configuration information may further indicate an offset difference between the frequency unit of the another SRS in the SRS set and the frequency unit of the 1st SRS. For another example, a time unit and a frequency unit of a 1st SRS in any SRS set may be configured, and then an offset quantity between a time unit of another SRS in the SRS set and the time unit of the 1st SRS is indicated, for example, an offset of one time unit or an offset of two time units.

Optionally, the time unit may be a slot or a symbol.

Optionally, the K SRS sets may be K SRS sets for one periodic SRS set in K different cycles. For example, the SRS configuration information may include information indicating that an SRS set is a periodic SRS set, and the information indicates that the terminal device needs to repeatedly send L SRSs in the SRS set once every one or more time units. Subsequently (for example, in S207), the network device may select and measure SRSs received in the K different cycles, to obtain measurement results of the KL SRSs, and determine an equivalent downlink channel coefficient matrix based on the measurement results of the KL SRSs.

S203a. The network device sends SRS configuration information to the terminal device through the NCR, where the SRS configuration information is used to configure K SRS sets and a time unit set in which each SRS set is located, to configure K time unit sets, each SRS set includes L SRSs, each SRS includes J SRS ports, different SRS sets are in different time unit sets, J is less than or equal to X, and L is determined based on X and Y

Except that the NCR is emphasized, corresponding expanded content of S203a is the same as corresponding expanded content of S203, and details are not described herein again.

It should be noted that, S203a is a lower concept of S203, that is, S203 includes S203a.

It should be noted that, optionally, for S203, the network device knows only that the network device sends the SRS configuration information to the terminal device, but does not know existence of the NCR. In other words, the network device does not know that the SRS configuration information sent by the network device to the terminal device is forwarded by the NCR.

S204. The network device indicates the K time unit sets to the NCR, where a $k^{th}$ time unit set in the K time unit sets corresponds to a time unit set in which a $k^{th}$ SRS set in the K SRS sets is located. In addition, the network device indicates to the NCR that the NCR is in an uplink forwarding state in the K time unit sets, and indicates the NCR to perform uplink forwarding in the $k^{th}$ time unit set by using N uplink forwarding channels, where the N service antenna ports are a part of the KN service antenna ports, the N donor antenna ports are a part of the KN donor antenna ports, antenna ports used by the NCR are different in different time unit sets, and k is an integer less than or equal to K.

Optionally, that the $k^{th}$ time unit set in the K time unit sets corresponds to the time unit in which the $k^{th}$ SRS set in the K SRS sets is located includes: The $k^{th}$ time unit set in the K time unit sets is the same as the time unit in which the $k^{th}$ SRS set in the K SRS sets is located.

Optionally, the time unit in which the $k^{th}$ SRS set in the K SRS sets is located may be one or more time units.

Optionally, that the NCR performs uplink forwarding in the $k^{th}$ time unit set by using the N uplink forwarding channels includes: The NCR performs, in the $k^{th}$ time unit set, uplink forwarding by using N service antenna ports used for receiving and N donor antenna ports used for sending. In any two of the K time unit sets, service antenna ports used by the NCR are different, and donor antenna ports used by the NCR are different.

Optionally, in the $k^{th}$ time unit set, uplink forwarding is performed by using the N service antenna ports and the N donor antenna ports, the N donor antenna ports are one-to-one associated with the N service antenna ports, to form N associations, and a set of the N associations forms a first association relationship. Similarly, from the perspective of the K time unit sets, the KN service antenna ports are one-to-one associated with the KN donor antenna ports, to form KN associations, and a set of the KN associations forms a second association relationship. The N donor antenna ports are a part of the KN donor antenna ports, the N service antenna ports are a part of the KN service antenna ports, and the first association relationship is a part of the second association relationship.

In addition, in the K time unit sets, all of the KN service antenna ports have been used once by the NCR, and all of the KN donor antenna ports have been used once by the NCR.

Optionally, that all have been used once by the NCR includes: All have been used only once by the NCR, or all have been used at least once by the NCR. When all have been used at least once by the NCR, the network device may obtain a quantity of use times of the NCR, and then perform subsequent calculation processing based on a processing manner such as an average value. Details are not described herein again.

When the NCR is in the downlink forwarding state, the KN service antenna ports are one-to-one associated with the KN donor antenna ports. To be specific, each of the KN service antenna ports is associated with one of the KN donor antenna ports, and each of the KN donor antenna ports is also associated with one of the KN service antenna ports. A set of KN associations still forms the second association relationship. That is, an association relationship between antenna ports in uplink forwarding is the same as an association relationship between antenna ports in downlink forwarding.

Using N=2, K=2, and KN=4 as an example, the NCR has four donor antenna ports D0, D1, D2, and D3 and four service antenna ports S0, S1, S2, and S3 in total. In a $1^{st}$ time unit set, the NCR is in an uplink forwarding state, and the NCR uses two service antenna ports S0 and S1 and two donor antenna ports such as D0 and D1, where S0 is associated with D0, and S1 is associated with D1. A set of two associations: the association between S0 and D0 and the association between S1 and D1, forms the first association relationship. In a $2^{nd}$ time unit set, the NCR is in an uplink forwarding state, and the NCR uses two service antenna ports S2 and S3 and two donor antenna ports such as D2 and D3, where S2 is associated with D2, and S3 is associated with D3. In other words, generally, in the two time unit sets in uplink forwarding, a set of four associations: the association between S0 and D0, the association between S1 and D1, the association between S2 and D2, and the association between S3 and D3, forms the second association relationship. In a $3^{rd}$ time unit set, the NCR is in a downlink forwarding state, and uses four donor antenna ports D0, D1, D2, and D3 and four service antenna ports S0, S1, S2, and S3. S0 is associated with D0, S1 is associated with D1, S2 is associated with D2, and S3 is associated with D3. That is, the second association relationship is still maintained. This ensures that impact of the NCR on a channel in the uplink forwarding state and the downlink forwarding state is reciprocal, and further ensures reciprocity between an uplink channel and a downlink channel.

Optionally, the association includes a connection, the first association relationship includes a first connection relationship, and the second association relationship includes a second connection relationship.

Optionally, the network device may indicate the specific first association relationship and/or second association relationship to the NCR.

Optionally, an $i^{th}$ donor antenna port in the N donor antenna ports is associated with a $j^{th}$ service antenna port in the N service antenna ports in both uplink forwarding and downlink forwarding, a gain coefficient from the $j^{th}$ service antenna port to the $i^{th}$ donor antenna port in uplink forwarding is $a_{i-1}$, a gain coefficient from the $i^{th}$ donor antenna port to the $j^{th}$ service antenna port in downlink forwarding is $a_{i-1}'$, and $a_{i-1}$ and $a_{i-1}'$ satisfy at least one of the following conditions: an amplitude difference between $a_{i-1}$ and $a_{i-1}'$ is less than a first amplitude threshold; and a phase difference between $a_{i-1}$ and $a_{i-1}'$ is less than a first phase threshold, where both i and j are positive integers less than or equal to N. It should be noted that $a_{i-1}$ and $a_{i-1}'$ are merely marking examples, and other marking examples are also allowed, for example, $a_i$ and $a_i'$. A marking manner is not limited in this application.

Optionally, $a_{i-1}$ and $a_{i-1}'$ satisfy at least one of the following conditions: The amplitude difference between $a_{i-1}$ and $a_{i-1}'$ is less than the first amplitude threshold; and the phase difference between $a_{i-1}$ and $a_{i-1}'$ is less than the first phase threshold.

Optionally, the network device may indicate a gain coefficient of each uplink forwarding channel to the NCR. The gain coefficient may be an absolute value, or may be a relative value relative to a gain coefficient at a reference point. The reference point is selected by the network device. A specific selection manner is not limited in this application. The network device may separately indicate the gain coefficient of each uplink forwarding channel, or may uniformly indicate gain coefficients of all uplink forwarding channels.

Optionally, the network device may indicate, to the NCR, that a ratio of the gain coefficient of each uplink forwarding channel is the same as a ratio of a gain coefficient of a corresponding single downlink forwarding channel in the downlink forwarding state.

Optionally, all uplink forwarding channels in the NCR have a same gain coefficient.

Optionally, all uplink forwarding channels in the NCR have a same gain coefficient, and the gain coefficient is the same as a gain coefficient of a corresponding single downlink forwarding channel in the corresponding downlink forwarding state.

Optionally, the network device further indicates that the N service antenna ports are a part of the KN service antenna ports, the N donor antenna ports are a part of the KN donor antenna ports, and the NCR uses different antenna ports in different time unit sets.

Optionally, when each of the K SRS sets is a periodic SRS set, and the K SRS sets have a same cycle, the $k^{th}$ time unit set may be understood as corresponding to a time unit in which the $k^{th}$ SRS set is located in a first cycle. The first cycle may be any cycle. Correspondingly, a $(k+1)^{th}$ time unit set may be understood as corresponding to a time unit in which a $(k+1)^{th}$ SRS is located in the first cycle. The periodic SRS set means that each SRS in the SRS set is a periodic SRS.

As shown in FIG. 12A and FIG. 12B, the K SRS sets include a first SRS set and a second SRS set, where the first SRS set includes an SRS 0 and an SRS 1, and the second SRS set includes an SRS 2 and an SRS 3. The SRS 0, the SRS 1, the SRS 2, and the SRS 3 are all periodic SRSs, and cycles of the SRS 0, the SRS 1, the SRS 2, and the SRS 3 are the same. A cycle of the SRS 0 is shown in a first row in FIG. 12A and FIG. 12B. (a0) in FIG. 12A represents a first cycle of the SRS 0, (b0) in FIG. 12A represents a second cycle of the SRS 0, (c0) in FIG. 12A represents a third cycle of the SRS 0, ellipses on two sides of the first row in FIG. 12A and FIG. 12B represent other cycles of the SRS 0, and the SRS 0 includes an SRS 0 port 0 and an SRS 0 port 1. A cycle of the SRS 1 is shown in a second row in FIG. 12A and FIG. 12B. (d0) in FIG. 12A represents a first cycle of the SRS 1, (e0) in FIG. 12A represents a second cycle of the SRS 1, (f0) in FIG. 12A represents a third cycle of the SRS 1, ellipses on two sides of the second row in FIG. 12A and FIG. 12B represent other cycles, and the SRS 1 includes an SRS 1 port 0 and an SRS 1 port 1.

A cycle of the SRS 2 is shown in a third row in FIG. 12A and FIG. 12B. (a1) in FIG. 12B represents a first cycle of the SRS 2, (b1) in FIG. 12B represents a second cycle of the SRS 2, (c1) in FIG. 12B represents a third cycle of the SRS 2, ellipses on two sides of the third row in FIG. 12A and FIG. 12B represent other cycles of the SRS 2, and the SRS 2 includes an SRS 2 port 0 and an SRS 2 port 1. A cycle of the SRS 3 is shown in a fourth row in FIG. 12A and FIG. 12B. (d1) in FIG. 12B represents a first cycle of the SRS 3, (e1) in FIG. 12B represents a second cycle of the SRS 3, (f1) in FIG. 12B represents a third cycle of the SRS 3, ellipses on two sides of the fourth row in FIG. 12A and FIG. 12B represent other cycles, and the SRS 3 includes an SRS 3 port 0 and an SRS 3 port 1.

Optionally, the K SRS sets may further include more SRS sets, for example, a third SRS set, which is not shown in the figure. In (a0), (d0), (a1), and (d1) in FIG. 12A and FIG. 12B, the first cycle of the SRS 0, the first cycle of the SRS 1, the first cycle of the SRS 2, and the first cycle of the SRS 3 are the same. In (b0), (e0), (b1), and (e1) in FIG. 12A and FIG. 12B, the second cycle of the SRS 0, the second cycle of the SRS 1, the second cycle of the SRS 2, and the second cycle of the SRS 3 are the same. The third cycle of the SRS 0, the third cycle of the SRS 1, the third cycle of the SRS 2, and the third cycle of the SRS 3 are the same; ...; and the rest are similar, and are not described one by one.

Although the first cycle is shown in FIG. 12A and FIG. 12B, as shown in (a0), (d0), (a1), and (d1) in FIG. 12A and FIG. 12B, four other corresponding diagrams in FIG. 12A and FIG. 12B (for example, (b0), (e0), (b1), and (e1) in FIG. 12A and FIG. 12B) may alternatively show the first cycle. This is not limited in this application.

Further, there may be a time interval between any two adjacent cycles in the first cycle, the second cycle, the third cycle, ..., and the like. For example, an interval between the first cycle and the second cycle is 100 milliseconds (ms). In this case, the NCR may perform uplink forwarding in the 1st time unit set (for example, the first cycle) in the first cycle, the second cycle, the third cycle, ..., and the like by using the N donor antenna ports and the N service antenna ports; the NCR may perform uplink forwarding in the 2nd time unit set (for example, the second cycle) in the first cycle, the second cycle, the third cycle, ..., and the like by using N other donor antenna ports and N other service antenna ports; ...; and therefore the NCR may perform uplink forwarding in the first cycle, the second cycle, the third cycle, ..., and the like by using the KN donor antenna ports and the KN service antenna ports. The NCR switches an antenna port and performs antenna switching in any one of the first cycle, the second cycle, the third cycle, ..., and the like.

In a time interval between any two adjacent cycles in the first cycle, the second cycle, the third cycle, ..., and the like, downlink forwarding is performed by using the KN donor antenna ports and the KN service antenna ports or no forwarding is performed. This process may be implemented through the foregoing antenna switching.

S205. The terminal device correspondingly sends an SRS based on the SRS configuration information, where in a same SRS set, any two SRSs are associated with different antenna ports, and in any two SRS sets, the terminal device sends, by using a same antenna port, ports with a same number that are of SRSs having a same ranking in the two SRS sets.

Specifically, after receiving the SRS configuration information sent by the network device in S203, the terminal device correspondingly sends the SRS based on the SRS configuration information.

Optionally, the terminal device sequentially sends the SRSs based on time units and frequency units in which the K SRS sets are located.

In a same SRS set, any two SRSs are associated with different antenna ports, and in any two SRS sets, the terminal device sends, by using a same antenna port, ports with a same number that are of SRSs having a same ranking in the two SRS sets. For example, in any SRS set such as an SRS $set_i$ in the K SRS sets, antenna ports such as an antenna port $T_x$ and an antenna port $T_y$ associated with any two SRSs such as an $SRS_m$ and an $SRS_n$ are different. In addition, in any two SRS sets such as an SRS set $SA_i$ and an SRS set $SA_j$ in the K SRS sets, the terminal device sends SRSd Porte of a $d^{th}$ SRS of $SA_i$ and SRSd Porte of a $d^{th}$ SRS of $SA_j$ by using a same antenna port. The foregoing i, x, y, j, d, and e are all used to represent any number within a range requirement.

For example, in FIG. 13(a) to FIG. 13(b)-2, K=2, L=2, and J=2. A 1st SRS set includes an SRS 0 and an SRS 1, and the SRS 0 and the SRS 1 are respectively in a slot 0 and a slot 1. A 2nd SRS set includes an SRS 2 and an SRS 3, and the SRS 2 and the SRS 3 are respectively in the slot 0 and the slot 1. Each SRS includes two SRS ports. In a same SRS set, any two SRSs are associated with different antenna ports. Therefore, the terminal device sends the SRS 0 port 0 and the SRS 0 port 1 by using the antenna ports $T_0$ and $T_1$ respectively, and sends the SRS 1 port 0 and the SRS 1 port 1 by using the antenna ports $T_2$ and $T_3$ respectively. In any two SRS sets, the terminal device uses a same antenna port to send ports with a same number that are of SRSs having a same ranking in the two SRS sets. Therefore, an antenna port used by the terminal device to send the SRS 2 port 0 and an antenna port used to send the SRS 0 port 0 are the same, and both are $T_0$. An antenna port used to send the SRS 2 port 1 and an antenna port used to send the SRS 0 port 1 are the same, and both are $T_1$. An antenna port used to send the SRS 3 port 0 and an antenna port used to send the SRS 1 port 0 are the same, and both are $T_2$. An antenna port used to send the SRS 3 port 1 and an antenna port used to send the SRS 1 port 1 are the same, and both are $T_3$.

Optionally, when sending the KL SRSs, the terminal device needs to satisfy that when the terminal device sends, by using a same antenna port, ports with a same number that are of SRSs having a same ranking in any two SRS sets, a phase difference between the two ports cannot exceed a first threshold. For example, when the terminal device uses a same antenna port to send SRSd porte of the $d^{th}$ SRS in the SRS set $SA_i$ and SRSd porte of the $d^{th}$ SRS in the SRS set $SA_j$, a phase difference between SRSd porte of the $d^{th}$ SRS in the SRS set $SA_i$ and SRSd porte of the $d^{th}$ SRS in the SRS set $SA_j$ that are sent by the terminal device cannot exceed the first threshold. An example of the first threshold includes 10 degrees, 0.1 radian (RAD), or the like. The first threshold may be preset.

Optionally, when sending the KL SRSs, the terminal device needs to satisfy that when the terminal device sends, by using a same antenna port, ports with a same number that are of SRSs having a same ranking in the K SRS sets, the terminal device may report, to the network device, a phase offset between a first phase and a phase of a same-numbered port of a same-ranking SRS in each of (K-1) subsequent SRS sets, where the first phase is a phase for sending a same-numbered port of a same-ranking SRS in the 1st SRS set in the K SRS sets. For example, when the terminal device sends an SRS port 0 of a 1st SRS in each of the K SRS sets by using the antenna port 0, that is, when the terminal device sends an SRS 1 port 0 in each of the K SRS sets by using the antenna port 0, the terminal device may report, to the network device, a phase offset between the first phase and a phase of an SRS 1 port 0 in each of (K-1) subsequent SRS sets, where the first phase is a phase for sending the SRS 1 port 0 in the SRS set 1 in the K SRS sets. Similarly, when the terminal device sends an SRS port 1 of a 1st SRS in each of the K SRS sets by using the antenna port 1, when the terminal device sends an SRS port 2 of a 1st SRS in each of the K SRS sets by using the antenna port 2, ..., and when the terminal device sends an SRS port J-1 of an $L^{th}$ SRS in each of the K SRS sets by using the antenna port LJ-1, the foregoing method may also be used.

In other words, the network device may not need to know the first phase, and only needs to know a phase offset between a subsequent phase and the first phase. In this way, when obtaining an equivalent downlink channel coefficient matrix (that is, an equivalent downlink channel coefficient matrix corresponding to measurement of the KL SRSs), the network device needs to add equivalent downlink channel coefficient matrices obtained based on the measurement of the SRSs. Therefore, before the addition, the network device may remove, for a $p^{th}$ SRS, phase offsets of (K-1) subsequent SRSs reported by the terminal device, where p is a positive integer less than or equal to L (when p=1, it indicates the $1^{st}$ SRS). Therefore, the obtained equivalent downlink channel coefficient matrix is more accurate.

S206. The NCR is in the uplink forwarding state in the K time unit sets, and performs uplink forwarding in the $k^{th}$ time unit set by using the N service antenna ports and the N donor antenna ports, where the N service antenna ports are a part of the KN service antenna ports, the N donor antenna ports are a part of the KN donor antenna ports, and the NCR uses different antenna ports in different time unit sets.

Optionally, in a same time unit set, the NCR uses a same antenna port, that is, the N donor antenna ports used by the NCR are the same, and the N service antenna ports used by the NCR are the same.

Optionally, that the NCR uses different antenna ports in different time unit sets means: In different time unit sets, the NCR uses different donor antenna ports, and the NCR uses different service antenna ports. The "different" herein refers to "completely different", that is, "do not coincide".

It should be noted that S205 and S206 may be performed simultaneously, and there is no sequence difference. Specifically, in S205 and S206, in a same time unit set, the SRS set sent in S205 is exactly received and forwarded by the NCR in S206.

Optionally, each donor antenna port is associated with one service antenna port.

Optionally, each service antenna port is associated with one donor antenna port.

Optionally, when the NCR is in the downlink forwarding state, the KN service antenna ports are one-to-one associated with the KN donor antenna ports. To be specific, each of the KN service antenna ports is associated with one of the KN donor antenna ports, and each of the KN donor antenna ports is also associated with one of the KN service antenna ports. In addition, an association relationship (that is, the second association relationship) between the KN donor antenna ports and the KN service antenna ports of the NCR in the uplink forwarding state is the same as an association relationship between the KN donor antenna ports and the KN service antenna ports of the NCR in the downlink forwarding state. In this case, if any donor antenna port $D_i$ in the KN donor antenna ports is associated with one service antenna port $S_j$ in the KN service antenna ports, a phase difference between the donor antenna port $D_i$ and the service antenna port $S_j$ needs to be fixed in the uplink forwarding state and the downlink forwarding state. Because the donor antenna port $D_i$ is any donor antenna port $D_i$, and the service antenna port $S_j$ is one service antenna port associated with the donor antenna port $D_i$, in essence, phase differences between any donor antenna port and any service antenna port that are associated need to be the same in the uplink forwarding state and the downlink forwarding state. In this way, reciprocity between an uplink forwarding channel and a downlink forwarding channel can be ensured. An association relationship between the donor antenna port $D_i$ and the service antenna port $S_j$ may be determined by the NCR, and does not need to be fed back or notified to the network device and/or the terminal device.

S207. The network device correspondingly receives and measures the SRS, to finally obtain measurement results of the KL SRSs, and determines an equivalent downlink channel coefficient matrix based on the measurement results of the KL SRSs. The equivalent downlink channel coefficient matrix is a downlink channel coefficient matrix from the network device to the terminal device through the NCR when the NCR is in the downlink forwarding state and uses the KN donor antenna ports and the KN service antenna ports.

Optionally, the network device correspondingly receives and measures the SRS. After obtaining a measurement result of the $1^{st}$ SRS in the measurement results of the KL SRSs, the network device may determine a first equivalent downlink channel coefficient matrix corresponding to the measurement result of the $1^{st}$ SRS; after obtaining a measurement result of the $2^{nd}$ SRS in the measurement results of the KL SRSs, the network device may determine a second equivalent downlink channel coefficient matrix corresponding to the measurement result of the $2^{nd}$ SRS; ...; and after obtaining a measurement result of a $(KL)^{th}$ SRS in the measurement results of the KL SRSs, the network device may determine a $(KL)^{th}$ equivalent downlink channel coefficient matrix corresponding to the measurement result of the $(KL)^{th}$ SRS. Then, KL equivalent downlink channel coefficient matrices are added to obtain an overall equivalent downlink channel coefficient matrix, namely, an equivalent downlink channel coefficient matrix determined based on the measurement results of the KL SRSs.

Optionally, the network device correspondingly receives and measures the SRS. After obtaining all the measurement results of the KL SRSs, the network device may sequentially determine equivalent downlink channel coefficient matrices corresponding to measurement results of SRSs in the measurement results of the KL SRSs, and then perform addition to obtain an overall equivalent downlink channel coefficient matrix, namely, an equivalent downlink channel coefficient matrix determined based on the measurement results of the KL SRSs.

It should be noted that, when there is no modifier such as each, first, second, or $(KL)^{th}$, the equivalent downlink channel coefficient matrix in this application means the overall equivalent downlink channel coefficient matrix, namely, an equivalent downlink channel coefficient matrix used when the network controlled repeater performs downlink forwarding by using the KN donor antenna ports and the KN service antenna ports.

When the NCR performs downlink forwarding, channels formed between the KN donor antenna ports and the KN service antenna ports that are used correspond to KN downlink forwarding channels.

Optionally, after S207, the network device may send downlink control information or data information to the terminal device. In this case, the NCR may perform forwarding by using the KN downlink forwarding channels. In this case, the NCR is in the downlink forwarding state. In this case, the KN service antenna ports of the NCR are one-to-one associated with the KN donor antenna ports of the NCR. To be specific, each of the KN service antenna ports is associated with one of the KN donor antenna ports, and each of the KN donor antenna ports is also associated with one of the KN service antenna ports. A set of KN associations forms the second association relationship.

In this case, an association relationship (that is, the maintained second association relationship) between the KN donor antenna ports and the KN service antenna ports of the NCR in the downlink forwarding state is the same as an association relationship between the KN donor antenna ports and the KN service antenna ports of the NCR in the uplink forwarding state.

Optionally, when the network device sends the downlink control information or data information to the terminal device, the network device may not know existence of the NCR and forwarding by the NCR.

Optionally, a ratio of the gain coefficient of each downlink forwarding channel in the NCR is the same as a ratio of a gain coefficient of a corresponding single uplink forwarding channel in the uplink forwarding state.

Optionally, all downlink forwarding channels in the NCR have a same gain coefficient, and the gain coefficient is the same as a gain coefficient of a corresponding single uplink forwarding channel in the corresponding uplink forwarding state.

To further clearly describe rationality of the technical solution corresponding to FIG. 11A to FIG. 11C, the following further describes a principle with reference to FIG. 13(a) to FIG. 13(b)-2. For example, FIG. 13(a) to FIG. 13(b)-2 are a diagram of principle verification in Embodiment 2 of a communication method according to an embodiment of this application.

It should be noted that, for ease of description, in FIG. 13(a) to FIG. 13(b)-2, an $i^{th}$ donor antenna port in the N donor antenna ports and a $j^{th}$ service antenna port in the N service antenna ports are associated in both uplink forwarding and downlink forwarding, and an example in which a gain coefficient from the $i^{th}$ donor antenna port to the $j^{th}$ service antenna port in uplink forwarding is the same as a gain coefficient from the $j^{th}$ service antenna port to the $i^{th}$ donor antenna port in downlink forwarding is used for description. For example, if a donor antenna port $D_0$ is associated with a service antenna port $S_0$ in both uplink forwarding and downlink forwarding, a gain coefficient $a_0'$ from the donor antenna port $D_0$ to the service antenna port $S_0$ in uplink forwarding and a gain coefficient $a_0$ from the service antenna port $S_0$ to the donor antenna port $D_0$ in downlink forwarding are the same, and both are represented by $a_0$ below. It should be noted that $a_0$ and $a_0'$ are merely marking examples, and other marking examples are also allowed, A marking manner is not limited in this application.

As shown in FIG. 13(a) to FIG. 13(b)-2, the terminal device is configured with 2T4R, namely, two uplink channels and four downlink channels. When the terminal is in a downlink receiving state, the four downlink channels may correspond to four antenna ports $T_0$, $T_1$, $T_2$, and $T_3$. When the terminal is in an uplink sending state, the two uplink channels correspond to two antenna ports. Time units having a same ranking in different time unit sets correspond to two same antenna ports in the four antenna ports $T_0$, $T_1$, $T_2$, and $T_3$. For example, a $1^{st}$ time unit set includes two time units, namely, a slot 0 and a slot 1, and a $2^{nd}$ time unit set includes two time units, namely, a slot 2 and a slot 3. Therefore, the two uplink channels are associated with the antenna ports $T_0$ and $T_1$ in both the slot 0 and the slot 2, and the two uplink channels are associated with the antenna ports $T_2$ and $T_3$ in both the slot 1 and the slot 3. In addition, the NCR is also configured with 2T4R, namely, two uplink forwarding channels and four downlink forwarding channels. When the NCR is in a downlink forwarding state, the four downlink forwarding channels correspond to four donor antenna ports $D_0$ to $D_3$ and four service antenna ports $S_0$ to $S_3$. The antenna port $D_0$ of the NCR is associated with the antenna port $S_0$ of the NCR, and a channel gain coefficient is $a_0$. The antenna port $D_1$ of the NCR is associated with the antenna port $S_1$ of the NCR, and a channel gain coefficient is $a_1$. The antenna port $D_2$ of the NCR is associated with the antenna port $S_2$ of the NCR, and a channel gain coefficient is $a_2$. The antenna port $D_3$ of the NCR is associated with the antenna port $S_3$ of the NCR, and a channel gain coefficient is $a_3$. When the NCR is in an uplink forwarding mode, in one time unit set (for example, a time unit set including a slot 0), the two uplink forwarding channels correspond to two donor antenna ports and two service antenna ports, and the two donor antenna ports and the two service antenna ports are respectively two donor antenna ports (for example, $D_0$ and $D_1$) in the four donor antenna ports $D_0$ to $D_3$ and two service antenna ports (for example, $S_0$ and $S_1$) in the four service antenna ports $S_0$ to $S_3$. The antenna port $S_0$ of the NCR is associated with the antenna port $D_0$ of the NCR, and a channel gain coefficient is also $a_0$. The antenna port $S_1$ of the NCR is associated with the antenna port $D_1$ of the NCR, and a channel gain coefficient is also $a_1$. In another same time unit set (for example, a time unit set including a slot 1), the two uplink forwarding channels correspond to two remaining donor antenna ports (for example, $D_2$ and $D_3$) in the four donor antenna ports $D_0$ to $D_3$ and two remaining service antenna ports (for example, $S_2$ and $S_3$) in the four service antenna ports $S_0$ to $S_3$. The antenna port $S_2$ of the NCR is associated with the antenna port $D_2$ of the NCR, and a channel gain coefficient is also $a_2$. The antenna port $S_3$ of the NCR is associated with the antenna port $D_3$ of the NCR, and a channel gain coefficient is also $a_3$.

In other words, the NCR uses four downlink forwarding channels in the downlink forwarding state, and the NCR performs uplink forwarding by using two time unit sets (for example, because a quantity of downlink forwarding channels of the NCR is twice a quantity of uplink forwarding channels of the NCR) in the uplink forwarding state. An association relationship between a donor antenna port and a service antenna port is the same as that in downlink forwarding, and a gain coefficient of a corresponding channel is also the same as that in downlink forwarding. The network device has one antenna port $A_0$. Each time unit set includes a same quantity of time units. For example, the time unit may be a slot or a symbol.

It should be noted that the network device may alternatively have more antenna ports; and/or the terminal device may be configured with $X_1 T Y_1 R$, namely, $X_1$ uplink forwarding channels and Yi downlink forwarding channels, where $X_1$ is not 2 or Yi is not 4; and/or the NCR is configured with XTYR, namely, X uplink forwarding channels and Y downlink forwarding channels, where X is not 2 or Y is not 4; and/or each time unit set may include L time units, where L is not 2. Optionally, $X_1$ may be the same as or different from X. Optionally, Yi may be the same as or different from Y

Optionally, $Y_1$ is K times $X_1$, and K is a positive integer greater than 1. Optionally, $Y_1$ is greater than K times of $X_1$, and is less than (K+1) times of $X_1$.

Optionally, Y is K times X, and K is a positive integer greater than 1. Optionally, Y is greater than K times of X and less than (K+1) times of X, where K is a positive integer greater than 1.

It should be noted that, the quantity of antenna ports of the network device, the quantity of uplink forwarding channels and the quantity of downlink forwarding channels of the NCR, the quantity of uplink channels and the quantity of downlink channels of the terminal device, and the quantity of time units included in each time unit set that are shown in FIG. 13(a) to FIG. 13(b)-2 are merely examples, are used as examples for ease of describing the principle of Embodiment 2, and do not constitute a limitation on the scope of Embodiment 2 of this application.

As shown in FIG. 13(a) to FIG. 13(b)-2, downlink channel gain coefficients from the antenna port $A_0$ of the network device to the antenna ports $D_0$, $D_1$, $D_2$, and $D_3$ of the NCR are respectively $f_0$, $f_1$, $f_2$, and $f_3$. Downlink channel gain coefficients from the antenna port $S_0$ of the NCR to the antenna ports $T_0$, $T_1$, $T_2$, and $T_3$ of the terminal device are respectively $g_{0,0}$, $g_{0,1}$, $g_{0,2}$, and $g_{0,3}$. Downlink channel gain coefficients from the antenna port $S_1$ of the NCR to the antenna ports $T_0$, $T_1$, $T_2$, and $T_3$ of the terminal device are respectively $g_{1,0}$, $g_{1,1}$, $g_{1,2}$, and $g_{1,3}$. Downlink channel gain coefficients from the antenna port $S_2$ of the NCR to the antenna ports $T_0$, $T_1$, $T_2$, and $T_3$ of the terminal device are respectively $g_{2,0}$, $g_{2,1}$, $g_{2,2}$, and $g_{2,3}$. Downlink channel gain coefficients from the antenna port $S_3$ of the NCR to the antenna ports $T_0$, $T_1$, $T_2$, and $T_3$ of the terminal device are respectively $g_{3,0}$, $g_{3,1}$, $g_{3,\backslash2}$, and $g_{3,3}$.

As shown in FIG. 13(a), because the NCR performs downlink forwarding on all the four channels in the downlink forwarding state, and the terminal device also uses four antenna ports $T_0$, $T_1$, $T_2$, and $T_3$ for receiving, an equivalent downlink channel coefficient matrix H0 may be expressed as a superposition of gain coefficients of all downlink channels, and specifically, is an equivalent downlink channel coefficient matrix

$$H0 = [\sum_{i=0}^{3} f_i a_i g_{i,0}, \quad \sum_{i=0}^{3} f_i a_i g_{i,1}, \quad \sum_{i=0}^{3} f_i a_i g_{i,2}, \quad \sum_{i=0}^{3} f_i a_i g_{i,3}]$$

.

As shown in FIG. 13(b)-1 and FIG. 13(b)-2, only two service antenna ports and two donor antenna ports of the NCR in the uplink forwarding state participate in uplink forwarding in each time unit set. For example, the network device indicates the NCR to perform forwarding in two time unit sets by using different antennas. For example, the network device indicates the NCR to perform uplink forwarding in a 1st time unit set (the 1st time unit set includes two slots: a slot 0 and a slot 1) by using two service antenna ports and two donor antenna ports, and perform uplink forwarding in a 2nd time unit set (the 2nd time unit set includes two slots: a slot 2 and a slot 3) by using two other service antenna ports and two other donor antenna ports, and indicates the terminal device to send an SRS in the 1st time unit set and the 2nd time unit set based on the SRS configuration information in S203. The terminal device sends an SRS 0 port 0 (Port 0) and an SRS 0 port 1 (Port 1) in the slot 0 by using the antenna ports $T_0$ and $T_1$, and the terminal device sends an SRS 1 port 0 and an SRS 1 port 1 in the slot 1 by using the antenna ports $T_2$ and $T_3$. The NCR performs uplink forwarding in the slot 0 and the slot 1 by using the antenna ports $D_0$, $S_0$, $D_1$, and $S_1$. The terminal device sends an SRS 2 port 0 and an SRS 2 port 1 in the slot 2 by using the antenna ports $T_0$ and $T_1$, and the terminal device sends an SRS 3 port 0 and an SRS 3 port 1 in the slot 3 by using the antenna ports $T_2$ and $T_3$. The NCR performs uplink forwarding in the slot 2 and the slot 3 by using the antenna ports $D_2$, $S_2$, $D_3$, and $S_3$. Therefore, an uplink channel coefficient matrix H1 may be expressed as a superposition of channel coefficient matrices in forwarding through different antennas. For example, the network device may determine, through SRS measurement in the slot 0, an uplink channel coefficient matrix $h_{0,0}$ between the network device and the antenna ports $T_0$ and $T_1$ of the terminal when the network controlled repeater uses the antenna ports $D_0$ and $S_0$ and $D_1$ and $S_1$. The network device may determine, through SRS measurement in the slot 1, an uplink channel coefficient matrix $h_{0,1}$ between the network device and the antenna ports $T_2$ and $T_3$ of the terminal when the network controlled repeater uses the antenna ports $D_0$ and $S_0$ and $D_1$ and $S_1$. The network device may determine, through SRS measurement in the slot 2, an uplink channel coefficient matrix $h_{1,0}$ between the network device and the antenna ports $T_0$ and $T_1$ of the terminal when the network controlled repeater uses the antenna ports $D_2$ and $S_2$ and $D_3$ and $S_3$. The network device may determine, through SRS measurement in the slot 3, an uplink channel coefficient matrix $h_{1,1}$ between the network device and the antenna ports $T_2$ and $T_3$ of the terminal when the network controlled repeater uses the antenna ports $D_2$ and $S_2$ and $D_3$ and $S_3$. $h_{0,0}=[f_0 a_0 g_{0,0} +f_1 a_1 g_{1,0}, f_0 a_0 g_{0,1} +f_1 a_1 g_{1,1}]$, $h_{0,1}=[f_0 a_0 g_{0,2} +f_1 a_1 g_{1,2}, f_0 a_0 g_{0,3} +f_1 a_1 g_{1,3}$, $h_{1,0}=[f_2 a_2 g_{2,0} +f_3 a_3 g_{3,0}, f_2 a_2 g_{2,1} + f_3 a_3 g_{3,1}]$, and $h_{1,1}=[f_2 a_2 g_{2,2} +f_3 a_3 g_{3,2}, f_2 a_2 g_{2,3} +f_3 a_3 g_{3,3}]$. Then, the network device may add every two of the four uplink channel coefficient matrices to determine an equivalent downlink channel coefficient matrix, that is, $H1=[h_{0,0}+h_{1,0}, h_{0,1}+h_{1,1}]$, and

$$H1 = [\sum_{i=0}^{3} f_i a_i g_{i,0}, \sum_{i=0}^{3} f_i a_i g_{i,1}, \sum_{i=0}^{3} f_i a_i g_{i,2}, \sum_{i=0}^{3} f_i a_i g_{i,3}]$$ may be deduced, and is equal to H0.

It can be learned from the foregoing that, the equivalent downlink channel coefficient matrix H0 is the same as a superposition result of uplink channel coefficient matrices in time unit sets in the uplink state. A quantity of time unit sets is indicated by the network device, and the network device determines the quantity of time unit sets based on a ratio of the quantity of downlink forwarding channels to the quantity of uplink forwarding channels of the NCR. Therefore, when the quantity of uplink forwarding channels and the quantity of downlink forwarding channels of the NCR are different, the equivalent downlink channel coefficient matrix H0 may also be obtained based on a superposition of the uplink channel coefficient matrices in all the time unit sets in the uplink state.

In Embodiment 2, when the quantity of uplink forwarding channels and the quantity of downlink forwarding channels of the NCR are different, and the quantity of uplink channels and the quantity of downlink channels of the terminal device are different, the network device may also obtain an accurate equivalent downlink channel coefficient matrix. In addition, the uplink forwarding channel of the NCR does not need to be adjusted, and the existing uplink forwarding channel and downlink forwarding channel of the NCR are still used. Compared with that in a manner in which the NCR is replaced, costs are relatively low.

It should be noted that, in the method for determining the equivalent downlink channel coefficient matrix by the network device in S 107 and S207, it is assumed that a signal received by the terminal device is a signal sent by the network device and forwarded by only the NCR, and does not include a signal (that is, a direct path signal) directly sent by the network device to the terminal device or a signal reflected to the terminal device by an environmental scatterer. When the foregoing assumption is not true, the present invention may determine an equivalent downlink channel coefficient matrix with reference to another solution. For example, the network device may disable an NCR forwarding channel to measure an equivalent downlink channel coefficient matrix H' from the network device to the terminal device without an NCR, and then eliminate, in a phase of integrating the channel coefficient matrices, impact of the direct path signal and the signal reflected by the scatterer, for example, determine that a final equivalent downlink channel coefficient matrix is HO-(K-1)*H'.

It should be noted that an antenna port in each solution in this application may be replaced with an antenna. For example, a receive antenna port may be replaced with a receive antenna, and a transmit antenna port may be replaced with a transmit antenna. A technical solution obtained after replacement also falls within the scope of this application.

Unless otherwise specified, all or any part of the foregoing embodiments provided in this application may be freely combined, and a combined technical solution also falls within the scope of this application. The method provided in embodiments of this application is applicable to the following electronic device.

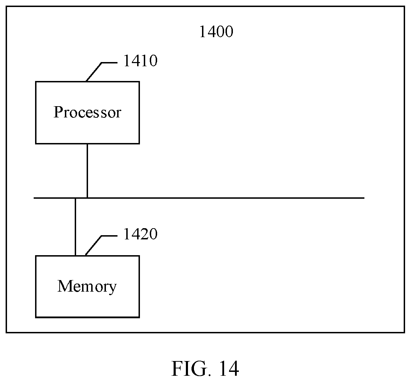

FIG. 14 shows an electronic device 1400 according to this application. For example, the electronic device 1400 includes at least one processor 1410 and a memory 1420. The processor 1410 is coupled to the memory 1420. The coupling in this embodiment of this application may be a communication connection, an electrical connection, or another form. Specifically, the memory 1420 is configured to store program instructions. The processor 1410 is configured to invoke the program instructions stored in the memory 1420, so that the electronic device 1400 performs steps performed by the electronic device in the method provided in embodiments of this application. It should be understood that the electronic device 1400 may be configured to implement the method provided in embodiments of this application. For related features, refer to the foregoing descriptions. Details are not described herein again.

The electronic device 1400 may be at least one of the foregoing network device, network controlled repeater, and terminal device.

An embodiment of this application further provides a chip. The chip may include an input interface, an output interface, and a processing circuit. In this embodiment of this application, the input interface and the output interface may complete signaling or data exchange, and the processing circuit may complete generation and processing of signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and the function in any one of the foregoing embodiments.

An embodiment of this application further provides a computer program product including instructions. When the computer program product runs on a computer, the computer is enabled to perform the method and function in any one of the foregoing embodiments.

An embodiment of this application further provides a computer-readable storage medium. The computer-readable storage medium stores computer instructions. When a processor runs the instructions, the processor is enabled to perform the method and the function in any one of the foregoing embodiments.

Usually, various embodiments of this application may be implemented by hardware, a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that in nonrestrictive examples, the blocks, apparatuses, systems, technologies, or methods described in this specification may be implemented as hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor to perform the process/method described above with reference to the accompanying drawings. Usually, the program module includes a routine, a program, a library, an object, a class, a component, a data structure, or the like that executes a specific task or implements a specific abstract data type. In various embodiments, functions of program modules may be combined or split between the program modules as required. Machine-executable instructions used for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this application, the computer program code or related data may be included in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

In embodiments of this application, as used in the specification and the appended claims of this application, singular expressions "a", "the", "the above", and "this" also intend to include expressions such as "one or more", unless the context explicitly indicates the opposite. It should be further understood that, in the following embodiments of this application, "at least one" and "one or more" mean one or more (including two). The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects.

Reference to "an embodiment", "some embodiments", or the like described in the specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

The foregoing has described the implementations of this application. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

**Claims**

1. A communication method, applied to a network controlled repeater, wherein the network controlled repeater comprises KN donor antenna ports and KN service antenna ports, and the method comprises:

   performing, by the network controlled repeater, uplink forwarding in K time unit sets, wherein the network controlled repeater performs uplink forwarding in any time unit set, namely, a $k^{th}$ time unit set, in the K time unit sets by using N service antenna ports and N donor antenna ports, the N service antenna ports are a part of the KN service antenna ports, and the N donor antenna ports are a part of the KN donor antenna ports, wherein donor antenna ports used by the network controlled repeater are different and service antenna ports used by the network controlled repeater are different in any two of the K time unit sets; and
   K is a positive integer greater than 1, N is a positive integer greater than or equal to 1, k is any integer greater than 0 and less than or equal to K, and KN represents a product of K and N.

2. The method according to claim 1, wherein the N donor antenna ports are one-to-one associated with the N service antenna ports to form N associations, and a set of the N associations forms a first association relationship; the KN service antenna ports are one-to-one associated with the KN donor antenna ports to form KN associations, and a set of the KN associations forms a second association relationship; and the first association relationship is a part of the second association relationship.

3. The method according to claim 2, wherein the KN service antenna ports and the KN donor antenna ports are used when the network controlled repeater performs downlink forwarding, wherein the KN service antenna ports and the KN donor antenna ports remain in the second association relationship.

4. The method according to claim 3, wherein an $i^{th}$ donor antenna port in the N donor antenna ports is associated with a $j^{th}$ service antenna port in the N service antenna ports in both uplink forwarding and downlink forwarding, a gain coefficient from the $j^{th}$ service antenna port to the $i^{th}$ donor antenna port in uplink forwarding is $a_{i-1}$, a gain coefficient from the $i^{th}$ donor antenna port to the $j^{th}$ service antenna port in downlink forwarding is $a_{i-1}'$, and $a_{i-1}$ and $a_{i-1}'$ satisfy at least one of the following conditions:

an amplitude difference between $a_{i-1}$ and $a_{i-1}'$ is less than a first amplitude threshold; or
a phase difference between $a_{i-1}$ and $a_{i-1}'$ is less than a first phase threshold, wherein
both i and j are positive integers less than or equal to N.

5. The method according to any one of claims 1 to 4, wherein the N donor antenna ports and the N service antenna ports correspond to N uplink forwarding channels, and the KN donor antenna ports and the KN service antenna ports correspond to KN downlink forwarding channels.

6. The method according to any one of claims 1 to 5, wherein that the service antenna ports used by the network controlled repeater are different and the donor antenna ports used by the network controlled repeater are different in any two of the K time unit sets comprises:
in any two of the K time unit sets, the service antenna ports used by the network controlled repeater are completely different and do not coincide; and the donor antenna ports used by the network controlled repeater are completely different and do not coincide.

7. The method according to any one of claims 1 to 6, wherein in the K time unit sets, all of the KN service antenna ports have been used once by the network controlled repeater, and all of the KN donor antenna ports have been used once by the network controlled repeater.

8. The method according to claim 7, wherein that all of the KN service antenna ports have been used once by the network controlled repeater, and all of the KN donor antenna ports have been used once by the network controlled repeater comprises:
all of the KN service antenna ports have been used only once by the network controlled repeater, and all of the KN donor antenna ports have been used only once by the network controlled repeater.

9. The method according to any one of claims 1 to 8, wherein before the performing, by the network controlled repeater, uplink forwarding in K time unit sets, the method further comprises:
receiving, by the network controlled repeater, indication information from a network device, wherein the indication information indicates the network controlled repeater to perform uplink forwarding in the K time unit sets.

10. The method according to claim 9, wherein the indication information further indicates the network controlled repeater to perform uplink forwarding in the $k^{th}$ time unit set in the K time unit sets by using the N service antenna ports and the N donor antenna ports.

11. The method according to any one of claims 1 to 10, wherein before the receiving, by the network controlled repeater, indication information from a network device, the method further comprises:
sending, by the network controlled repeater, capability indication information to the network device, wherein the capability indication information indicates to the network device that the network controlled repeater is capable of using the N donor antenna ports in the KN donor antenna ports and the N service antenna ports in the KN service antenna ports during uplink forwarding, and the network controlled repeater is capable of using the KN donor antenna ports and the KN service antenna ports during downlink forwarding.

12. The method according to any one of claims 1 to 11, wherein the performing, by the network controlled repeater, uplink forwarding in K time unit sets comprises:
receiving, by the network controlled repeater, K sounding reference signals or K sounding reference signal sets from a terminal device in the K time unit sets, and performing uplink forwarding.

13. The method according to any one of claims 1 to 12, wherein that the network controlled repeater performs uplink forwarding in any time unit set, namely, a $k^{th}$ time unit set, in the K time unit sets by using N service antenna ports and N donor antenna ports comprises:
receiving, by the network controlled repeater, a $k^{th}$ sounding reference signal or a $k^{th}$ sounding reference signal set from the terminal device in any time unit set, namely, the $k^{th}$ time unit set, in the K time unit sets by using the N service antenna ports, and sending the $k^{th}$ sounding reference signal or the $k^{th}$ sounding reference signal set to the network device by using the N donor antenna ports.

14. The method according to claim 12 or 13, wherein the network controlled repeater and the terminal device have an association relationship.

15. A communication method, applied to a terminal device, wherein the method comprises:
sending, by the terminal device, K sounding reference signals in K time unit sets, wherein the terminal device sends a $k^{th}$ sounding reference signal in the K sounding reference signals in any time unit set, namely, a $k^{th}$ time unit set, in the K time unit sets, the $k^{th}$ time unit set corresponds to the $k^{th}$ time unit set in any one of claims 1 to 14, the $k^{th}$ sounding reference signal comprises J sounding reference signal ports, any two of the K sounding reference signals are in two different time unit sets, K is a positive integer greater than 1, k is any integer greater than 0 and less than or equal to K, and J is a positive integer greater than or equal to 1.

16. The method according to claim 15, wherein the J sounding reference signal ports of the $k^{th}$ sounding reference signal are in a same time unit.

17. The method according to claim 15 or 16, wherein before the sending, by the terminal device, K sounding reference signals in K time unit sets, the method further comprises:
receiving, by the terminal device, sounding reference signal configuration information from a network device, wherein the sounding reference signal configuration information is used to configure the K sounding reference signals and a time unit set in which each sounding reference signal is located, each sounding reference signal comprises J sounding reference signal ports, and different sounding reference signals are in different time unit sets.

18. The method according to claim 17, wherein the sounding reference signal configuration information is further used to configure a time unit in which each sounding reference signal port is located.

19. The method according to claim 18, wherein the sounding reference signal configuration information is further used to configure a frequency unit in which each sounding reference signal or each sounding reference signal port is located.

20. The method according to any one of claims 17 to 19, wherein during uplink transmission, the terminal device is capable of using X uplink antenna ports, wherein J is a positive integer less than or equal to X.

21. The method according to any one of claims 17 to 19, wherein before the receiving, by the terminal device, sounding reference signal configuration information from a network device, the method further comprises:
indicating, by the terminal device to the network device, that the terminal device is capable of using X antenna ports during uplink transmission.

22. The method according to any one of claims 15 to 21, wherein that the $k^{th}$ time unit set corresponds to the $k^{th}$ time unit set in any one of claims 1 to 14 comprises: the $k^{th}$ time unit set is the same as the $k^{th}$ time unit set in any one of claims 1 to 14.

23. The method according to any one of claims 15 to 22, wherein a phase difference between sounding reference signals having a same ranking in any two of the K sounding reference signal sets does not exceed a first threshold.

24. A communication method, applied to a terminal device, wherein the method comprises:
sending, by the terminal device, K sounding reference signal sets in K time unit sets, wherein the terminal device sends a $k^{th}$ sounding reference signal set in the K sounding reference signal sets in any time unit set, namely, a $k^{th}$ time unit set, in the K time unit sets, the $k^{th}$ time unit set corresponds to the $k^{th}$ time unit set in any one of claims 1 to 14, the $k^{th}$ sounding reference signal set comprises L sounding reference signals, and each sounding reference signal comprises J sounding reference signal ports, wherein any two sounding reference signals in the $k^{th}$ sounding reference signal set are in two different time unit sets, and the any two sounding reference signals are associated with different antenna ports; in any two of the K sounding reference signal sets, the terminal device sends, by using a same antenna port, sounding reference signal ports with a same number that are of sounding reference signals having a same ranking in the any two sounding reference signal sets; and K is a positive integer greater than 1, k is any integer greater than 0 and less than or equal to K, L is a positive integer greater than or equal to 1, and J is a positive integer greater than or equal to 1.

25. The method according to claim 24, wherein before the sending, by the terminal device, K sounding reference signal sets in K time unit sets, the method further comprises:

receiving, by the terminal device, sounding reference signal configuration information from a network device, wherein the sounding reference signal configuration information is used to configure the K sounding reference signal sets and a time unit set in which each sounding reference signal is located, each sounding reference signal set comprises L sounding reference signals, each sounding reference signal comprises J sounding reference signal ports, and any two sounding reference signals in the $k^{th}$ sounding reference signal set are in two different time units.

26. The method according to claim 24 or 25, wherein the sounding reference signal configuration information is further used to configure a frequency unit in which each sounding reference signal or each sounding reference signal port is located.

27. The method according to any one of claims 24 to 26, wherein the terminal device is capable of using X antenna ports during uplink transmission, the terminal device is capable of using Y antenna ports during downlink transmission, the X antenna ports are a part of the Y antenna ports, Y is a positive integer greater than or equal to 1, and X is a positive integer less than or equal to Y

28. The method according to any one of claims 24 to 27, wherein before the receiving, by the terminal device, sounding reference signal configuration information from a network device, the method further comprises:

sending, by the terminal device to the network device, an indication indicating that the terminal device is capable of using the X antenna ports during uplink transmission, the terminal device is capable of using the Y antenna ports during downlink transmission, and the X antenna ports are a part of the Y antenna ports, wherein Y is a positive integer greater than or equal to 1, and X is a positive integer less than or equal to Y

29. The method according to any one of claims 24 to 28, wherein J sounding reference signal ports of any sounding reference signal in the $k^{th}$ sounding reference signal set are in a same time unit.

30. The method according to any one of claims 24 to 29, wherein that the $k^{th}$ time unit set corresponds to the $k^{th}$ time unit set in any one of claims 1 to 14 comprises: the $k^{th}$ time unit set is the same as the $k^{th}$ time unit set in any one of claims 1 to 14.

31. The method according to any one of claims 24 to 30, wherein a phase difference between sounding reference signals having a same ranking in any two of the K sounding reference signal sets does not exceed a first threshold.

32. A communication method, applied to a network device, wherein the network device learns that a terminal device is capable of using X antenna ports during uplink transmission, a network controlled repeater is capable of using N donor antenna ports and N service antenna ports during uplink forwarding, and the network controlled repeater is capable of using KN donor antenna ports and KN service antenna ports during downlink forwarding; and the method comprises:

sending, by the network device, indication information to the network controlled repeater, wherein the indication information indicates the network controlled repeater to perform uplink forwarding in K time unit sets, the indication information indicates the network controlled repeater to perform uplink forwarding in any time unit set, namely, a $k^{th}$ time unit set, in the K time unit sets by using the N donor antenna ports and the N service antenna ports, the N donor antenna ports are a part of the KN donor antenna ports, and the N service antenna ports are a part of the KN service antenna ports;

receiving, by the network device, K sounding reference signals or K sounding reference signal sets from the terminal device through the network controlled repeater in the K time unit sets; and

determining, by the network device based on measurement results of the K sounding reference signals or the K sounding reference signal sets, an equivalent downlink channel coefficient matrix from the network device to the terminal device through the network controlled repeater, wherein

when the K sounding reference signals from the terminal device are received, a $k^{th}$ sounding reference signal in the K sounding reference signals is in the $k^{th}$ time unit set; or

when the K sounding reference signal sets from the terminal device are received, a $k^{th}$ sounding reference signal set in the K sounding reference signal sets is in the $k^{th}$ time unit set, wherein each sounding reference signal set comprises L sounding reference signals, and L is a positive integer greater than or equal to 1; and both X and N are positive integers greater than or equal to 1, K is a positive integer greater than 1, k is any integer less than or equal to K, and KN represents a product of K and N.

33. The method according to claim 32, wherein that the indication information indicates the network controlled repeater to perform uplink forwarding in any time unit set, namely, a $k^{th}$ time unit set, in the K time unit sets by using the N donor antenna ports and the N service antenna ports comprises:
the indication information indicates the network controlled repeater to perform uplink forwarding in the $k^{th}$ time unit set by using the N service antenna ports and the N donor antenna ports, wherein in any two of the K time unit sets, service antenna ports used by the network controlled repeater are different, and donor antenna ports used by the network controlled repeater are different.

34. The method according to claim 32 or 33, wherein the indication information further indicates that different ports of one of the L sounding reference signals are in a same time unit.

35. The method according to any one of claims 32 to 34, wherein in a corresponding case in which the K sounding reference signals from the terminal device are received, the method further comprises:

sending, by the network device, sounding reference signal configuration information to the terminal device before the network device sends the indication information to the network controlled repeater, wherein the sounding reference signal configuration information is used to configure the K sounding reference signals and a time unit set in which each sounding reference signal is located, each sounding reference signal comprises J sounding reference signal ports, different sounding reference signals are in different time units, and J is a positive integer less than or equal to X.

36. The method according to any one of claims 32 to 34, wherein in a corresponding case in which the K sounding reference signal sets from the terminal device are received, the method further comprises:
sending, by the network device, sounding reference signal configuration information to the terminal device before the network device sends the indication information to the network controlled repeater, wherein the sounding reference signal configuration information is used to configure the K sounding reference signal sets and a time unit set in which each sounding reference signal set is located, to configure the K sounding time unit sets, each sounding reference signal set comprises L sounding reference signals, each sounding reference signal comprises J sounding reference signal ports, different sounding reference signal sets are in different time unit sets, and J is a positive integer less than or equal to X.

37. The method according to claim 35 or 36, wherein the sounding reference signal configuration information is further used to configure a time unit in which each sounding reference signal port is located.

38. The method according to any one of claims 35 to 37, wherein the sounding reference signal configuration information is further used to configure a frequency unit in which each sounding reference signal or each sounding reference signal port is located.

39. The method according to any one of claims 35 to 38, wherein before the network device sends the sounding reference signal configuration information to the terminal device, the network device learns that the terminal device is capable of using the X antenna ports during uplink transmission.

40. The method according to claim 39, wherein that the network device learns that the terminal device is capable of using the X antenna ports during uplink transmission comprises:
receiving, by the network device, first capability indication information from the terminal device, wherein the first capability indication information indicates to the network device that the terminal device is capable of using the X antenna ports during uplink transmission.

41. The method according to any one of claims 35 to 40, wherein before the network device sends the sounding reference signal configuration information to the terminal device, the network device learns that the network controlled repeater is capable of using the N donor antenna ports and the N service antenna ports during uplink forwarding, and the network controlled repeater is capable of using the KN donor antenna ports and the KN service antenna ports during downlink forwarding.

42. The method according to claim 41, wherein that the network device learns that the network controlled repeater is capable of using the N donor antenna ports and the N service antenna ports during uplink forwarding, and the network controlled repeater is capable of using the KN donor antenna ports and the KN service antenna ports during downlink forwarding comprises:

receiving, by the network device, second capability indication information from the network controlled repeater, wherein the second capability indication information indicates to the network device that the network controlled repeater is capable of using the KN donor antenna ports and the KN service antenna ports during downlink forwarding, and the network controlled repeater is capable of using the N donor antenna ports in the KN donor antenna ports and the N service antenna ports in the KN service antenna ports during uplink forwarding.

43. The method according to any one of claims 32 to 42, wherein the terminal device and the network controlled repeater have an association relationship.

44. The method according to any one of claims 32 to 43, wherein a phase difference between any two of the K sounding reference signals does not exceed a first threshold; or a phase difference between sounding reference signals having a same ranking in any two of the K sounding reference signal sets does not exceed a first threshold.

45. The method according to any one of claims 32 to 44, wherein one of the K time unit sets comprises one or more time units, and the time unit comprises a slot or a symbol.

46. The method according to any one of claims 32 to 45, wherein the K time unit sets comprise at least two time unit sets, and the two time unit sets comprise a same quantity of time units.

47. The method according to any one of claims 32 to 46, wherein the network device determines, based on the K sounding reference signals, that the equivalent downlink channel coefficient matrix H0 from the network device to the terminal device through the network controlled repeater is:

$$H0 = \sum_{k=0}^{K-1} h_k$$

wherein $h_k$ is a matrix with M rows and J columns, M is a quantity of antenna ports of the network device, $h_k$ represents an uplink channel coefficient matrix between J antenna ports used by the terminal device to send a $(k+1)^{th}$ sounding reference signal and the M antenna ports of the network device during uplink forwarding performed by the network controlled repeater by using the N donor antenna ports and the N service antenna ports in a $(k+1)^{th}$ time unit set and the network device determines $h_k$ by measuring the $(k+1)^{th}$ sounding reference signal; or

the network device determines, based on the K sounding reference signal sets, that the equivalent downlink channel coefficient matrix H0 from the network device to the terminal device through the network controlled repeater is:

$$H0 = \left[ \sum_{k=0}^{K-1} h_{k,0}, \sum_{k=0}^{K-1} h_{k,1}, \dots \sum_{k=0}^{K-1} h_{k,l}, \dots, \sum_{k=0}^{K-1} h_{k,L-1} \right]$$

wherein $h_{k,l}$ is a matrix with M rows and J columns, M is a quantity of antenna ports of the network device, $h_{k,l}$ represents an uplink channel coefficient matrix between J antenna ports used by the terminal device to send an $(1+1)^{th}$ reference signal in a $(k+1)^{th}$ sounding reference signal set and the M antenna ports of the network device during uplink forwarding performed by the network controlled repeater by using the N donor antenna ports and the N service antenna ports in a $(k+1)^{th}$ time unit set, and the network device determines $h_{k,l}$ by measuring an $l^{th}$ reference signal in the $(k+1)^{th}$ sounding reference signal set.

48. A network controlled repeater, wherein the network controlled repeater comprises a processor and a memory, the memory stores a computer program, and when the computer program is run by the processor, the network controlled repeater is enabled to perform the method according to any one of claims 1 to 14.

49. A terminal device, wherein the terminal device comprises a processor and a memory, the memory stores a computer program, and when the computer program is run by the processor, the terminal device is enabled to perform the method according to any one of claims 15 to 31.

50. A network device, wherein the network device comprises a processor and a memory, the memory stores a computer program, and when the computer program is run by the processor, the network device is enabled to perform the method according to any one of claims 32 to 47.

51. A computer-readable storage medium, storing a computer program, wherein when the computer program is run on a network controlled repeater, the network controlled repeater is enabled to perform the method according to any one of claims 1 to 14.

52. A computer-readable storage medium, storing a computer program, wherein when the computer program is run on a terminal device, the terminal device is enabled to perform the method according to any one of claims 15 to 31.

53. A computer-readable storage medium, storing a computer program, wherein when the computer program is run on a network device, the network device is enabled to perform the method according to any one of claims 32 to 47.

54. A computer program product, stored in a computer-readable storage medium, wherein when the computer program product runs on a network controlled repeater, the network controlled repeater is enabled to perform the method according to any one of claims 1 to 14.

55. A computer program product, stored in a computer-readable storage medium, wherein when the computer program product runs on a terminal device, the terminal device is enabled to perform the method according to any one of claims 15 to 31.

56. A computer program product, stored in a computer-readable storage medium, wherein when the computer program product runs on a network device, the network device is enabled to perform the method according to any one of claims 32 to 47.

57. A chip, comprising a processor and a memory coupled to the processor, wherein the memory stores a computer program, the chip is located in a network controlled repeater, and when the processor executes the computer program, the network controlled repeater is enabled to perform the method according to any one of claims 1 to 14.

58. A chip, comprising a processor and a memory coupled to the processor, wherein the memory stores a computer program, the chip is located in a terminal device, and when the processor executes the computer program, the terminal device is enabled to perform the method according to any one of claims 15 to 31.

59. A chip, comprising a processor and a memory coupled to the processor, wherein the memory stores a computer program, the chip is located in a network device, and when the processor executes the computer program, the network device is enabled to perform the method according to any one of claims 32 to 47.

60. A communication system, wherein the communication system comprises a network device, a network controlled repeater, and a terminal device, the network controlled repeater is configured to perform the method according to any one of claims 1 to 14, the terminal device is configured to perform the method according to any one of claims 15 to 31, and the network device is configured to perform the method according to any one of claims 32 to 47.

Network
device 200

Network
controlled
repeater
device 100

Terminal
device 300

FIG. 1

Donor
antenna

Network controlled repeater device

Service
antenna

≋ Filter    ▷ Power amplifier    ⊗ Frequency mixer

FIG. 2

Network device
200

Network controlled
repeater device 100

Terminal device
300

Antenna 0

Antenna 1

Antenna ⋯

Antenna
M–1

Channel
F

Channel 0, $a_0$

Channel 1, $a_1$

Channel$_m$ ⋯

Channel $KN–1$,
$a_{KN-1}$

Channel
G

Antenna 0

Antenna 1

Antenna ⋯

Antenna
Y–1

FIG. 3

Frequency
domain subcarrier

Antenna port 0

SRS port 0
Uplink channel 0

Antenna port 1

SRS port 1
Uplink channel 1

Time domain symbol

FIG. 4

FIG. 5

An uplink channel and a
downlink channel are reciprocal

Network
device

SRS port 1

SRS port 2

SRS port 3

SRS port 4

2T4R
terminal
device

(a)

An uplink channel and a downlink
channel are not reciprocal

Network
device

Antenna 1

Four downlink
channels

Two uplink
channels

Antenna 2

Network repeater control device

SRS port 1

SRS port 2

SRS port 3

SRS port 4

2T4R
terminal
device

(b)

FIG. 6

| Network device | Network controlled repeater device (NCR) | Terminal device |
|---|---|---|

S101. The network device learns that the terminal device is capable of using X antenna ports during uplink transmission

S102. Send capability indication information of the NCR, to indicate that the NCR is capable of using N donor antenna ports in KN donor antenna ports of the NCR and N service antenna ports in KN service antenna ports of the NCR during uplink forwarding, and indicate that the NCR is capable of using the KN donor antenna ports and the KN service antenna ports during downlink forwarding

S103. Send SRS configuration information to the terminal device, where the SRS configuration information is used to configure K SRSs and a time unit set in which each SRS is located, to configure K time unit sets, each SRS includes J SRS ports, different SRSs are in different time unit sets, and J is less than or equal to X

S103a. Send SRS configuration information to the terminal device through the NCR, where the SRS configuration information is used to configure K SRSs and a time unit set in which each SRS is located, to configure K time unit sets, each SRS includes J SRS ports, different SRSs are in different time unit sets, and J is less than or equal to X

TO FIG. 7B        TO FIG. 7B        TO FIG. 7B

FIG. 7A

EP 4 456 469 A1

CONT. FROM
FIG. 7A

CONT. FROM
FIG. 7A

CONT. FROM
FIG. 7A

S104. Indicate the K time unit sets to the NCR, where a $k^{th}$ time unit set in the K time unit sets corresponds to a time unit in which a $k^{th}$ SRS in the K SRSs is located. In addition, the network device indicates to the NCR that the NCR is in an uplink forwarding state in the K time unit sets, and indicates the NCR to perform uplink forwarding in the $k^{th}$ time unit set by using the N service antenna ports and the N donor antenna ports, where the N service antenna ports are a part of the KN service antenna ports, the N donor antenna ports are a part of the KN donor antenna ports, and k is an integer less than or equal to K

S106. The NCR is in the uplink forwarding state in the K time unit sets, and performs uplink forwarding in the $k^{th}$ time unit set by using the N donor antenna ports in the KN donor antenna ports and the N service antenna ports in the KN service antenna ports, where the NCR uses different antenna ports in different time unit sets

S105. The terminal device correspondingly sends an SRS based on the SRS configuration information

S107. The network device correspondingly receives and measures an SRS, to finally obtain measurement results of the K SRSs, and determines an equivalent downlink channel coefficient matrix (downlink channel coefficient matrix from the network device to the terminal device through the NCR when the NCR is in a downlink forwarding state and uses the KN donor antenna ports and the KN service antenna ports) based on the measurement result of the K SRSs

FIG. 7B

EP 4 456 469 A1

**EP 4 456 469 A1**

Frequency domain subcarrier

Time domain symbol

■ SRS port 0    ▨ SRS port 1

(a)

Frequency domain subcarrier

Time domain symbol

■ SRS port 0    ▨ SRS port 1

(b)

Frequency domain subcarrier

Time domain symbol

■ SRS port 0    ▨ SRS port 1

⊠ SRS port 2    ▨ SRS port 3

(c)

FIG. 8

52

FIG. 9

Equivalent downlink channel coefficient matrix

$$H0 = \left( \sum_{i=0}^{3} f_i a_i g_{i,0} \quad \sum_{i=0}^{3} f_i a_i g_{i,1} \right)$$

FIG. 10(a)

Slot 0

Network controlled
repeater device

Terminal device

Network
device $f_0 \sim f_1$

$A_0$

$D_0$    $S_0$

$D_1$    $S_1$

$a_0$

$D_2$ $a_1$ $S_2$

$D_3$    $S_3$

$g_{0,0} \sim g_{1,1}$

$T_0$
SRS port 0

$T_1$
SRS port 1

$h_0 = \left( f_0 a_0 g_{0,0} + f_1 a_1 g_{1,0} \quad f_0 a_0 g_{0,1} + f_1 a_1 g_{1,1} \right)$

Slot 1

Network controlled
repeater device

Terminal device

Network
device $f_2 \sim f_3$

$A_0$

$D_0$    $S_0$

$D_1$    $S_1$

$a_2$

$D_2$ $a_3$ $S_2$

$D_3$    $S_3$

$g_{2,0} \sim g_{3,1}$

$T_0$
SRS port 0

$T_1$
SRS port 1

$h_1 = \left( f_2 a_2 g_{2,0} + f_3 a_3 g_{3,0} \quad f_2 a_2 g_{2,1} + f_3 a_3 g_{3,1} \right)$

Uplink channel coefficient matrix

$$H1 = h_0 + h_1 = \left( \sum\nolimits_{i=0}^{3} f_i a_i g_{i,0} \quad \sum\nolimits_{i=0}^{3} f_i a_i g_{i,1} \right)$$

FIG. 10(b)

| Network device | Network controlled repeater device (NCR) | Terminal device |
|---|---|---|

S201. The network device learns that the terminal device is capable of using X antenna ports during uplink transmission and the terminal device is capable of using Y antenna ports during downlink transmission

S202. Send capability indication information of the NCR, where the capability indication information indicates that the NCR is capable of using N donor antenna ports in KN donor antenna ports of the NCR and N service antenna ports in KN service antenna ports of the NCR during uplink forwarding, and indicates that the NCR is capable of using the KN donor antenna ports and the KN service antenna ports during downlink forwarding

S203. Send SRS configuration information to the terminal device, where the SRS configuration information is used to configure K SRS sets and a time unit set in which each SRS set is located, to configure K time unit sets, each SRS set includes L SRSs, each SRS includes J SRS ports, different SRS sets are in different time unit sets, J is less than or equal to X, and L is determined based on X and Y

S203a. Send SRS configuration information to the terminal device through the NCR, where the SRS configuration information is used to configure K SRS sets and a time unit set in which each SRS set is located, to configure K time unit sets, each SRS set includes L SRSs, each SRS includes J SRS ports, different SRS sets are in different time unit sets, J is less than or equal to X, and L is determined based on X and Y

TO FIG. 11B          TO FIG. 11B          TO FIG. 11B

FIG. 11A

S204. Indicate the K time unit sets to the NCR, where a $k^{th}$ time unit set in the K time unit sets corresponds to a time unit set in which a $k^{th}$ SRS set in the K SRS sets is located; and indicate to the NCR that the NCR is in an uplink forwarding state in the K time unit sets, and indicate the NCR to perform uplink forwarding in the $k^{th}$ time unit set by using the N service antenna ports and the N donor antenna ports, where the N service antenna ports are a part of the KN service antenna ports, the N donor antenna ports are a part of the KN donor antenna ports, antenna ports used by the NCR are different in different time unit sets, and k is an integer less than or equal to K

S206. The NCR is in the uplink forwarding state in the K time unit sets, and performs uplink forwarding in the $k^{th}$ time unit set by using the N service antenna ports and the N donor antenna ports, where the N service antenna ports are a part of the KN service antenna ports, the N donor antenna ports are a part of the KN donor antenna ports, the NCR uses different antenna ports in different time unit sets, and each donor antenna port is associated with one service antenna port

S205. The terminal device correspondingly sends an SRS based on the configuration information, where in a same SRS set, any two SRSs are associated with different antenna ports, and in any two SRS sets, the terminal device sends, by using a same antenna port, ports with a same number that are of SRSs having a same ranking in the two SRS sets

FIG. 11B

EP 4 456 469 A1

CONT. FROM
FIG. 11B

CONT. FROM
FIG. 11B

CONT. FROM
FIG. 11B

S207. The network device correspondingly receives and measures K SRS sets, to finally obtain a measurement result of the K SRS sets, and determines an equivalent downlink channel coefficient matrix (equivalent downlink channel coefficient matrix from the network device to the terminal device through the NCR when the NCR is in a downlink forwarding state and uses the KN donor antenna ports and the KN service antenna ports) based on the measurement result of the K SRS sets

FIG. 11C

First SRS set

Frequency domain subcarrier — First cycle

(a0)
SRS 0 port 0    SRS 0 port 1

Frequency domain subcarrier — Second cycle

(b0)
SRS 0 port 0    SRS 0 port 1

Frequency domain subcarrier — Third cycle

(c0)
SRS 0 port 0    SRS 0 port 1

Frequency domain subcarrier    First cycle

(d0)
SRS 1 port 0    SRS 1 port 1

Frequency domain subcarrier    Second cycle

(e0)
SRS 1 port 0    SRS 1 port 1

Frequency domain subcarrier    Third cycle

(f0)
SRS 1 port 0    SRS 1 port 1

TO FIG. 12B        TO FIG. 12B        TO FIG. 12B

FIG. 12A

EP 4 456 469 A1

Second SRS set

Frequency domain subcarrier    First cycle

Frequency domain subcarrier    Second cycle

Frequency domain subcarrier    Third cycle

Time domain symbol

t₂  t₃

■ SRS 2 port 0    ▨ SRS 2 port 1

(a1)

Time domain symbol

■ SRS 2 port 0    ▨ SRS 2 port 1

(b1)

Time domain symbol

■ SRS 2 port 0    ▨ SRS 2 port 1

(c1)

Frequency domain subcarrier    First cycle

Frequency domain subcarrier    Second cycle

Frequency domain subcarrier    Third cycle

Time domain symbol

t₃  t₄

■ SRS 3 port 0    ▨ SRS 3 port 1

(d1)

Time domain symbol

■ SRS 3 port 0    ▨ SRS 3 port 1

(e1)

Time domain symbol

■ SRS 3 port 0    ▨ SRS 3 port 1

(f1)

FIG. 12B

EP 4 456 469 A1

Network controlled
repeater device

Terminal device

Network
device $f_0\text{~}f_3$

$A_0$

$D_0$          $S_0$          $g_{0,0}\text{~}g_{3,3}$          $T_0$

$a_0$

$D_1$          $S_1$          $T_1$

$a_1$

$D_2$          $S_2$          $T_2$

$a_2$

$D_3$          $S_3$          $T_3$

$a_3$

Equivalent downlink channel coefficient matrix

$$H0 = \left( \sum\nolimits_{i=0}^{3} f_i a_i g_{i,0} \quad \sum\nolimits_{i=0}^{3} f_i a_i g_{i,1} \quad \sum\nolimits_{i=0}^{3} f_i a_i g_{i,2} \quad \sum\nolimits_{i=0}^{3} f_i a_i g_{i,3} \right)$$

FIG. 13(a)

FIG. 13(b)-1

FIG. 13(b)-2

Uplink channel coefficient matrix

$$H1 = \left( h_{0,0} + h_{1,0} \quad h_{0,1} + h_{1,1} \right) = \left( \sum_{i=0}^{3} f_i a_i g_{i,0} \quad \sum_{i=0}^{3} f_i a_i g_{i,1} \quad \sum_{i=0}^{3} f_i a_i g_{i,2} \quad \sum_{i=0}^{3} f_i a_i g_{i,3} \right)$$

EP 4 456 469 A1

FIG. 14

## INTERNATIONAL SEARCH REPORT

| | International application No. |
|---|---|
| | **PCT/CN2023/074728** |

| | |
|---|---|
| **A.** | **CLASSIFICATION OF SUBJECT MATTER** |
| | H04L 5/00(2006.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 网络控制中继, 多流, 信道状态信息, 探测参考信号, 转发通道, 信道互易, 信道 5d 矩阵, NCR, CSI, SRS, multi-stream, channel w reciprocity, channel 5d matrix

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 102461010 A (RESEARCH IN MOTION LTD.) 16 May 2012 (2012-05-16)<br>    claim 1 | 1-60 |
| A | CN 112088556 A (GUANGDONG OPPO MOBILE COMMUNICATIONS CO., LTD.) 15 December 2020 (2020-12-15)<br>    entire document | 1-60 |
| A | CN 113872649 A (HUAWEI TECHNOLOGIES CO., LTD.) 31 December 2021 (2021-12-31)<br>    entire document | 1-60 |
| A | WO 2020015715 A1 (HUAWEI TECHNOLOGIES CO., LTD.) 23 January 2020 (2020-01-23)<br>    entire document | 1-60 |
| A | ERICSSON. "R1-1804966 UL Antenna Port Mapping and Identification"<br>*3GPP TSGRAN WG1 Meeting #92bis*, 20 April 2018 (2018-04-20),<br>    entire document | 1-60 |

| | | | |
|---|---|---|---|
| ☐ Further documents are listed in the continuation of Box C. | | ☑ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 May 2023** | **22 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/074728**

| Patent document cited in search report | | | Publication date (day/month/year) | Patent family member(s) | | | Publication date (day/month/year) |
|---|---|---|---|---|---|---|---|
| CN | 102461010 | A | 16 May 2012 | WO | 2010148119 | A2 | 23 December 2010 |
| | | | | US | 2010323684 | A1 | 23 December 2010 |
| | | | | CA | 2764574 | A1 | 23 December 2010 |
| | | | | EP | 2453593 | B1 | 15 August 2018 |
| | | | | EP | 3457590 | A1 | 20 March 2019 |
| | | | | EP | 2454827 | B1 | 27 March 2019 |
| CN | 112088556 | A | 15 December 2020 | WO | 2019213959 | A1 | 14 November 2019 |
| | | | | TW | 202005321 | A | 16 January 2020 |
| CN | 113872649 | A | 31 December 2021 | WO | 2022001933 | A1 | 06 January 2022 |
| WO | 2020015715 | A1 | 23 January 2020 | CN | 110740022 | A | 31 January 2020 |

Form PCT/ISA/210 (patent family annex) (July 2022)

**REFERENCES CITED IN THE DESCRIPTION**

**Patent documents cited in the description**

- CN 202210146286
- CN 202210346633